# EUROPEAN PATENT APPLICATION

(11) **EP 4 694 221 A1**
(43) Date of publication of application: **11.02.2026**
(21) Application number: 24795453.0
(22) Date of filing: 15.01.2024
(51) Int. Cl.: H04W 4/35

(54) **BATTERY MANAGEMENT METHOD, AND RELATED APPARATUS**

(30) Priority: 24.04.2023 CN 202310470143
(71) Applicant: Shenzhen Yinwang Intelligent Technologies Co., Ltd., Shenzhen, Guangdong 518110 (CN)
(72) Inventor: YAN, Shen, Shenzhen, Guangdong 518129 (CN); XU, Pinghong, Shenzhen, Guangdong 518129 (CN)
(74) Representative: Gill Jennings & Every LLP
(86) International application number: PCT/CN2024/072312
(87) International publication number: WO 2024/222064

(57) **Abstract**

A battery management method and a related apparatus are applied to the field of battery technologies and electric vehicle technologies. In this application, a communication module is disposed in a battery system, and an electronic communication identifier that can uniquely correspond to the battery system is provided in the communication module. The communication identifier can be used to establish an association relationship between the battery system and a related device of the battery system. The communication identifier implements convenient differentiation of the battery system. In addition, as an identifier in an electronic form, the communication identifier is unlikely to wear and has high flexibility and scalability. In addition, the communication identifier may be used to establish a mapping between the battery system, the related device, and a user. In a process like delivery, ownership change, cascading, or scrapping of the battery system, no operation procedure like manual recording or manual archiving is required. This improves efficiency of managing the battery system, facilitates supervision of a use process of the battery system, and facilitates life cycle tracing of the battery system. In conclusion, according to this solution, the battery system can be conveniently and efficiently managed.

## Description

This application claims priority to Chinese Patent Application No. 202310470143.8, filed with the China National Intellectual Property Administration on April 24, 2023 and entitled "BATTERY MANAGEMENT METHOD AND RELATED APPARATUS", which is incorporated herein by reference in its entirety.

### TECHNICAL FIELD

This application relates to the field of battery technologies and electric vehicle technologies, and in particular, to a battery management method and a related apparatus.

### BACKGROUND

With popularization and technology development of mobile devices such as vehicles and mobile phones, users have increasingly high requirements on batteries in the mobile devices, and the batteries have better performance and longer service lives. In a process from production to scrapping, the batteries may go through the following processes: delivery, sale, battery replacement, resale, recycling, regrouping, cascading, and scrapping. For example, in a vehicle that supports a battery replacement technology, a battery system with insufficient power may be replaced with another battery system that has been fully charged. For another example, after normal use in a vehicle, although performance of a battery is reduced, the battery is still sufficient for cascading in other industries. For example, the battery is provided to a communication base station as an energy storage battery.

However, there is a lack of systematic management of the battery system in the industry, making it difficult for battery identification.

### SUMMARY

Embodiments of this application provide a battery management method and a related apparatus, so that a battery system can be conveniently identified, and the battery system can be conveniently and efficiently managed.

According to a first aspect, an embodiment of this application provides a battery system, including a battery module and a communication module.

The battery module corresponds to a battery code, and the battery code indicates production information of the battery module.

The communication module has a storage capability and a communication capability. A communication identifier is provided in the communication module, and the communication identifier is used to uniquely identify the battery system. Further, the communication identifier is used to establish a mapping.

In this application, the battery system is a general term for a battery. In a specific implementation process, the battery system may replace one or more levels of battery components. For example, the battery system may be an electrochemical cell or a battery string (including one or more electrochemical cells). The battery string may also be referred to as a battery pack. Alternatively, in some scenarios, a plurality of battery strings may be packaged to obtain a battery pack.

The battery module is a power storage part in the battery system, and can generate electric energy. The battery system may include one or more battery modules.

In the foregoing aspect, the communication identifier can implement convenient identification of the battery system. As an identifier in an electronic form, the communication identifier is unlikely to wear and has high flexibility and scalability.

Further, a relationship between the battery system and another device may be conveniently recorded by using the communication identifier. For example, in a process like delivery, sale, mounting, replacement, resale, re-mounting, cascading, or scrapping of the battery system, a relationship between the battery system and a related device may be conveniently recorded by using the electronic communication identifier, and a management operation procedure like manual recording or manual archiving may be not required. This improves efficiency of managing the battery system, facilitates supervision of a use process of the battery system, and facilitates life cycle tracing of the battery system. In conclusion, according to this solution, the battery system can be conveniently and efficiently managed.

In a possible implementation of the first aspect, the communication identifier is used to establish a mapping between the battery system and the related device. The related device herein includes one or more of a battery configuration device, a terminal, a battery management station, a cascade configuration device, a cascade device, or the like. It should be noted that, in some scenarios, the battery management station, the cascade device, or the like may also be considered as a terminal.

Optionally, a mapping between devices may be implemented by using a mapping between device identifiers, and the device identifier may include a communication identifier, a communication identifier, or the like.

For example, there may be a mapping between the communication identifier of the battery system and the code of the battery module of the battery system.

For example, when the battery system is mounted on a vehicle, there is a mapping between a communication identifier of the vehicle and the communication identifier of the battery system. Further, when the battery system is replaced to a battery replacement station or another vehicle, the mapping may be updated, so that there is a mapping between the communication identifier of the battery system and a communication identifier of a currently connected device (or a current home device).

For example, when the battery system is replaced to the cascade device for reuse, there is a mapping between an identifier of the cascade device and the identifier of the battery system.

In another possible implementation of the first aspect, a mapping related to the communication identifier of the battery system is managed by a server.

For example, the mapping may be established, added, queried, modified, or deleted by the server.

For example, when a first battery module and a first communication module are assembled to obtain a first battery system, the battery configuration device requests the server to establish a mapping between a communication identifier of the first communication module and a battery code of the first battery module. For another example, when the first battery module in the first battery system is replaced with a second battery module, the battery configuration device may request to delete the mapping between the communication identifier of the first communication module and the battery code of the first battery module or update the mapping between the communication identifier of the first communication module and the battery code of the first battery module to the mapping between the communication identifier of the first communication module and the battery code of the first battery module.

Further, the battery system or the device related to the battery system may initiate, to the server, a request carrying identifier information of the battery system and the like, to access or update the mapping related to the communication identifier of the battery system and the battery.

In another possible implementation of the first aspect, the mapping may be represented by a correspondence.

According to a second aspect, an embodiment of this application provides a battery management method. The method includes:
obtaining a first communication identifier of a first communication module, where the first communication identifier is used to uniquely identify a first battery system to which the first communication module belongs; and
sending a first message to a server, where the first message includes a second communication identifier and the first communication identifier, and the second communication identifier is used to uniquely identify a first terminal to which the first battery system belongs.

The first message indicates to establish a mapping between the second communication identifier and the first communication identifier.

Optionally, the foregoing method may be applied to a communication apparatus. The communication apparatus may be a terminal, a battery management station, a cascade device, or the like, or may be a component (or a module) in the device.

In this embodiment of this application, the first communication identifier can implement convenient identification of the first battery system. As an identifier in an electronic form, the first communication identifier is unlikely to wear and has high flexibility and scalability.

Further, a relationship between the battery system and a terminal may be conveniently recorded by using the communication identifier. For example, when the first battery system belongs to the first terminal, a relationship between the first battery system and the first terminal may be reflected by using the mapping between the first communication identifier and the second communication identifier, and a management operation procedure like manually recording a code of the first battery system or manual archiving is not required. This improves efficiency of managing the battery system, facilitates supervision of a use process of the battery system, and facilitates life cycle tracing of the battery system. In conclusion, according to this solution, the battery system can be conveniently and efficiently managed.

Optionally, that the first battery system belongs to the first terminal includes one or more of the following cases: The first battery system is connected to the first terminal, the first battery system is managed in the first terminal, the first battery system is mounted in the first terminal, or the like.

For example, the first terminal may be a vehicle, and the first battery system is electrically connected to the first terminal to supply power to the first terminal. In this case, the first battery system belongs to the first terminal.

For example, there is a communication connection between the first battery system and the first terminal. For example, the first battery system is connected to a network of the first terminal. In this case, the first battery system belongs to the first terminal. For example, the first terminal includes a management node, another node may access the management node, and the first battery system serves as a terminal node to access the management node in the first terminal. In this case, the first battery system belongs to the first terminal.

For example, the first terminal may be a battery management station, and a battery system may be stored, charged, and the like in the battery management station. When the first battery system is included in the battery management station, the first battery system belongs to the first terminal.

In a possible implementation of the second aspect, the method further includes:
receiving a response message from the server, where the response message indicates an operation result, for example, indicates whether an operation is successful, whether the operation is legal, and/or the like.

For example, the response message includes a first response, and the first response indicates a result of establishing the mapping between the second communication identifier and the first communication identifier.

In another possible implementation of the second aspect, the method further includes:
obtaining information about the first battery system, where the information about the first battery system includes the first communication identifier and a first battery code of a first battery module of the first battery system;
sending a query message to the server, where the query message includes the information about the first battery system; and
receiving a query result, where the query result indicates correctness of the information about the first battery system.

In another possible implementation of the second aspect, the method further includes:
sending a second message to the server, where the second message includes the second communication identifier, the first communication identifier, and a third communication identifier, and the third communication identifier is used to uniquely identify a second terminal.

The second message indicates to update the mapping between the second communication identifier and the first communication identifier to a mapping between the third communication identifier and the first communication identifier.

Optionally, the response message includes a second response, and the second response indicates a mapping update result.

In another possible implementation of the second aspect, the first message further includes a device identifier of the first terminal, and the first message is further used to request to establish a mapping between the second communication identifier and the device identifier of the first terminal.

In another possible implementation of the second aspect, the method further includes:
obtaining a first identity identifier of a first user of the first terminal; and
sending a third message to the server, where the third message includes the second communication identifier and the first identity identifier, and the third message is used to establish a mapping between the second communication identifier and the first identity identifier.

Optionally, the response message includes a third response, and the third response indicates a result of establishing the mapping between the second communication identifier and the first identity identifier.

In another possible implementation of the second aspect, the method further includes:
obtaining a second identity identifier of a second user of the first terminal; and
sending a fourth message to the server, where the fourth message includes the second communication identifier and the second identity identifier.

The fourth message indicates to update the mapping between the second communication identifier and the first identity identifier to a mapping between the second communication identifier and the second identity identifier.

Optionally, the response message includes a fourth response, and the fourth response indicates a result of establishing the mapping between the second communication identifier and the first identity identifier.

In another possible implementation of the second aspect, the method is applied to a communication apparatus, and secure communication between the communication apparatus and the server is implemented by using a key. In this way, information leakage can be avoided, and data security can be improved.

For example, some or all messages between the first communication apparatus and the server are encrypted, integrity-protected, and/or signed by using the key.

The key may be a password, a session key, or the like. Alternatively, the key may be implemented by using a short message code, a user name and a password, or the like.

According to a third aspect, an embodiment of this application provides a battery management method. The method includes:
obtaining a first communication identifier of a first communication module and a second communication identifier, where the first communication identifier is used to uniquely identify a first battery system to which the first communication module belongs; and
sending a fifth message to a server, where the fifth message includes a third communication identifier and the first communication identifier, and the third communication identifier is used to uniquely identify a second terminal to which the first battery system currently belongs.

The fifth message indicates to establish a mapping between the third communication identifier and the first communication identifier.

Optionally, the foregoing method may be applied to a communication apparatus. The communication apparatus may be a terminal, a battery management station, a cascade device, or the like, or may be a component (or a module) in the device.

In this embodiment of this application, a relationship between a battery system and a terminal can be conveniently recorded by using a communication identifier of the battery system and a communication identifier of the terminal. When the battery system is transferred between a plurality of terminals, a relationship between the first battery system, the first terminal, and the second terminal may be reflected by using a change of a mapping related to the communication identifier of the battery system, and a management operation procedure like manually recording a code of the first battery system or manual archiving is not required. This improves efficiency of managing the battery system, facilitates supervision of a use process of the battery system, and facilitates life cycle tracing of the battery system.

In a possible implementation of the third aspect, the fifth message further includes a second communication identifier, and the second communication identifier is used to uniquely identify a first terminal to which the first battery system originally belongs.

Further, the fifth message is used to confirm that a mapping between the second communication identifier and the first communication identifier is updated to the mapping between the third communication identifier and the first communication identifier.

In a possible implementation of the third aspect, the method further includes:
receiving a response message from the server, where the response message indicates an operation result.

For example, the response message includes a fifth response, and the fifth response indicates a mapping update result.

According to a fourth aspect, an embodiment of this application provides a battery management method. The method includes:
sending a sixth message to a server, where the sixth message includes a second communication identifier and a third communication identifier, the second communication identifier is used to uniquely identify a first terminal, and the third communication identifier is used to uniquely identify a second terminal, where
the sixth message indicates to transfer a mapping related to the second communication identifier to the third communication identifier; and
receiving a seventh message from the server, where the seventh message indicates a result of the mapping transfer operation.

Optionally, the foregoing method may be applied to a communication apparatus. The communication apparatus may be a terminal, a battery management station, a cascade device, or the like, or may be a component (or a module) in the device.

In this embodiment of this application, a relationship between a battery system and a terminal can be conveniently recorded by using a communication identifier of the battery system and a communication identifier of the terminal. When the battery system is transferred between a plurality of terminals, a relationship between the first battery system, the first terminal, and the second terminal may be reflected by using a change of a mapping related to the communication identifier of the battery system, and a management operation procedure like manually recording a code of the first battery system or manual archiving is not required. This improves efficiency of managing the battery system, facilitates supervision of a use process of the battery system, and facilitates life cycle tracing of the battery system.

In a possible implementation of the fourth aspect, the sixth message further includes a device identifier of a third terminal, and the sixth message is further used to update a device identifier of the second terminal originally mapped to the second communication identifier to the device identifier of the third communication identifier mapped to a sixth communication identifier.

According to a fifth aspect, an embodiment of this application provides a battery management method. The method includes:
obtaining a first communication identifier of a first communication module, where the first communication identifier is used to uniquely identify a first battery system to which the first communication module belongs;
obtaining a first battery code of a first battery module in the first battery system, where the first battery code indicates production information of the first battery module; and
sending an eighth message to a server, where the eighth message includes the first communication identifier and the first battery code.

The eighth message indicates to establish a mapping between the first communication identifier and the first battery code.

Optionally, the foregoing method may be applied to a communication apparatus. The communication apparatus may be a terminal, a battery management station, a cascade device, or the like, or may be a component (or a module) in the device.

In this embodiment of this application, a relationship between a battery system and a battery module included in the battery system can be conveniently recorded by using a communication identifier of the battery system. For example, when the first battery system includes the first battery module, a relationship between the first battery system and the first battery module may be reflected by using the mapping between the first communication identifier and the first battery code, and a management operation procedure like manually recording a code of the first battery system or manual archiving is not required. This improves efficiency of managing the battery system, facilitates supervision of a use process of the battery system, and facilitates life cycle tracing of the battery system.

In a possible implementation of the fifth aspect, the method further includes:
receiving a response message from the server, where the response message indicates an operation result.

For example, the response message includes an eighth response, and the eighth response indicates a mapping update result.

In another possible implementation of the fifth aspect, the method further includes:
obtaining a second battery code of a second battery module in the first battery system; and
sending a ninth message, where the ninth message includes the first communication identifier and the second battery code, and the ninth message indicates to update the mapping between the first communication identifier and the first battery code to a mapping between the first communication identifier and the second battery code.

Optionally, the response message includes a ninth response, and the ninth response indicates a mapping update result.

In another possible implementation of the fifth aspect, the method further includes:
sending a tenth message, where the tenth message includes the first communication identifier and the first battery code, and the third message indicates to scrap the first battery module.

Optionally, the response message includes a tenth response, and the tenth response indicates a scrapping result.

In another possible implementation of the fifth aspect, the method is applied to a communication apparatus. Secure communication between the communication apparatus and the server is implemented by using a first key.

For example, a message between the communication apparatus and the server is encrypted, integrity-protected, and/or signed by using the first key.

Optionally, the communication apparatus may be a battery configuration device, or the communication apparatus is included in a battery configuration device.

According to a sixth aspect, an embodiment of this application provides a battery management method. The method includes:
obtaining a first communication identifier of a first communication module, where the first communication identifier is used to uniquely identify a first battery system to which the first communication module belongs; and
sending an eleventh message to a server, where the eleventh message includes the first communication identifier, a second communication identifier, and a fourth communication identifier, the second communication identifier is used to uniquely identify a first terminal to which the first battery system belongs, and the fourth communication identifier is used to uniquely identify a battery management station to which the first battery system belongs.

The eleventh message indicates to update a mapping between the second communication identifier and the first communication identifier to a mapping between the fourth communication identifier and the first communication identifier.

Optionally, the foregoing method may be applied to a communication apparatus. The communication apparatus may be a terminal, a battery management station, a cascade device, or the like, or may be a component (or a module) in the device.

In this embodiment of this application, when an ownership of the battery system changes between the terminal and the battery management station, a use process of the battery system can be conveniently recorded by using the communication identifier. A relationship between the first battery system, the first terminal, and the battery management station can be reflected by updating the mapping, and a management operation procedure like manually recording a code of the first battery system or manual archiving is not required. This improves efficiency of managing the battery system, facilitates supervision of the use process of the battery system, and facilitates life cycle tracing of the battery system. In conclusion, according to this solution, the battery system can be conveniently and efficiently managed.

In another possible implementation of the sixth aspect, the method further includes:
sending a twelfth message to the server, where the twelfth message includes the first communication identifier, the second communication identifier, and the fourth communication identifier.

The twelfth message indicates to request to update the mapping between the fourth communication identifier and the first communication identifier to the mapping between the second communication identifier and the first communication identifier.

In another possible implementation of the sixth aspect, the method further includes:
sending a thirteenth message to the server, where the thirteenth message includes the first communication identifier and the fourth communication identifier.

The thirteenth message indicates to recycle the first battery system.

Optionally, the thirteenth message indicates to recycle the first battery system in the battery management station.

According to a seventh aspect, an embodiment of this application provides a battery management method. The method includes:
obtaining a first communication identifier of a first communication module and a fifth communication identifier of a second communication module, where the first communication identifier is used to uniquely identify a first battery system to which the first communication module originally belongs, the fifth communication identifier is used to uniquely identify a first battery module to which the second communication module belongs, and the first battery module is included in the first battery system;
determining a third battery code of the first battery module, where the third battery code indicates cascade information of the first battery module; and
sending a fourteenth message to a server, where the fourteenth message includes the first communication identifier, a first battery code, the third battery code, and the fifth communication identifier, and the first battery code indicates production information of the first battery module.

The fourteenth message indicates to update a mapping between the first communication identifier and the first battery code to a mapping between the fifth communication identifier and the third battery code.

In this embodiment of this application, when the battery system is cascaded, a code change and a cascade process of the battery system can be conveniently recorded by using the communication identifier, and a relationship between the first battery system, a cascade configuration device, and a cascade device may be reflected by updating the mapping. This improves efficiency of managing the battery system, facilitates supervision of a use process of the battery system, and facilitates life cycle tracing of the battery system. In conclusion, according to this solution, the battery system can be conveniently and efficiently managed.

In a possible implementation of the seventh aspect, the fourteenth message further includes a sixth communication identifier, and the sixth communication identifier is used to uniquely identify a third terminal to which the first battery module currently belongs.

The fourteenth message indicates to request to establish a mapping between the sixth communication identifier and the fifth communication identifier.

According to an eighth aspect, an embodiment of this application provides a battery management method. The method includes:
receiving a first message from a first terminal, where the first message includes a second communication identifier and a first communication identifier, the second communication identifier is used to uniquely identify the first terminal, and the first communication identifier is used to uniquely identify a first battery system included in the first terminal; and
establishing a mapping between the second communication identifier and the first communication identifier.

Optionally, the foregoing method may be applied to a communication apparatus. For example, the communication apparatus may be a server, or may be a component (or a module) in the server. The following uses application to the server as an example for description.

In this embodiment of this application, the server may maintain a mapping of the communication identifier. The server may maintain the mapping of the communication identifier. When the first battery system belongs to the first terminal, the server establishes a mapping between the communication identifier of the first terminal and the communication identifier of the first battery system based on the received information. The mapping may reflect a relationship between the first battery system and the terminal, and records an ownership of the first battery system. This implements supervision of a use process of the battery system, and facilitates life cycle tracing of the battery system.

Optionally, the mapping between the second communication identifier and the first communication identifier may be represented by a correspondence. In a possible implementation, establishing the mapping between the second communication identifier and the first communication identifier includes: determining a correspondence, where the correspondence includes the second communication identifier (or a ciphertext of the second communication identifier) and mapping information of the second communication identifier. The mapping information of the second communication identifier includes the first communication identifier or a ciphertext of the first communication identifier.

For ease of differentiation, the correspondence herein may be referred to as a correspondence C3. In addition, Cn (n is an integer) mentioned in this specification is an example number provided for differentiating a correspondence, and does not indicate a difference in an importance degree, a sequence, or a meaning. For an establishment process and content of a subsequent correspondence, refer to an establishment process and content of the correspondence C3.

In a possible implementation of the eighth aspect, the method further includes:
receiving a query message from the first terminal, where the query message includes information about the first battery system, the information about the battery system includes the first communication identifier and a first battery code, and the first battery code indicates production information of a first battery module of the first battery system; and
sending a query result to the first terminal, where the query result indicates correctness of the information about the first battery system.

In the foregoing implementation, the server may support checking the information about the battery system, for example, the communication identifier and the communication code of the battery system, and a binding status thereof. In this way, whether the information about the battery system is correct may be checked, and an error in the information about the battery system may be detected in time. For example, if the information about the battery system is incorrect, it indicates that the battery system may be illegally modified, and using of the illegal battery system may be stopped in time to ensure personal and property safety of a user.

In another possible implementation of the eighth aspect, the method further includes:
receiving a second message from the first terminal, where the second message includes the first communication identifier and a third communication identifier, and the third communication identifier is used to uniquely identify a second terminal;
receiving a fifth message from the second terminal, where the fifth message includes the third communication identifier and the first communication identifier; and
establishing a mapping between the third communication identifier and the first communication identifier.

In the foregoing implementation, when the battery system is transferred between a plurality of terminals, a mapping related to the communication identifier correspondingly changes. In the foregoing implementation, when the ownership of the first battery system changes from the first terminal to the second terminal, the mapping is correspondingly updated, to record a change of the ownership of the battery system, so as to ensure that the mapping is the same as an actual ownership of the battery. This facilitates supervision of the use process of the battery system, and facilitates life cycle tracing of the battery system.

In addition, the electronic communication identifier is used, so that when the battery system is transferred, a management operation procedure like manually recording the code of the first battery system or manual archiving is not required. This improves efficiency of managing the battery system.

Optionally, the mapping between the third communication identifier and the first communication identifier may be represented by a correspondence C4. Establishing the mapping between the third communication identifier and the first communication identifier includes: determining the correspondence C4.

Optionally, the second message further includes the second communication identifier, and the fifth message further includes the second communication identifier.

Optionally, the method further includes: deleting the mapping between the second communication identifier and the first communication identifier. For example, the mapping information of the first communication identifier is updated, so that the second communication identifier is no longer mapped to the first communication identifier.

In another possible implementation of the eighth aspect, the method further includes:
generating a log, where the log corresponds to the second communication identifier, and the log may indicate historical information mapped to the second communication identifier.

In the foregoing implementation, a mapping update process is recorded in the log, which facilitates life cycle tracing of the battery system.

For example, in a correspondence C1, the mapping information of the second communication identifier includes the first communication identifier. If the first communication identifier is subsequently deleted from the information mapped to the second communication identifier, a log may be generated, where the log includes the first communication identifier, to record that the second communication identifier is previously mapped to the first communication identifier.

In another possible implementation of the eighth aspect, the first message further includes a device identifier of the first terminal, and the method further includes:
establishing a mapping between the second communication identifier and the device identifier of the first terminal.

For example, when the first terminal is a vehicle, the device identifier of the first terminal may be a vehicle identification number (vehicle identification number, VIN) of the terminal.

In the foregoing implementation, content corresponding to the second communication identifier may include the device identifier of the first terminal, so that data richness can be improved. In some scenarios, an identity of the terminal can be determined more quickly by using the device identifier of the terminal. In addition, in some scenarios, the device identifier of the terminal is used for indexing in some systems. Therefore, when the device identifier of the first terminal corresponds to the second communication identifier, another system may be better compatible with.

Optionally, the mapping between the second communication identifier and the device identifier of the first terminal may also be represented by the correspondence C3, and the mapping information of the second communication identifier in the correspondence C3 further includes the device identifier of the first terminal.

In another possible implementation of the eighth aspect, the method further includes:
receiving a third message from the first terminal, where the third message includes the second communication identifier and a first identity identifier of a first user of the first terminal; and
establishing a mapping between the second communication identifier and the first identity identifier.

In the foregoing implementation, the content corresponding to the second communication identifier may include an identity identifier of the user. In this way, data richness can be improved, and an owner (owner) of the battery system can be recorded. This facilitates supervision of the use process of the battery system, and facilitates life cycle tracing of the battery system.

Optionally, the mapping between the second communication identifier and the first identity identifier may be represented by a correspondence C9.

In another possible implementation of the eighth aspect, establishing the mapping between the second communication identifier and the first identity identifier includes:
determining a correspondence (which is referred to as the correspondence C9 for ease of differentiation) based on ciphertexts of the second communication identifier and the first identity identifier. For example, the correspondence C9 includes a ciphertext of the second identity identifier.

In the foregoing implementation, data in the correspondence may not be an actual value (plaintext), but an encrypted ciphertext. For example, the identity identifier is "sensitive", and may be encrypted and then stored in the correspondence. Compared with directly storing a plaintext of data, ciphertext storage ensures uniqueness of information content, improves data privacy, and improves data security.

In another possible implementation of the eighth aspect, the method further includes:
receiving a fourth message from the first terminal, where the fourth message includes the second communication identifier and a second identity identifier; and
establishing a mapping between the second communication identifier and the second identity identifier.

In the foregoing implementation, the identity identifier of the user may change, and correspondingly, the information mapped to the second communication identifier may also be updated, to record a change of the ownership of the battery system, so as to ensure that the mapping is the same as an actual ownership of the battery. This facilitates supervision of the use process of the battery system, and facilitates life cycle tracing of the battery system.

In addition, the electronic communication identifier is used, so that when the battery system is transferred, a management operation procedure like manually recording the code of the first battery system or manual archiving is not required. This improves efficiency of managing the battery system.

Optionally, the mapping between the second communication identifier and the second identity identifier may be represented by a correspondence C10.

Optionally, establishing the mapping between the second communication identifier and the second identity identifier may include: updating the correspondence C9 to obtain the correspondence C10.

Alternatively, optionally, establishing the mapping between the second communication identifier and the second identity identifier may include: establishing the correspondence C10, and deleting the correspondence C9.

In another possible implementation of the eighth aspect, the method further includes:
receiving a sixth message from a communication apparatus, where the sixth message includes the second communication identifier and a third communication identifier, and the third communication identifier is used to uniquely identify the second terminal; and
transferring a mapping related to the second communication identifier to the third communication identifier.

In the foregoing implementation, information mapped to one communication identifier may be transferred to another communication identifier, to adapt to home device transfer of the battery system. Therefore, the server updates the mapping to reflect a change of the ownership of the battery system, so as to ensure that the mapping is the same as an actual ownership of the battery. This facilitates supervision of the use process of the battery system, and facilitates life cycle tracing of the battery system.

In addition, the electronic communication identifier is used, so that when the battery system is transferred, a management operation procedure like manually recording the code of the first battery system or manual archiving is not required. This improves efficiency of managing the battery system.

Further, the method may further include: sending a seventh message to the communication apparatus, where the seventh message indicates a result of the mapping transfer operation.

In another possible implementation of the eighth aspect, transferring the mapping related to the second communication identifier to the third communication identifier includes:
establishing a mapping between the third communication identifier and first information, where the first information is the mapping information of the second communication identifier.

Optionally, the mapping between the third communication identifier and the first information may be represented by a correspondence C5.

In another possible implementation of the eighth aspect, the third message further includes a device identifier of the second terminal, and the method further includes:
updating the first information to obtain second information, where the second information includes the device identifier of the second terminal, and the second information corresponds to the third communication identifier.

In the foregoing implementation, the content corresponding to the second communication identifier includes the device identifier of the first terminal. Because the content corresponding to the second communication identifier is transferred to the third communication identifier, the server may include the device identifier of the second terminal in the information mapped to the third communication identifier.

In another possible implementation of the eighth aspect, the method further includes:
receiving an eighth message from a battery configuration device, where the eighth message includes the first communication identifier and the first battery code, and the first battery code indicates the production information of the first battery module in the first battery system; and
establishing a mapping between the first communication identifier and the first battery code.

Optionally, the mapping between the third communication identifier and the first information may be represented by a correspondence C1.

In the foregoing implementation, a relationship between a battery system and a battery module included in the battery system can be conveniently recorded by using a communication identifier of the battery system. For example, when the first battery system includes the first battery module, a relationship between the first battery system and the first battery module may be reflected by using the mapping between the first communication identifier and the first battery code.

In another possible implementation of the eighth aspect, the method further includes:
receiving a ninth message from the battery configuration device, where the ninth message includes the first communication identifier and a second battery code; and
establishing a mapping between the first communication identifier and the second battery code.

Optionally, the mapping between the first communication identifier and the second battery code may be represented by a correspondence C2.

In the foregoing implementation, the battery module included in the battery system may change, and correspondingly, information mapped to the first communication identifier may also be updated, to record a change of the battery module included in the battery system, so as to ensure that the mapping is the same as an actual situation of the battery. This facilitates supervision of the use process of the battery system, and facilitates life cycle tracing of the battery system.

In addition, the electronic communication identifier is used, so that when the battery system is transferred, a management operation procedure like manually recording the code of the first battery system or manual archiving is not required. This improves efficiency of managing the battery system.

In another possible implementation of the eighth aspect, establishing the mapping between the first communication identifier and the second battery code may include: updating the correspondence C1 to obtain the correspondence C2.

In another possible implementation of the eighth aspect, the method further includes: deleting the correspondence C1.

In another possible implementation of the eighth aspect, the method further includes:
receiving a tenth message, where the tenth message includes the first communication identifier and the first battery code; and
marking the first battery module corresponding to the first battery code as a scrapped state.

In the foregoing implementation, the server may mark the battery module as the scrapped state. This facilitates supervision of the use process of the battery system, and facilitates life cycle tracing of the battery system.

In another possible implementation of the eighth aspect, the method further includes:
receiving an eleventh message from a battery management station, where the eleventh message includes the first communication identifier, the second communication identifier, and a fourth communication identifier, and the fourth communication identifier is used to uniquely identify the battery management station to which the second battery system belongs;
establishing a mapping between the fourth communication identifier and the first communication identifier.

Optionally, the mapping between the fourth communication identifier and the first communication identifier may be represented by a correspondence C6.

In the foregoing implementation, when the battery system is transferred between the terminal and the battery management station, the mapping related to the communication identifier correspondingly changes, to record a change of the ownership of the battery system, so as to ensure that the mapping is the same as an actual ownership of the battery. This facilitates supervision of the use process of the battery system, and facilitates life cycle tracing of the battery system.

In addition, the electronic communication identifier is used, so that when the battery system is transferred, a management operation procedure like manually recording the code of the first battery system or manual archiving is not required. This improves efficiency of managing the battery system.

In another possible implementation of the eighth aspect, the method further includes:
receiving a twelfth message from the battery management station, where the twelfth message includes the first communication identifier, the second communication identifier, and the fourth communication identifier; and
establishing the mapping between the second communication identifier and the first communication identifier.

Optionally, the mapping between the second communication identifier and the first communication identifier may be represented by a correspondence C7.

In another possible implementation of the eighth aspect, the method further includes:
receiving a thirteenth message from the battery management station, where the thirteenth message includes the first communication identifier and the fourth communication identifier; and
marking the first battery system as a recycled state.

In the foregoing implementation, the server may mark the battery module as the recycled state. This facilitates supervision of the use process of the battery system, and facilitates life cycle tracing of the battery system.

In another possible implementation of the eighth aspect, the method further includes:
receiving a fourteenth message from a cascade configuration device, where the fourteenth message includes the first communication identifier, the first battery code, a third battery code, and a fifth communication identifier, the fifth communication identifier is used to uniquely identify the first battery module to which the second communication module belongs, the first battery module is included in the first battery system, the third battery code indicates cascade information of the first battery module, and the first battery code indicates the production information of the first battery module; and
establishing a mapping between the fifth communication identifier and the third battery code.

Optionally, the mapping between the fifth communication identifier and the third battery code may be represented by a correspondence C8.

In the foregoing implementation, when the battery system is cascaded, a code change and a cascade process of the battery system can be conveniently recorded by using the communication identifier, and a relationship between the first battery system, the cascade configuration device, and a cascade device may be reflected by updating the mapping. This improves efficiency of managing the battery system, facilitates supervision of the use process of the battery system, and facilitates life cycle tracing of the battery system. In conclusion, according to this solution, the battery system can be conveniently and efficiently managed.

In another possible implementation of the eighth aspect, the fourteenth message further includes a sixth communication identifier, and the sixth communication identifier is used to uniquely identify a third terminal to which the first battery module currently belongs.

The method further includes: establishing a mapping between the sixth communication identifier and the fifth communication identifier.

Optionally, the mapping between the sixth communication identifier and the fifth communication identifier may be represented by a correspondence C11.

According to a ninth aspect, an embodiment of this application provides a communication apparatus. The communication apparatus includes a processing unit and the processing unit. The processing unit may be configured to implement the foregoing functions such as obtaining, processing, determining, establishment, update, and deletion, and/or configured to support other functions in the foregoing embodiments. The communication unit may be configured to perform operations such as sending, receiving, and reading, and/or configured to support other functions in the foregoing embodiments. Optionally, the communication unit may be alternatively replaced with a communication interface module and/or a transceiver module.

The communication apparatus is configured to implement the battery management method described in any one of the second aspect to the eighth aspect.

According to a tenth aspect, an embodiment of this application provides a communication apparatus. The communication apparatus includes a processor and a communication interface. The communication interface is configured to input and/or output data, or the communication interface is configured to send and/or receive data. The communication apparatus is configured to implement the battery management method described in any one of the second aspect to the eighth aspect.

It should be noted that the processors described in the fifth aspect and the sixth aspect may be processors (referred to as dedicated processors for ease of differentiation) dedicated to performing these methods, or may be processors that perform these methods by invoking a computer program (the computer program includes computer instructions or computer instructions may be obtained by using the computer program), for example, general-purpose processors. Optionally, the at least one processor may alternatively include both a dedicated processor and a general-purpose processor.

Optionally, the computer program may be stored in a memory. For example, the memory may be a non-transitory (non-transitory) memory, for example, a read-only memory (read-only memory, ROM). The memory and the processor may be integrated on a same device, or may be separately disposed on different devices. A type of the memory and a manner of disposing the memory and the processor are not limited in embodiments of this application.

In a possible implementation, the at least one memory is located outside the communication apparatus, or is located in the communication apparatus, or some memories are located in the communication apparatus, and the other memories are located outside the communication apparatus.

Optionally, the processor and the memory may alternatively be integrated into one device.

According to an eleventh aspect, an embodiment of this application provides a computer-readable storage medium. The computer-readable storage medium stores instructions, and when the instructions are run on at least one processor, the battery management method described in any one of the second aspect to the eighth aspect is implemented.

According to a twelfth aspect, this application provides a computer program product. The computer program product includes computer instructions, and when the instructions are run on at least one processor, the battery management method described in any one of the second aspect to the eighth aspect is implemented.

Optionally, the computer program product may be a software installation package. If the foregoing method needs to be used, the computer program product may be downloaded and executed on a computing device.

According to a thirteenth aspect, an embodiment of this application provides a terminal. The terminal includes the communication apparatus in the ninth aspect, or includes the communication apparatus in the tenth aspect. Optionally, the terminal may be an intelligent terminal or transportation means like a vehicle, an uncrewed aerial vehicle, or a robot.

According to a fourteenth aspect, an embodiment of this application provides a server. The server includes the communication apparatus in the ninth aspect, or includes the communication apparatus in the tenth aspect.

Optionally, the server may be replaced with a server cluster, and a quantity of servers in the server cluster may be N (N is an integer and N>1), to improve a processing capability of the server and reduce data pressure of a single-point server. Optionally, the server cluster may be deployed in a distributed manner.

In a possible implementation, the N servers separately store data with different primary key values (values of communication identifiers). Certainly, primary key values corresponding to any two servers may be different. For example, a server 1 stores information corresponding to identifiers 1 to 9999, and a server 2 stores information corresponding to identifiers 10000 to 19999.

In another possible implementation, primary key values corresponding to data stored in any two servers may be partially the same. For example, the servers may also partially overlap for mutual backup. For example, a server 1 stores information corresponding to identifiers 1 to 14999, and a server 2 stores information corresponding to identifiers 10000 to 19999. The rest may be deduced by analogy.

In another possible implementation, the servers may be configured to process data of different industries and/or different regions. For example, N is 4. Servers 1 to 3 are used for processing in the automobile industry, and a server 4 is used for processing in the cascade industry.

According to a fifteenth aspect, an embodiment of this application provides a battery management station. The battery management station includes the communication apparatus in the ninth aspect, or includes the communication apparatus in the tenth aspect. Optionally, the battery management station may be a battery replacement station.

According to a sixteenth aspect, an embodiment of this application provides a battery configuration device. The battery configuration device includes the communication apparatus in the ninth aspect, or includes the communication apparatus in the tenth aspect. Optionally, the battery configuration device may be an upper computer.

According to a seventeenth aspect, an embodiment of this application provides a cascade configuration device. The cascade configuration device includes the communication apparatus in the ninth aspect, or includes the communication apparatus in the tenth aspect. Optionally, the cascade configuration device may be an upper computer.

According to an eighteenth aspect, an embodiment of this application provides a cascade device. The cascade device includes the communication apparatus in the ninth aspect, or includes the communication apparatus in the tenth aspect. Optionally, the cascade device may include an energy storage device, a generator, a base station, or the like.

In the technical solutions provided in the second aspect to the eighteenth aspect of this application, for beneficial effects of some technical solutions, refer to beneficial effects of the technical solutions in the first aspect. Details are not described herein again.

### BRIEF DESCRIPTION OF DRAWINGS

The following briefly describes accompanying drawings used in describing embodiments.
FIG. 1 is a diagram of a battery code;
FIG. 2 is a diagram of a battery system according to an embodiment of this application;
FIG. 3 is a diagram of a data structure of a correspondence related to a communication identifier according to an embodiment of this application;
FIG. 4 is a diagram of a data structure of another correspondence according to this application;
FIG. 5 is an architectural diagram of a communication system according to an embodiment of this application;
FIG. 6 is an architectural diagram of another possible communication system according to an embodiment of this application;
FIG. 7 is a diagram of a communication manner according to an embodiment of this application;
FIG. 8 is diagram of another communication manner according to an embodiment of this application;
FIG. 9 is diagram of another communication manner according to an embodiment of this application;
FIG. 10 is a schematic method flowchart of a battery management method according to an embodiment of this application;
FIG. 11 is a diagram of an interaction scenario of a communication system according to an embodiment of this application;
FIG. 12 is a diagram of a data structure of a correspondence according to an embodiment of this application;
FIG. 13 is a schematic method flowchart of another battery management method according to an embodiment of this application;
FIG. 14 is a diagram of an interaction scenario of another battery management method according to an embodiment of this application;
FIG. 15 is a schematic method flowchart of another battery management method according to an embodiment of this application;
FIG. 16 is a diagram of an interaction scenario of another battery management method according to an embodiment of this application;
FIG. 17 is a schematic method flowchart of another battery management method according to an embodiment of this application;
FIG. 18 is a diagram of an interaction scenario of a communication system according to an embodiment of this application;
FIG. 19A is a diagram of an interaction scenario of a communication system according to an embodiment of this application;
FIG. 19B is a diagram of a data structure of another correspondence according to an embodiment of this application;
FIG. 20 is a diagram of an interaction scenario of a communication system according to an embodiment of this application;
FIG. 21 is a schematic method flowchart of another battery management method according to an embodiment of this application;
FIG. 22 is a diagram of an interaction scenario of another battery management method according to an embodiment of this application;
FIG. 23 is a schematic flowchart of another battery management method according to an embodiment of this application;
FIG. 24 is a diagram of an interaction scenario of a communication system according to an embodiment of this application;
FIG. 25 is a schematic flowchart of another battery management method according to an embodiment of this application;
FIG. 26 is a diagram of an interaction scenario of another battery management method according to an embodiment of this application;
FIG. 27 is a schematic method flowchart of another battery management method according to an embodiment of this application;
FIG. 28 is a diagram of an interaction scenario of a communication system according to an embodiment of this application;
FIG. 29 is a schematic flowchart of another battery management method according to an embodiment of this application;
FIG. 30 is a diagram of an interaction scenario of a communication system according to an embodiment of this application;
FIG. 31 is an architectural diagram of a server according to an embodiment of this application;
FIG. 32 is a diagram of a structure of a communication apparatus according to an embodiment of this application; and
FIG. 33 is a diagram of a structure of a possible communication apparatus according to an embodiment of this application.

### DESCRIPTION OF EMBODIMENTS

For ease of understanding, some concepts related to embodiments of this application are described below for reference by using examples. Details are as follows.
1. Cascade (or cascading utilization): The cascade (cascade) is a process in which after a used battery reaches its original design life, all or some functions of the battery can be further used according to another method. This process is a basic same-level or degraded application. For example, after normal use in a vehicle, a power battery of a vehicle is provided to another industry for cascading. For example, the power battery is provided to a communication base station as an energy storage battery.
2. Battery system: The battery system is a general term for a battery. In a specific implementation process, the battery system may replace one or more levels of battery components. For example, the battery system may be an electrochemical cell or a battery string (including one or more electrochemical cells). The battery string may also be referred to as a battery pack. Alternatively, in some scenarios, a plurality of battery strings may be packaged to obtain a battery pack.

The foregoing example descriptions of the concepts may be applied in the following.

With popularization and technology development of mobile devices such as vehicles and mobile phones, users have increasingly high requirements on batteries in the mobile devices, and the batteries have better performance and longer service lives. In a process from production to scrapping, the batteries may go through the following processes: delivery, sale, battery replacement, resale, recycling (recycle), regrouping, cascading (cascade), and scrapping (Scrap). These processes are performed based on an identifier of a battery system. Although current battery systems have a code system, most of codes of the battery systems are to mark battery information through jet printing or identifier labeling. A relatively new method is to add a two-dimensional code or a bar code to an identifier, so that the identifier can be read by an electronic gun through code scanning. However, physical battery codes are easily blocked, physically damaged, and chemically corroded, making it difficult to identify a battery system.

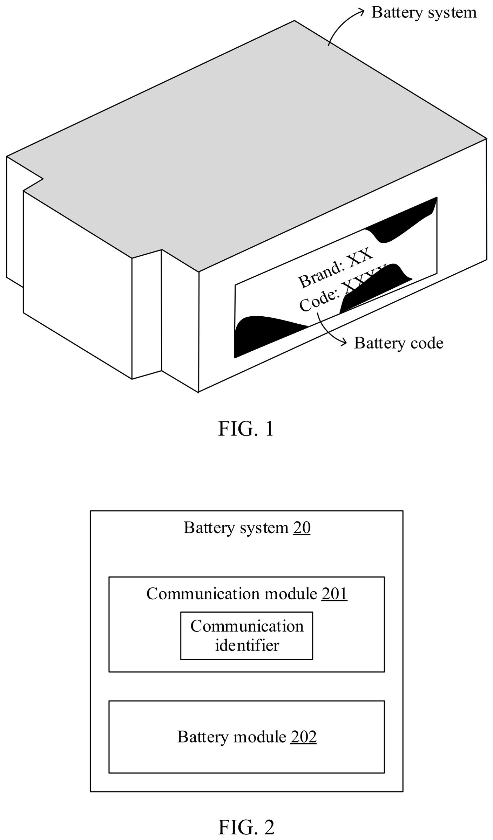

For example, the battery system may be a battery pack, and the battery pack includes an electrochemical cell. However, the electrochemical cell needs to be packaged to form the battery pack. Therefore, a battery code of the electrochemical cell is blocked and glued. In addition, after a package of the battery pack is subsequently removed, the battery code of the electrochemical cell is also difficult to identify. The battery code of the battery system is prone to physical damage, such as wear and loss. FIG. 1 is a diagram of the battery code. The battery code of the battery system may be contaminated, making it difficult to identify the battery code of the battery system. Even if the battery code of the battery is not blocked or damaged, the battery code of the battery needs to be manually recorded when the battery system undergoes vehicle changing, resale, or cascading. This is a complex process. In addition, a forged battery system may also enter the market through a forged code, and these non-compliant battery systems may pose a security risk and pose a threat to personal and property safety.

In conclusion, it is difficult to identify and verify the current battery systems. In view of this, embodiments of this application provide a communication identifier, a battery system, a battery coding method, a communication method, and a related apparatus. In embodiments of this application, a battery system can be conveniently identified, and the battery system can be conveniently and efficiently managed.

The following first describes the communication identifier and the battery system provided in embodiments of this application.

An embodiment of this application provides a communication identifier, and the communication identifier may be used to uniquely identify a device. The device herein includes one or more of a battery system, a terminal, a network device, an equipment room device, an industrial device, an entertainment device, or the like. The battery system includes an electrochemical cell, a battery string, a battery pack, a battery management system (BMS), and the like. The terminal includes but is not limited to a vehicle, a mobile phone, an uncrewed aerial vehicle, a ship, an aircraft, a rail transport (for example, a subway or a high-speed railway), or a robot. The network device is, for example, a metro router, a central router, or a base station. The equipment room device is, for example, a data center server or a data center switch. The industrial device is, for example, an industrial robot or a robotic arm. The entertainment device is, for example, a virtual reality (virtual reality, VR) device, a mixed reality (Mixed Reality, MR) device, a massage chair, or a 4D cinema cockpit.

Optionally, the communication identifier may include a character, a character string, a character paragraph, or the like. The character includes a letter, a digit, a punctuation mark, an operator, and the like. A length of the communication identifier is not limited in this application.

Optionally, the communication identifier may be a digital serial number. For example, the communication identifier may include 48 binary digits. For another example, the communication identifier may include 12 hexadecimal digits, for example, represented as 0x0A16EAAE3C40.

Optionally, the communication identifier may be a media access control (media access control, MAC) address.

The following uses a scenario in which the communication identifier is used to uniquely identify a battery system as an example to describe an application of the communication identifier.

FIG. 2 is a diagram of a battery system according to an embodiment of this application. A battery system 20 includes a battery module 202 and a communication module 201.

The battery module 202 is a power storage part in the battery system, and can store electric energy and/or provide electric energy. The battery system 20 may include one or more battery modules 202. The battery module corresponds to a battery code, and the battery code indicates production information of the battery module. For example, the battery code may be a 24-bit automotive power battery code, where the 1^{st} to 3^{rd} bits are a manufacturer code, the 4^{th} and 5^{th} bits are a product type code and a battery type code, the 6^{th} to 14^{th} bits are a specification code and a traceability information code, the 15^{th} to 17^{th} bits are a production date code, and the 18^{th} to 24^{th} bits are a serial number.

The communication module 201 is a module having a communication function, and may include a chip, a circuit, an integrated circuit, a processor, a controller, a communication interface, or the like. Optionally, the communication module may be configured to establish a wired communication connection and/or a wireless communication connection.

In a possible implementation, the communication module 201 is configured to establish a wireless communication connection, and the wireless communication connection may be used to transmit a wireless signal. For example, a wireless communication technology implemented by the communication module 201 may include one or more of the following wireless communication technologies: SparkLink (SparkLink), Wi-Fi (Wireless Fidelity), Bluetooth (Bluetooth), Zigbee (Zigbee), a radio frequency identification (radio frequency identification, RFID) technology, an ultra-wideband (ultra-wideband, UWB) technology, a long term evolution (long term evolution, long term evolution) communication technology, a 5th generation mobile communication technology (5th generation mobile networks or 5th generation wireless systems, 5th-Generation, 5G or 5G technology for short), a global system for mobile communications (global System for mobile communications, GSM), a general packet radio service (general packet radio Service, GPRS), a universal mobile telecommunications system (universal mobile telecommunications system, UMTS), or the like.

In another possible implementation, the communication module 201 is configured to establish a wired communication connection. For example, the wireless communication technology implemented by the communication module may include one or more of the following wireless communication technologies: a controller area network (controller area network, CAN), a local interconnect network (local Interconnect network, LIN) bus, a CAN flexible data-rate (CAN flexible data-rate, CANFD), an automotive Ethernet, or the like.

A communication identifier is set in the communication module 201. In other words, the communication module 201 includes the communication identifier. For example, the communication module 201 includes a memory or is connected to the memory, and a communication identifier is written (burned) into the memory in the communication module 201. The communication identifier is used to uniquely identify the battery system 20. For example, the communication identifier of the battery system 20 is 0x0A16EAAE3C40, and a user or a device may index the battery system 20 by using 0x0A16EAAE3C40.

The communication identifier can implement convenient identification of the battery system. As an identifier in an electronic form, the communication identifier is unlikely to wear. In addition, the identifier in the electronic form may be conveniently written, updated, and erased, and therefore has high flexibility and scalability, and is easy to manage. For example, the communication identifier is erased from the communication module of the battery system, so that the battery system cannot be identified in an electronic system. For another example, when a design manner of the communication identifier changes, the communication identifier may be updated in a communication interaction manner, and the battery code does not need to be manually reattached.

Further, a relationship between the battery system and another device may be conveniently recorded by using the communication identifier. For example, in a process like delivery, sale, mounting, replacement, resale, re-mounting, cascading, or scrapping of the battery system, a relationship (or an ownership) between the battery system and a related device or person may be conveniently recorded by using the electronic communication identifier, and a management operation procedure like manual recording or manual archiving may be not required. This improves efficiency of managing the battery system, facilitates supervision of a use process of the battery system, and facilitates life cycle tracing of the battery system. In conclusion, the communication identifier of the battery system has advantages such as easy reading, low costs, and sharing. According to embodiments of this application, the battery system can be conveniently and efficiently managed.

In some possible implementations, the communication identifier of the device may be used as an index, and there is a mapping between the communication identifier of the device and information about the device or information about a peripheral entity related to the device. For example, there may be a mapping between the communication identifier of the battery system and one or more pieces of information such as a battery code, a device identifier of a vehicle, a communication identifier of the vehicle, identity information of a user, a communication identifier of a battery replacement station, a communication identifier of a cascade configuration device, or a communication identifier of a cascade device.

The mapping herein may also be understood as a correspondence or a binding relationship (collectively referred to as a correspondence in this specification), so that the communication identifier of the device is associated with the information about the device and/or the information about the peripheral entity related to the device in terms of data. Further, after obtaining the communication identifier of the battery system, a device or a user can obtain, through query, information associated with the battery system.

In a possible implementation, the mapping may be implemented by using a correspondence. For ease of understanding, the following describes, as examples, two correspondences that represent mappings.

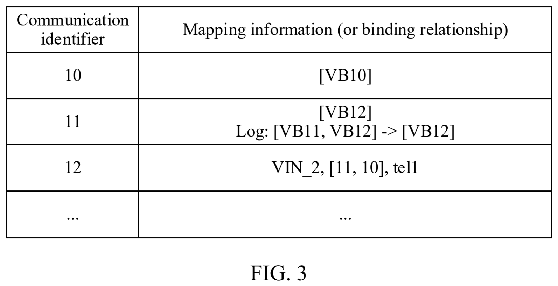

As an example of a correspondence, FIG. 3 is a diagram of a data structure of a correspondence related to a communication identifier according to an embodiment of this application. The data structure includes the communication identifier (a location of the communication identifier in the correspondence is merely an example) and mapping information (or referred to as a binding relationship) of the communication identifier. Optionally, in addition to the information shown in the figure, the mapping information may further include other information, for example, a modification log of the mapping information.

For example, mapping information corresponding to a communication identifier 10 includes [VB11], where VB11 is a battery code. This correspondence may indicate that a battery code of a battery module in a device corresponding to the communication identifier 10 is VB11. In other words, there is a mapping between the communication identifier 10 and the battery code VB11.

Similarly, mapping information corresponding to a communication identifier 11 includes [VB12] and a log (log), where VB12 is a battery code. This correspondence may indicate that a battery code of a battery module in a device corresponding to the communication identifier 11 is VB12. Content of the log is "VB11, VB12 -> VB12", which indicates a modification operation on the mapping information. To be specific, VB12 is obtained through [VB11, VB12] update. In other words, battery codes previously corresponding to the communication identifier 11 are VB11 and VB12 (the battery system may include two electrochemical cells), and are subsequently updated to VB12.

Similarly, the mapping information corresponding to the communication identifier 11 includes VIN_2, [11, 10], and tel1. VIN_2 is a vehicle identification number of a vehicle, [11, 10] is communication identifiers of two battery systems, and tel1 is a phone number of a user. Therefore, this correspondence may indicate that the communication identifier 12 is a communication identifier of the vehicle, the vehicle identification number of the vehicle is VIN_2, the vehicle includes two battery systems whose communication identifiers are respectively 11 and 10, and the phone number of the user of the vehicle is tel1.

Because there may be a large quantity of information items and complex information in the mapping information, in some solutions, a correspondence may be an entry, and the entry represents a mapping between the communication identifier and an information item (the information item is, for example, a battery code, a home device, or an owner). Specifically, each information item includes a content indicator and data. The content indicator indicates a type of the data stored in the information item. The content indicator may be data, a character, or the like. A quantity of bits and a length of the content indicator may be predefined or pre-specified. The data indicates data of the information item.

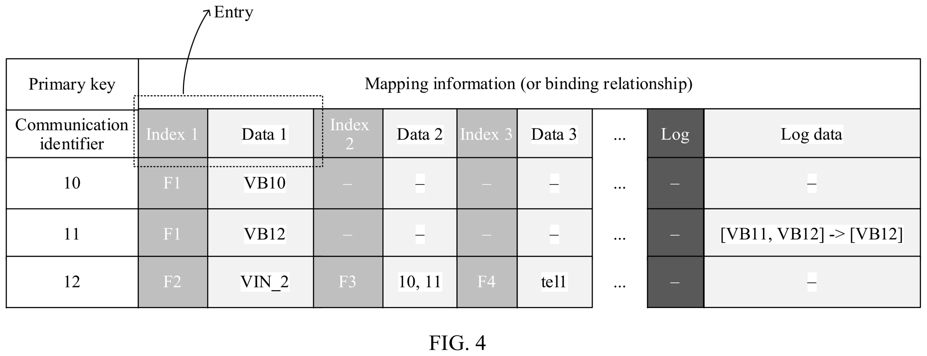

As an example of another correspondence, FIG. 4 is a diagram of a data structure of another correspondence according to an embodiment of this application. A communication identifier is used as a primary key, and corresponds to one or more information items. Each information item includes a content indicator, for example, F1, F2, F3, or F4 shown in FIG. 4. F1 indicates a battery code, F2 indicates a vehicle identification number, F3 indicates a battery system, and F4 indicates a user. A communication identifier 13 is used as an example, the 1^{st} information item corresponding to the communication identifier 13 indicates that the communication identifier 13 is bound to a vehicle whose vehicle identification number (VIN number) is VIN_2. The 2^{nd} information item of the communication identifier 13 indicates that the communication identifier 13 is bound to two battery systems whose communication numbers are respectively 10 and 11. The 2^{nd} information item of the communication identifier 13 indicates that the communication identifier 13 is bound to a mobile phone number tel1 (which is used as an identity identifier). Certainly, in a specific implementation process, the communication identifier 13 may be further bound to other information, for example, a modification log.

It should be understood that the foregoing describes the correspondence in a table form merely for ease of understanding, and does not intend to limit a storage form, an output form, and a transmission form of the correspondence. In a specific implementation process, the correspondence may also indicate fingerprint information by using another data format, for example, a database table, a linked list, a heap, a stack, data in a JSON format, or an object. Examples are not provided one by one herein. Similarly, another table in this application is also an example data format, and does not strictly limit the solutions of this application.

In addition, in embodiments of this application, data names such as an information item, a content indicator, and an entry are merely examples, and do not limit a specific solution. In a specific implementation process, a parameter name may be replaced with another name. Even, in some solutions, data may be differentiated by a location (for example, a data bit, a character location, or a sequence number) of the data, and does not need to be specifically named. For example, the correspondence may be "10 VB10nullnullnull". Different data is differentiated by using a space. If a data item is empty, the data item is represented by null. For example, in "10 VB10nullnullnull", a first piece of data (namely, 10) indicates a communication identifier, a second piece of data (namely, VB10) indicates a battery code, a third piece of data indicates a VIN code (null indicates that data is empty), a fourth piece of data indicates a phone number of an owner, and a fifth piece of data indicates a log. Certainly, the data herein is merely an example.

In a possible implementation, the correspondence may be stored in a storage device like a server or a cloud platform. Optionally, the correspondence includes a plurality of entries (or referred to as tuples), and a communication identifier is used as a unique index (or referred to as a primary key) of an entry. In other words, indexes (communication identifiers) of two entries are not the same. For example, in the data structures shown in FIG. 3, FIG. 4, and the like, a communication identifier and mapping information of the communication identifier are referred to as an entry.

Further, in a scenario like ownership transfer, home device update, maintenance and replacement, and cascading of the battery system, the correspondence may be correspondingly updated, to record use information of an entire life cycle of the battery system. For example, when the battery system is mounted on a vehicle, there is a mapping relationship between a communication identifier of the vehicle and a code of the communication identifier of the battery system. Further, when the battery system is replaced to a battery replacement station or another vehicle, the mapping relationship may be updated, so that there is a mapping between the communication identifier of the battery system and an identifier of a current home device.

In a possible implementation, the mapping relationship may be updated through message exchange.

The following describes a system architecture in embodiments of this application. It should be noted that the system architecture described in this application is intended to describe the technical solutions in this application more clearly, and does not constitute a limitation on the technical solutions provided in this application. It should be understood that, with evolution of the system architecture and emergence of a new service scenario, the technical solutions provided in this application are also applicable to similar technical problems.

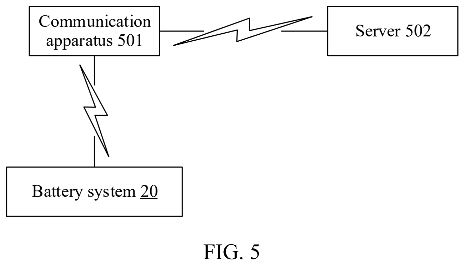

FIG. 5 is an architectural diagram of a communication system according to an embodiment of this application. The communication system includes a communication apparatus 501 and a server 502.

The communication apparatus 501 is an apparatus having a communication capability, and can send and/or receive a message. The server 502 is an apparatus having a centralized computing capability. Although the server 502 is referred to as a server herein, the server 502 is not limited to being implemented by using a server, for example, may be replaced with a virtual machine, a container, a cloud, or a data center. For example, the server includes but is not limited to a general-purpose computer, a server computer, a blade server, and a rack server. When the server 502 is implemented by using a server, the server 502 may include one or more servers (for example, a server cluster). The virtual machine is a virtualized computing module. The cloud is a software platform that uses an application virtualization technology, and can enable one or more pieces of software and applications to be developed and run in an independent virtualized environment. Optionally, the cloud may be deployed on a public cloud, a private cloud, a hybrid cloud, or the like.

The communication apparatus 501 can perform communication interaction with the server 502. The communication interaction may include a message and/or a context formed by the message. The message herein may include an instruction.

In this embodiment of this application, the server 502 may manage (or store) a mapping (for example, a correspondence) of a communication identifier, and a message may be transmitted between the communication apparatus 501 and the server 502, to perform an operation like access, update, or query on the mapping of the communication identifier. The update includes but is not limited to addition, deletion, modification, or the like.

In a possible implementation example of the communication apparatus, the communication apparatus 501 may be a device or may be included in a device, and the device may be uniquely differentiated by using a communication identifier. The communication apparatus 501 may send a message to the server, to request the server to execute an instruction related to the communication identifier of the device, for example, update a related mapping of the communication identifier of the device, for example, add, delete, or modify a correspondence of the communication identifier. The device herein includes one or more of a battery system, a terminal, a network device, an equipment room device, an industrial device, an entertainment device, or the like. For example, the communication apparatus 501 may be a vehicle VIN_2, the vehicle VIN_2 corresponds to a communication identifier 12, and the vehicle VIN_2 may request the server to update a related mapping of the communication identifier 12.

In a possible implementation example of the communication apparatus, the communication apparatus 501 may be connected to a battery system 20. The communication apparatus 501 may send a message to the server, to request to execute an instruction related to the communication identifier of the device, for example, update a mapping related to a communication identifier of the battery system 20. For example, the communication apparatus 501 may be a battery configuration device, the battery configuration device can be communicatively connected to a first battery system, the first battery system corresponds to a communication identifier 10, and the battery configuration system may request the server to update a mapping of the communication identifier 10. For example, the communication apparatus 501 may be a terminal, the terminal is connected to the first battery system, and the terminal may obtain a communication identifier and a battery code of the first battery system, and request the server to check whether the communication identifier and the battery code of the first battery system are correct. Certainly, in addition to verifying the communication identifier and the battery code of the battery system, other information may also be verified. Refer to the mapping information in the foregoing correspondence. For example, identity information of a user and a device identifier of the terminal may be verified.

Whether a message is correct may be determined in the following manner: The server verifies whether information carried in the message is consistent with information stored on the server. For example, a communication identifier of a battery system included in the terminal is 11, a battery code of a battery module in the battery system is VB999, and the terminal carries the communication identifier 11 and the battery code VB999 in a message M0 sent to the server. The server receives the message M0, and queries a correspondence. If the correspondence represents that a battery code mapped to the communication identifier 11 is VB12, which is inconsistent with VB999 carried in the message, it indicates that the information that the battery code is VB999 is incorrect.

In a possible implementation, the communication apparatus 501 may be an independent device, for example, a battery configuration device (for example, an upper computer of a battery manufacturer), a terminal, a battery management station (for example, a battery replacement station), a cascade configuration device (for example, an upper computer of a cascade manufacturer), or a cascade device. Alternatively, the communication apparatus 501 may be a module included in an independent device, and the module herein may be a software module and/or a hardware module.

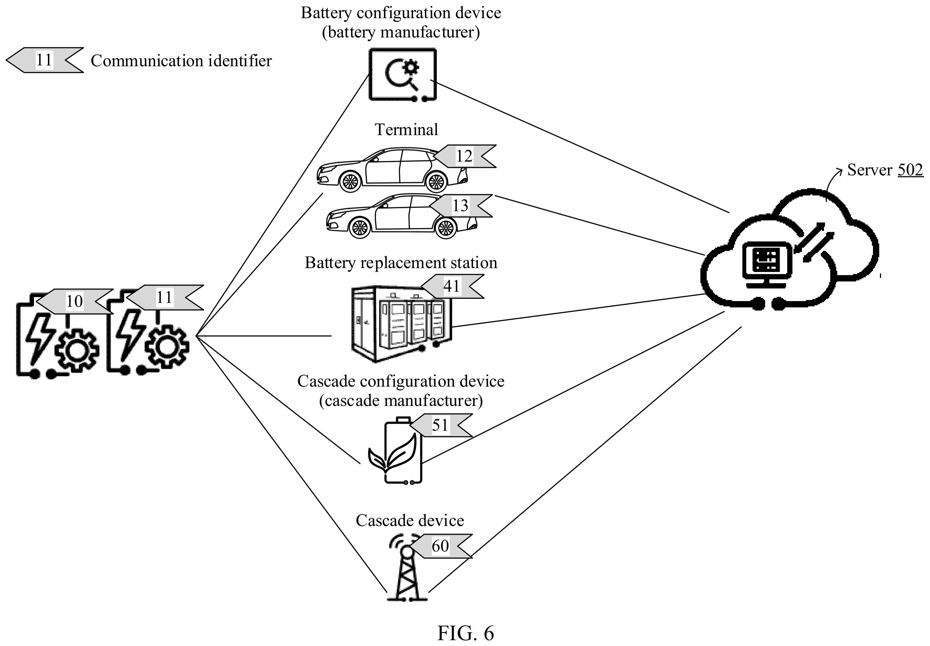

FIG. 6 is an architectural diagram of another possible communication system according to an embodiment of this application. The communication system includes a server 502, and one or more of a battery configuration device, a terminal, a battery management station, a cascade configuration device, a cascade device, or the like.

Optionally, a communication apparatus 501 may be communicatively connected to a battery system. Further, the communication connection may be wired and/or wireless.

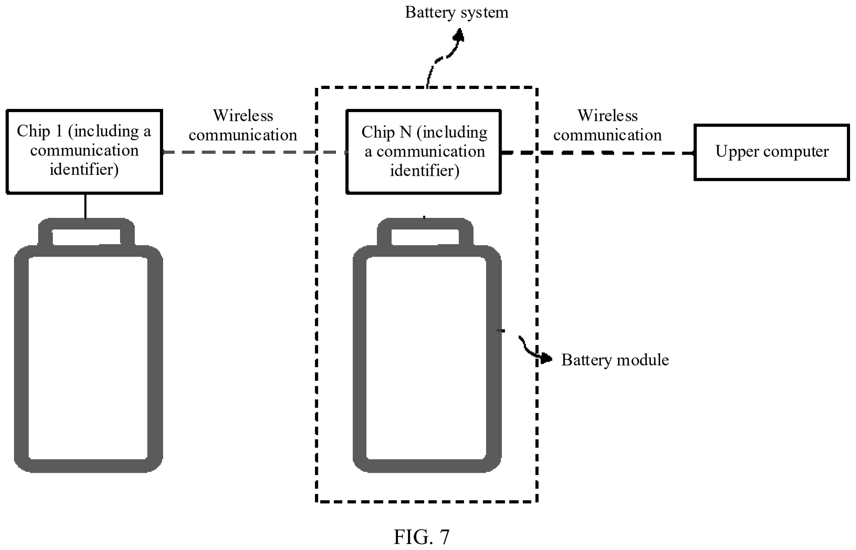

FIG. 7 is a diagram of a communication manner according to an embodiment of this application. The battery system includes a chip and a battery module. The chip includes a communication identifier, and the communication identifier may be used to uniquely identify the chip. Further, the battery system includes the chip. Therefore, the communication identifier may be used to uniquely identify the battery system to which the chip belongs. A communication connection between an upper computer (considered as the communication apparatus 501) and the battery system may be in a wireless communication manner. Optionally, the upper computer may establish a wireless connection to a plurality of (for example, N, where N is a positive integer) battery systems. Optionally, there may also be a wireless connection between battery systems.

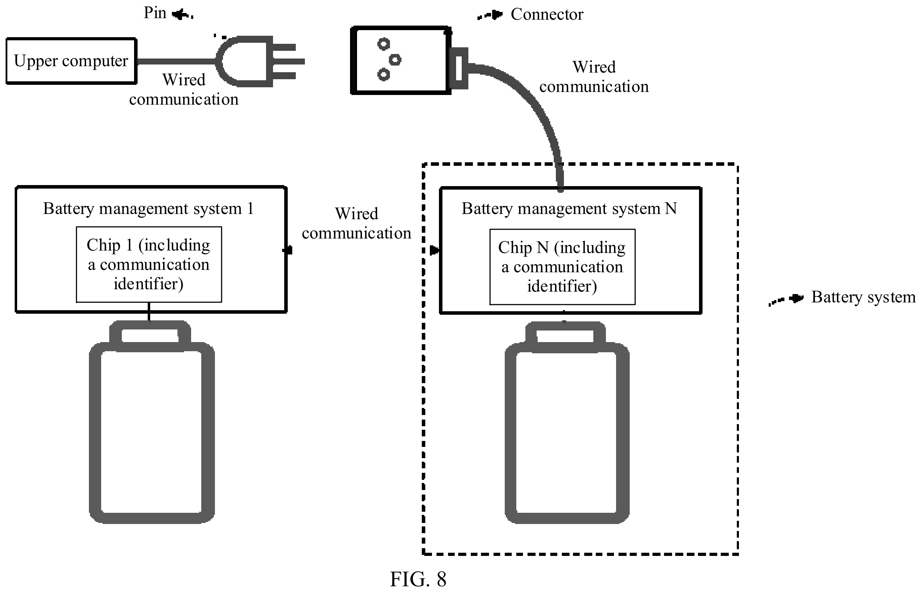

FIG. 8 is a diagram of another communication manner according to an embodiment of this application. The battery system includes a battery management system and a battery module. The battery management system includes a chip, the chip includes a communication identifier, and the communication identifier may be used to uniquely identify the chip. Further, the battery system includes the chip. Therefore, the communication identifier may be used to uniquely identify the battery system to which the chip belongs. A communication connection between an upper computer (considered as a communication apparatus 501) and the battery system may be in a wired communication manner. For example, the battery system may be wiredly connected to a connector, the upper computer is wiredly connected to a pin, and the connector is in contact with the pin, to implement the wired connection between the battery system and the upper computer. Optionally, the upper computer may establish a wired connection to a plurality of (for example, N, where N is a positive integer) battery systems. Optionally, there may also be a wired connection between battery systems.

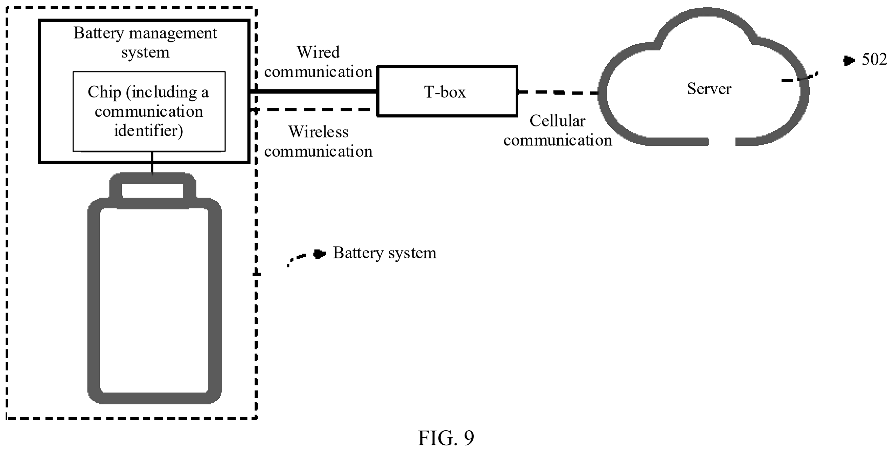

FIG. 9 is a diagram of another communication manner according to an embodiment of this application. The battery system includes a battery management system and a battery module, and the battery management system includes a chip. A communication connection between a telematics box T-box and the battery system may be in a wired communication manner and/or a wireless communication manner. Further, the T-box may communicate with the server 502 in a cellular communication manner.

As mentioned above, the server may communicate with the communication apparatus. In a possible solution, the server stores a mapping of a communication identifier, and a message between the server and the communication apparatus may be used to update (including adding, deleting, and modifying) the mapping. Certainly, if the mapping is represented by a correspondence, the message between the server and the communication apparatus may be used to update the correspondence.

In a possible implementation, the message transmitted between the communication apparatus 501 and the server 502 may be used to implement one or more of the following functions: adding a primary key in a mapping (or adding an entry in a correspondence), adding an information item for a primary key mapping, binding a battery code corresponding to a battery system, confirming a service between terminals, modifying an existing entry, checking correctness (or legality) of an entry, recycling a communication identifier, establishing a cascade mapping, modifying a primary key value, scrapping and deleting a battery system, feeding back a check result, feeding back a verification result, or the like.

Refer to Table 1. Table 1 shows several instructions provided in this embodiment of this application and meanings of the instructions. As shown in Table 1, Create(...) indicates to add a primary key or add an information item, and content in parentheses may be parameters of an instruction. For example, an instruction may be in a form of "Create(key_1, 11, [VB11, VB12 ])". Create indicates to add a correspondence (or add an information item); key_1 indicates a secret value (for example, a key or a password), and is optional content; 11 is a communication identifier (which may be used as a primary key); and [VB11, VB12] is mapping information corresponding to the communication identifier 11, and is battery codes herein. The instruction indicates to establish a mapping between the communication identifier 11 and [VB11, VB12], where key_1 is used to identify an identity and/or ensure communication security.

It should be noted that, for ease of describing the meaning of the instruction herein, the foregoing form is used for description. In a specific implementation process, the instruction may be a message, and the meaning of the instruction, the parameters of the instruction, and the like may be represented by data carried in the message. In addition, a name of the instruction is merely an example. In a specific implementation process, the name of the instruction, a sequence of the parameters, a specific meaning of the instruction, and the like may alternatively have other designs. For example, Create(...) can be replaced with Add(...).

**Table 1**

| Sequence number | Instruction | Meaning |
|---|---|---|
| 1 | Create(...); | Add a primary key/an information item |
| 2 | Bind(...); | Bind mapping information |
| 3 | Confirm(...); | Confirm a service operation |
| 4 | Update(...); | Modify a mapping |
| 5 | Check(...); | Check/Verify information |
| 6 | Rec(...); | Recycle a communication identifier |
| 7 | Cas(...); | Establish a cascade mapping |
| 8 | Scr(...); | Scrap a battery or recycle the battery |
| 9 | DONE(...); | Feed back that an operation is successful/an operation is legal |
| 10 | FAULT(...); | Feed back an operation/check/verification... failure |
| ... | ... | ... |

In Table 1, establishing the cascade mapping is updating a code, a communication identifier, and the like of the battery system when the battery system is cascaded. In some solutions, establishing the cascade mapping may also be referred to as stamping for cascading, indicating that the battery system has been cascaded.

The following uses information exchange between a communication apparatus and a server as an example to describe update and use of a correspondence. It should be understood that in embodiments of this application, descriptions are provided in a step sequence marked in the accompanying drawings, and are not intended to limit the steps being necessarily performed in the sequence marked in the accompanying drawings. An execution sequence, execution time, a quantity of execution times, and the like of the steps are not limited in embodiments of this application.

The following describes, by using examples, the methods provided in embodiments of this application with reference to the accompanying drawings. The following first describes an example of an establishment and update process of a mapping between a communication identifier of a battery system and a battery code of the battery system. It should be noted that mapping establishment may also be considered as mapping update.

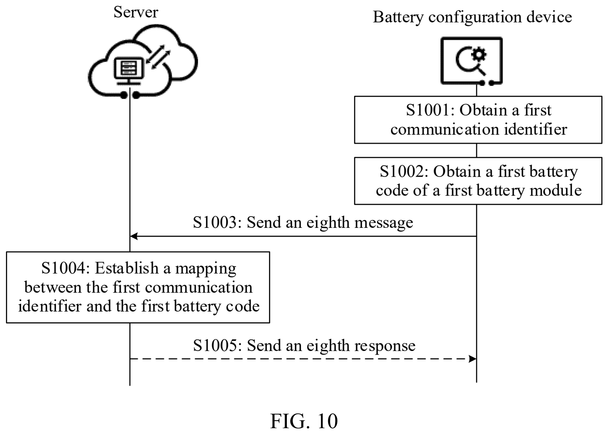

FIG. 10 is a schematic method flowchart of a battery management method according to an embodiment of this application. Optionally, the battery management method shown in FIG. 10 may be implemented based on the system shown in FIG. 5 and/or the system shown in FIG. 6. The battery management method shown in FIG. 10 may include one or more steps in step S1001 to step S1005, which are specifically as follows.

Step S1001: A battery configuration device obtains a first communication identifier.

The battery configuration device has a communication capability. In some scenarios, the battery configuration device may be an upper computer of a battery manufacturer.

The first communication identifier may be stored or set in a first communication module. In other words, the first communication identifier may also be referred to as the first communication identifier of the first communication module. The first communication identifier is used to uniquely identify a first battery system, and further, is used to uniquely identify the first battery system to which the first communication module belongs. As shown in FIG. 2, the battery system 20 includes the communication module 201, and the communication identifier of the communication module 201 may be used to uniquely identify the battery system 20.

In a possible implementation, "obtaining" includes "obtaining through communication". For example, the battery configuration device is connected to the first communication module (where the connection includes a wired connection and/or a wireless connection), and the battery configuration device may read the first communication identifier in the first communication module, or the first communication module may send the first communication identifier to the battery configuration device. For example, the upper computer in FIG. 7 may be considered as a battery configuration device, and the upper computer may establish a wireless communication connection to the battery system, to obtain the first communication identifier. For a wired communication manner, refer to FIG. 8.

In another possible implementation, "obtaining" includes being provided by another device or a user. For example, the first communication identifier may be provided for the battery configuration device by another device (for example, a production management device or a manufacturer of the communication module) or an organization (for example, a standard organization, a developer of a battery manufacturer, or an administrator), for example, in a user input manner or a copy manner.

Step S1002: The battery configuration device obtains a first battery code.

Specifically, the first battery code indicates production information of the first battery module. The production information includes one or more of a manufacturer, a product type, a specification, production time (including one or more of year, month, date, and the like), a serial number, traceability information, and the like. For example, the first battery code may be a code including X bits (X is an integer and X>0), where some bits indicate the manufacturer, some bits indicate the product type, and some bits indicate the production time. For example, when the battery module is a vehicle power battery, the battery code may be a 24-bit automotive power battery code. Refer to the foregoing descriptions.

The first battery module is included in the first battery system. FIG. 2 is used as an example. The first battery code may be the code of the battery module 202 in the battery system 20.

Optionally, the first battery code may be one code, or may be a plurality of codes.

Step S1003: The battery configuration device sends an eighth message to a server.

Correspondingly, the server may receive the eighth message from the battery configuration device. Optionally, communication between the battery configuration device and the server may be encrypted, that is, the battery configuration device and the server can securely communicate with each other. For example, the eighth message may be encrypted by using a key, or may be signed, or may be integrity-protected.

The eighth message includes the first communication identifier and the first battery code. For example, the communication identifier may be 10 (merely an example), and the first battery code may be VB10. The eighth message indicates to establish a mapping between the first communication identifier and the first battery code.

In a possible implementation, the eighth message includes operation indication information, and the operation indication information indicates a mapping establishment operation. Correspondingly, the server establishes the mapping between the first communication identifier and the first battery code based on the operation indication information, the first communication identifier, and the first battery code that are in the eighth message. For example, the operation indication information may be a field in the eighth message. When the field is set to a first value, it indicates that the mapping is established.

In another possible implementation, the eighth message is a message that meets a preset format, and the message format indicates to establish the mapping. For example, the eighth message is a message in an instruction form. As shown in Table 1, the eighth message includes an instruction in a form of "create (parameter 1, parameter 2)", and create (parameter 1, parameter 2) is used to establish a mapping between the parameter 1 and the parameter 2. Certainly, an instruction name, a quantity of parameters, a parameter name, and a parameter sequence are merely examples.

For ease of understanding, the following provides an example of interaction between the battery configuration device and the server.

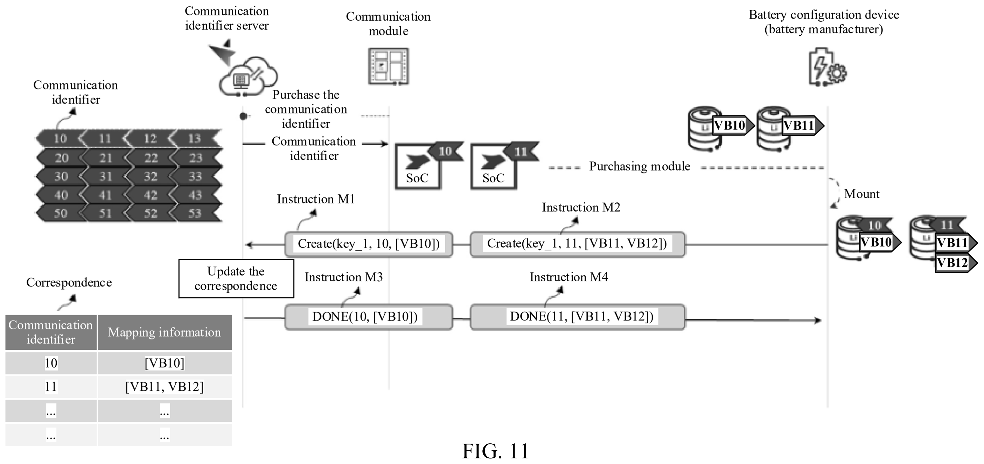

FIG. 11 is a diagram of an interaction scenario of a communication system according to an embodiment of this application. The battery configuration device may obtain the communication identifier (for example, 10) and a battery number (for example, VB10) of the first battery system. The battery configuration device sends an instruction M1 to a communication identifier server (an example of the server), where the instruction M1 is used to establish a mapping between the communication identifier 10 and the battery number VB10. For example, the instruction M1 is in a form of "Create(key_1, 10, [VB10])", where Create() indicates to establish the mapping, key_1 is a key (or a password), for example, an encryption key or an integrity protection key for communication between the battery configuration device and the server, 10 is the communication identifier of the battery system, and VB10 is a code of the battery system.

Similarly, the battery configuration device may also request, by using an instruction M2, to establish a mapping between a communication identifier 11 and battery numbers VB11 and VB12.

Optionally, keys carried in the instruction M1 and the instruction M2 may indicate that an identity of the battery configuration device is legal (or trusted), and may be used as security protection for communication.

Step S1004: The server establishes the mapping between the first communication identifier and the first battery code.

Optionally, the mapping may be represented by a correspondence. For example, the server determines the correspondence based on the first communication identifier and the first battery code, and the correspondence is referred to as a correspondence C1 for ease of differentiation. The correspondence C1 indicates the mapping between the first communication identifier and the first battery code.

As shown in FIG. 11, when the first communication identifier is 10 and the first battery code is VB 10, in the correspondence C 1, 10 may be used as a primary key, and mapping information of the primary key 10 includes VB10. Similarly, when the first communication identifier is 11 and the first battery codes are VB11 and VB12, in the correspondence C1, 11 may be used as a primary key, and mapping information of the primary key 11 includes VB11 and VB12.

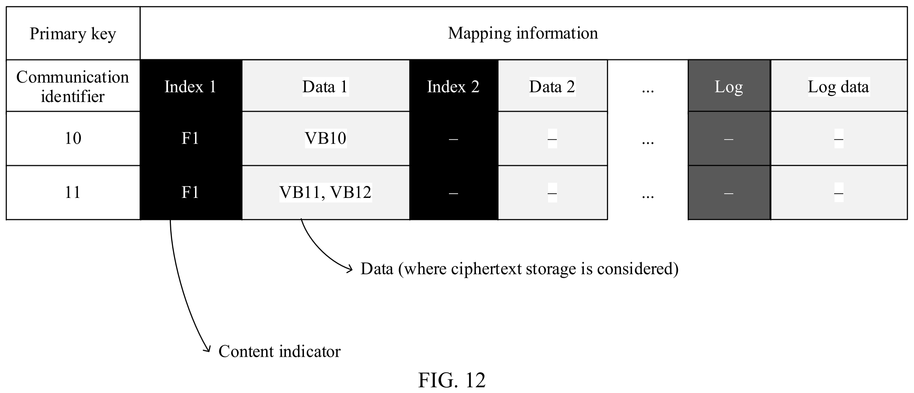

Further, the mapping information includes a content indicator and data. FIG. 12 is a diagram of a data structure of another correspondence according to an embodiment of this application. As shown in FIG. 12, the communication identifier 10 corresponds to a data item, a content indicator of the data item is F1, F1 indicates that data is a battery code (merely an example), and a value of the data is VB11.

Alternatively, data in the correspondence C1 may be a ciphertext, for example, a hash value. For example, the correspondence C1 may include the communication identifier 10, and mapping information of the communication identifier 10 includes a ciphertext of the battery code.

Optionally, the method shown in FIG. 10 further includes step S1005.

Step S1005: The server sends an eighth response to the battery configuration device.

Specifically, the server may return a response message to a device that sends a request. The response message may include indication information indicating whether a message from the device is successfully received, or indication information indicating whether an operation requested by the device is successfully performed.

For example, the response message may include the eighth response, and the eighth response may indicate whether the server successfully receives the eighth message. For example, the eighth response includes a status code, and the status code has different values, to indicate whether the server successfully receives the eighth message.

For another example, the eighth response indicates whether the server establishes the mapping between the first communication identifier and the first battery code. For example, the eighth message includes a Done instruction, indicating that the mapping between the first communication identifier and the first battery code has been established. For another example, the eighth message includes a Fault instruction, indicating that the mapping between the first communication identifier and the first battery code is not successfully established.

Optionally, the response message may indicate whether an operation is legal. Herein, "whether ... is legal" may indicate a result of a security check and/or a result of a permission check. Optionally, the security check may be implemented by using a key, a signature, a certificate, or the like, and the permission check may be implemented through an operation like authorization and/or authentication.

In a possible implementation, if a message sent by the battery configuration device to the server is encrypted, and the server can decrypt the message and obtain information in the message, it indicates that an operation requested by the battery configuration device is legal. Otherwise, the operation is illegal. In another possible implementation, if a message sent by the battery device is encrypted by using a key and is integrity-protected, and the server can decrypt the message and successfully verify integrity of the message, it indicates that an operation requested by the battery configuration device is legal. Otherwise, the operation is illegal.

In another possible implementation, the battery configuration device has mapping update permission, and may add, delete, or modify the mapping. When the battery configuration device sends a mapping update indication message, the server determines that the battery configuration device has the mapping update permission, and an operation of the battery configuration device is legal. On the contrary, if a device does not have the mapping permission, when the device sends a mapping update indication message to the server, the server may determine that an operation of the device is illegal.

As shown in FIG. 11, the communication identifier server may return a response to the battery configuration device to indicate whether the operation is successful and/or legal. For example, an instruction M3 in a form of "DONE(10, [VB10])" may indicate that the mapping between the communication identifier 10 and the battery number VB10 is successfully established. For another example, the server returns "DONE(11, [VB11, VB12])" to the battery configuration device, to notify the battery configuration device that the operation requested by the battery configuration device is legal and successful.

A communication identifier of a battery system may be included in a communication module. In a possible solution, a communication module manufacturer produces the communication module, and the communication module may be provided to a battery manufacturer. The battery manufacturer purchases the communication module from the communication module manufacturer, and mounts the communication module on a produced battery module. A battery number of the battery module is in a form of "VBxx", where "xx" may be replaced with digits, characters, or the like. A quantity of bits and an encoding manner are not limited herein. As shown in FIG. 11, the battery system obtained through mounting may include a battery system whose battery code is VB10 and communication identifier is 10, and a battery system whose battery codes are VB11 and VB12 and communication identifier is 11.

In some possible implementations, a communication code in the communication module may be purchased by the communication module manufacturer from a communication identifier server (or a corresponding organization). The communication identifier server provides the communication identifier to the communication module manufacturer, and the communication module manufacturer allocates the purchased communication identifier to the communication module (like a chip). As shown in FIG. 11, the communication identifier server includes a plurality of communication identifiers, for example, communication identifiers 10 to 53. Certainly, a value of the communication identifier herein is merely an example.

In the embodiment shown in FIG. 10, a relationship between the battery system and the battery module included in the battery system can be conveniently recorded by using the communication identifier of the battery system. For example, when the first battery system includes the first battery module, a relationship between the first battery system and the first battery module may be reflected by using the mapping between the first communication identifier and the first battery code, and a management operation procedure like manually recording a code of the first battery system or manual archiving is not required. This improves efficiency of managing the battery system, facilitates supervision of a use process of the battery system, and facilitates life cycle tracing of the battery system.

In some possible scenarios, the battery module included in the battery system may change. For example, the battery pack may include an electrochemical cell, and the battery manufacturer may replace the electrochemical cell in the battery pack, or may add or reduce the electrochemical cell in the battery pack. In this case, the communication apparatus may update the mapping relationship between the communication identifier of the battery system and the code of the battery module. The following still uses the example in which a communication apparatus is a battery configuration device for description.

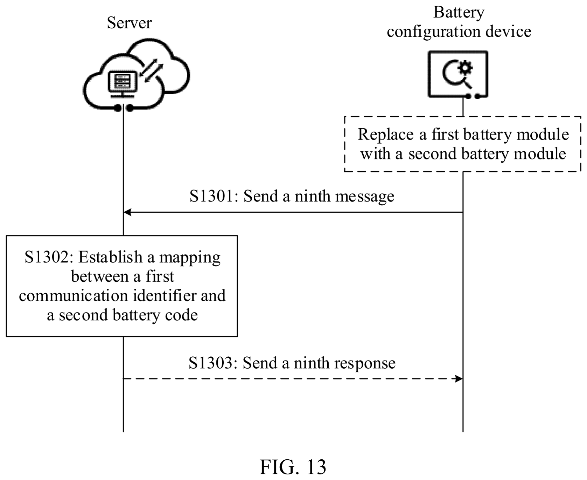

FIG. 13 is a schematic method flowchart of another battery management method according to an embodiment of this application. Optionally, the battery management method shown in FIG. 13 may be implemented based on the system shown in FIG. 5 and/or the system shown in FIG. 6. The battery management method shown in FIG. 13 may include one or more steps in step S1301 to step S1303, which are specifically as follows.

Step S1301: The battery configuration device sends a ninth message to a server.

The ninth message includes a first communication identifier and a second battery code. The first communication identifier is a communication identifier of a communication module of a first battery system, and the second battery code is a communication code of a second battery module of the first battery system.

The ninth message indicates to establish a mapping between the first communication identifier and the second battery code. Further, the ninth message is further used to update a mapping between the first communication identifier and the first battery code to the mapping between the first communication identifier and the second battery code.

In a possible implementation, the ninth message includes operation indication information, the operation indication information indicates a mapping update operation, and the server establishes the mapping between the first communication identifier and the second battery code based on the operation indication information, the first communication identifier, and the second battery code that are in the ninth message. For example, the operation indication information may be a field in the eighth message. When the field is set to a first value, it indicates that the mapping is updated. Optionally, the ninth message may further indicate to cancel a mapping between the first communication identifier and data whose content indicator is the same as that of the second battery code. For example, the second battery code may be different from the first battery code, and the ninth message indicates to cancel a mapping between the first communication identifier and a first communication code.

In another possible implementation, the ninth message is a message that meets a preset format, and the message format indicates to update the mapping. For example, the ninth message is a message in an instruction form. As shown in Table 1, the eighth message includes an instruction in a form of "update (parameter 1, parameter 2)", and create (parameter 1, parameter 2) is used to establish a mapping between the parameter 1 and the parameter 2.

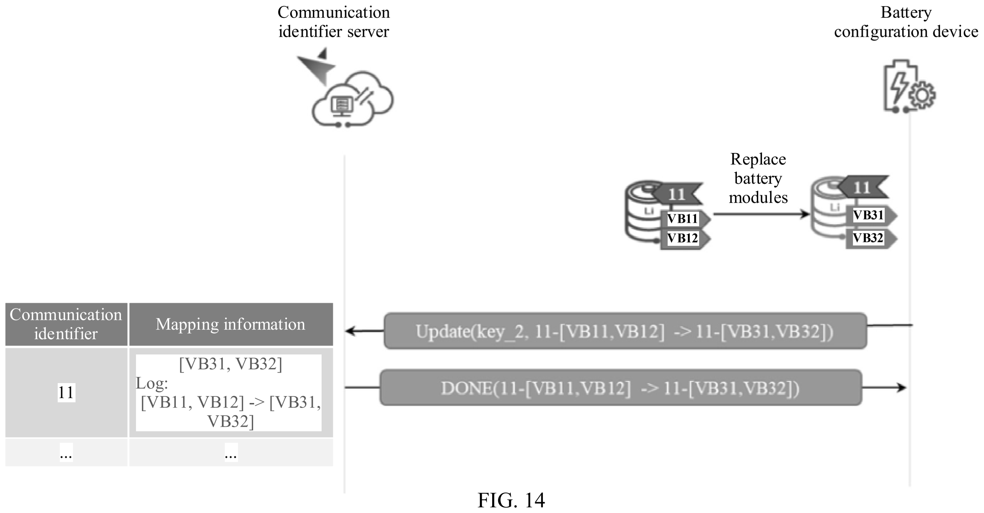

FIG. 14 is a diagram of an interaction scenario of another battery management method according to an embodiment of this application. The first battery system has a communication identifier of 11, and includes battery modules VB11 and VB12. In some scenarios, the battery modules included in the first battery system may be updated to VB31 and VB32. For example, if VB11 and VB12 in the first battery system are faulty, a battery manufacturer repairs the first battery system, and replaces VB11 and VB12 with VB31 and VB32. In this case, a mapping related to the first battery system also needs to be updated, to ensure mapping accuracy.

As shown in FIG. 14, the battery configuration apparatus may send the ninth message to a communication identifier server, where the ninth message is in a form of "Update(key_2, 11-[VB11, VB12] -> 11-[VB31, VB32])". Herein, Update() indicates mapping update, key_2 is a key (or password) for communication between the battery configuration device and the server, 11 is the communication identifier of the battery system, VB10 and VB12 are original battery codes of the battery system 11 (optional), and VB31 and VB31 are battery codes of battery modules of the battery system after the battery system 11 is updated.

Optionally, the method shown in FIG. 13 is performed when a battery module of the first battery system is updated from a first battery module to the second battery module.

Step S1302: The server establishes the mapping between the first communication identifier and the second battery code.

Optionally, the mapping between the first communication identifier and the second battery code is represented by a correspondence (which is referred to as a correspondence C2 for ease of differentiation). For example, the correspondence C2 includes the first communication identifier and mapping information of the first communication identifier. The mapping information of the first communication identifier includes the second battery code or a ciphertext of the second battery code.

In a possible implementation, the first server may update a battery code to which the first communication identifier is mapped, to establish the mapping between the first communication identifier and the second battery code. For example, the correspondence C1 is updated to obtain the correspondence C2. As shown in FIG. 14, when the first communication identifier is 11, information previously mapped to the communication identifier 11 is VB11 and VB12 (namely, the correspondence C1), and the server may update VB11 and VB12 to VB31 and VB31. Because VB11 and VB12 have been replaced, the mapping between the VB11 and VB12 and the communication identifier 11 is also canceled accordingly.

In another possible implementation, the first server may establish a new correspondence (namely, the correspondence C2) at a new location. The original correspondence (for example, the correspondence C1) may be deleted, or may be retained. Further, when the original correspondence is retained, the information mapped to the communication identifier is subject to latest mapping information.

In some possible implementations, the server may further generate a log (log), where the log corresponds to the communication identifier, to indicate historical information mapped to the communication identifier. As shown in FIG. 14, after the information mapped to the communication identifier 11 changes, the log generated by the server may include information (namely, historical information) previously mapped to the communication identifier 11. Because VB11 and VB12 are previously mapped to the communication identifier 11, the log includes VB11 and VB12.

Optionally, the log further includes information indicating a content change process. For example, the log may be "[VB11, VB12] -> [VB31, VB32]", indicating that the information mapped to the communication identifier 11 is updated from [VB11, VB12] to [VB31, VB32].

Optionally, the method shown in FIG. 13 further includes step S1303.

Step S1303: The server sends a ninth response to the battery configuration device.

Specifically, a response message may include the ninth response, and the ninth response indicates whether the server receives the result, or whether an operation is legal and/or successful. For explanation of the legality, refer to step S1005.

For example, the ninth response may indicate whether the server successfully receives the ninth message.

For another example, the ninth response indicates whether the operation requested by the battery configuration device is legal and/or successful.

As shown in FIG. 14, the ninth response may be "DONE(11-[VB11, VB12] -> 11-[VB31, VB32])", to notify the battery configuration device that the operation requested by the battery configuration device is legal and successful.

In the embodiment shown in FIG. 13, a relationship between the battery system and the battery module included in the battery system can be conveniently recorded by using the communication identifier, a mapping relationship may be updated when the battery system updates the battery module, and a management operation procedure like manually recording a code of the first battery system or manual archiving is not required. This improves efficiency of managing the battery system, facilitates supervision of the use process of the battery system, and facilitates life cycle tracing of the battery system.

In a possible implementation, the battery module included in the battery system needs to be scrapped in some scenarios. For example, performance of the battery module may deteriorate over time, and the battery module may be scrapped when the performance deterioration reaches a condition. Alternatively, a package of the battery module is damaged, and the battery module needs to be scrapped. When the battery module in the battery system is scrapped, the mapping related to the battery system also needs to be updated.

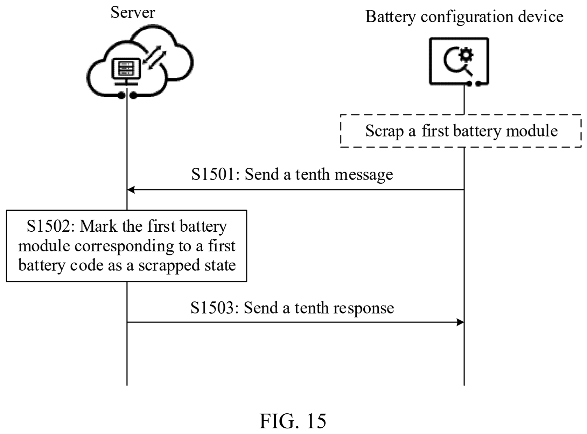

FIG. 15 is a schematic method flowchart of another battery management method according to an embodiment of this application. Optionally, the battery management method shown in FIG. 15 may be implemented based on the system shown in FIG. 5 and/or the system shown in FIG. 6. The battery management method shown in FIG. 15 may include one or more steps in step S1501 to step S1503, which are specifically as follows.

Step S1501: A battery configuration device sends a tenth message to a server.

Correspondingly, the server receives the tenth message. Optionally, communication between the battery configuration device and the server may be encrypted, that is, the battery configuration device and the server can securely communicate with each other. For example, the tenth message may be encrypted by using a key, or may be signed, or may be integrity-protected.

Specifically, the tenth message includes a first battery code. The first battery code is a code of a first battery module in a first battery system. The first battery module is a scrapped battery module. Further, the tenth message may further include a first communication identifier, and the first communication identifier is used to uniquely identify the first battery system.

The tenth message indicates to scrap the first battery module. In a possible implementation, the tenth message includes operation indication information, and the operation indication information indicates a mapping update operation or a scrapping operation. In another possible implementation, the tenth message is a message that meets a preset format, and the message format indicates to perform the mapping update operation or the scrapping operation.

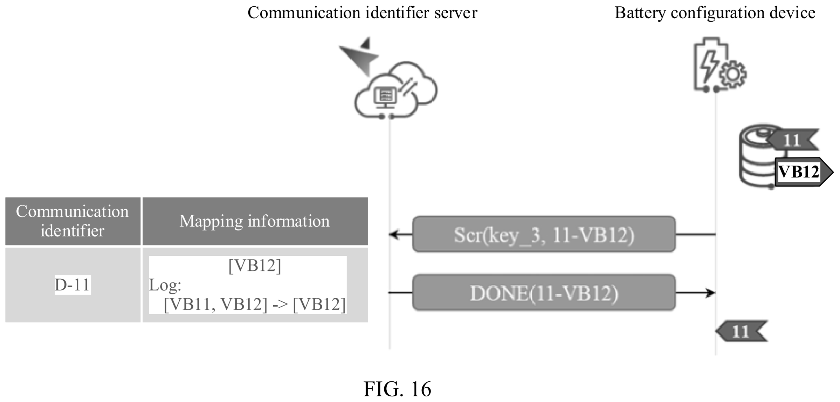

FIG. 16 is a diagram of an interaction scenario of another battery management method according to an embodiment of this application. The first battery system has a communication identifier of 11, and includes a battery module VB12. VB12 is damaged and cannot be used anymore. Therefore, the battery module is scrapped. As shown in FIG. 16, the battery configuration device may send the tenth message to a communication identifier server, where the tenth message is in a form of "Scr(key_3, 11-VB12)". Herein, Scr() indicates scrapping (or deletion), key_2 is a key (or password) for communication between the battery configuration device and the server, 11 is the communication identifier of the battery system, and VB12 is the code of the battery module that needs to be scrapped in the battery system.

Step S1502: The server marks the first battery module corresponding to the first battery code as a scrapped state.

Optionally, marking as the scrapped state may be implemented in the following manners.

Manner 1: The server may generate a label for the first battery code, where the label indicates that the battery code has been deleted.

Manner 2: The server deletes the first battery code from mapping information of the communication identifier of the first battery system. Further, when the first communication identifier is mapped to a plurality of battery codes, if the first battery code is a part of the battery codes, the server may delete the first battery code from the mapping information of the communication identifier of the first battery system. For example, the communication identifier of the first battery is 11, and the communication identifier 11 is mapped to VB11 and VB12. If VB12 needs to be scrapped, the server may update [VB11, VB12] mapped to the communication identifier 11 to VB11. Alternatively, the server may establish a new mapping. In the new mapping, the mapping information of the first communication identifier does not include the first battery code.

Manner 3: The server marks the first communication identifier as a scrapped state. Further, when the first battery system includes only the first battery module, the server may mark the first communication identifier as deleted. As shown in FIG. 16, the battery system having the communication identifier 11 includes only the battery module VB11. If the battery module is scrapped, the server updates the communication identifier 11 to D-11, indicating that the communication identifier 11 is in a scrapped state.

The foregoing manners are merely an example. In a specific implementation process, the server may alternatively scrap the first battery module in another manner.

Optionally, the method shown in FIG. 15 further includes step S1503.

Step S1503: The server sends a tenth response to the battery configuration device.

Specifically, the tenth response indicates whether the server receives a request message (for example, the tenth message), or whether an operation is legal and/or successful. As shown in FIG. 16, the tenth response may be "DONE(11-VB12)", to notify the battery configuration device that the operation requested by the battery configuration device is legal and successful. For explanation of the legality, refer to step S1005.

Alternatively, an execution body of the method shown in FIG. 15 may be replaced with another device, for example, a battery replacement station, a terminal, or a cascade device.

In the embodiment shown in FIG. 15, a relationship between the battery system and the battery module included in the battery system can be conveniently recorded by using the communication identifier, and the battery module in the battery system can be conveniently scrapped and the mapping relationship can be conveniently updated, without a need of a management operation procedure like manually modifying or tearing down the code of the first battery system or manual archiving. This improves efficiency of managing the battery system, facilitates supervision of the use process of the battery system, and facilitates life cycle tracing of the battery system.

The following describes an example of an establishment and update process of a mapping between a communication identifier of a battery system and a terminal that uses the battery system.

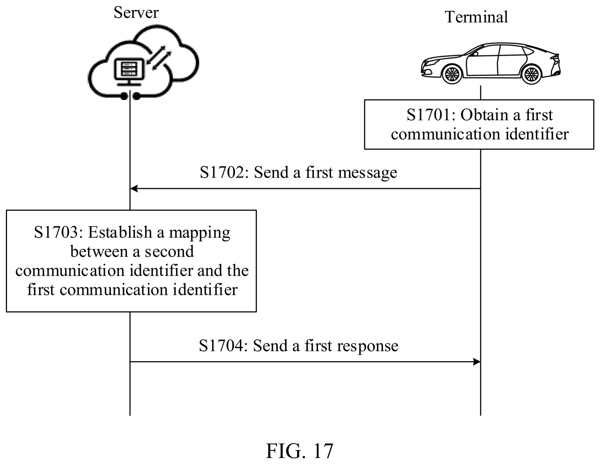

FIG. 17 is a schematic method flowchart of another battery management method according to an embodiment of this application. Optionally, the battery management method shown in FIG. 17 may be implemented based on the system shown in FIG. 5 and/or the system shown in FIG. 6. The battery management method shown in FIG. 17 may include one or more steps in step S1701 to step S1704, which are specifically as follows.

Step S1701: A terminal obtains a first communication identifier.

The terminal has a communication capability. In some scenarios, the terminal may be an independent device like a vehicle or a battery replacement station, or may be a component or a module in an independent device, for example, a telematics box T-box in a vehicle.

The first communication identifier is used to uniquely identify a first battery system.

Optionally, "obtaining" includes "obtaining through communication". Alternatively, "obtaining" includes being provided by another device. Alternatively, the obtaining may include an input of a user (including an administrator, an assembler, or the like).

For related descriptions, refer to step S1001.

Step S1702: The terminal sends a first message to a server.

Correspondingly, the server may receive the first message from the terminal. Optionally, secure communication between the terminal and the server is implemented by using a key, and the key may be a password, a session key, or the like. For example, the first message is encrypted, integrity-protected, and/or signed by using the key.

Specifically, the first message may include a second communication identifier and the first communication identifier. The second communication identifier is a communication identifier of the terminal. Optionally, the first message may further include a device identifier of the terminal, for example, a serial number or a factory number of the terminal. When the terminal is a vehicle, the device identifier of the terminal may further include a VIN number of the vehicle.

The first message indicates to establish a mapping between the second communication identifier and the first communication identifier. In a possible implementation, the first message includes operation indication information, and the operation indication information indicates a mapping establishment operation or a mapping update operation. In another possible implementation, the first message is a message that meets a preset format, and the message format indicates that the first message is used for mapping establishment or mapping update.

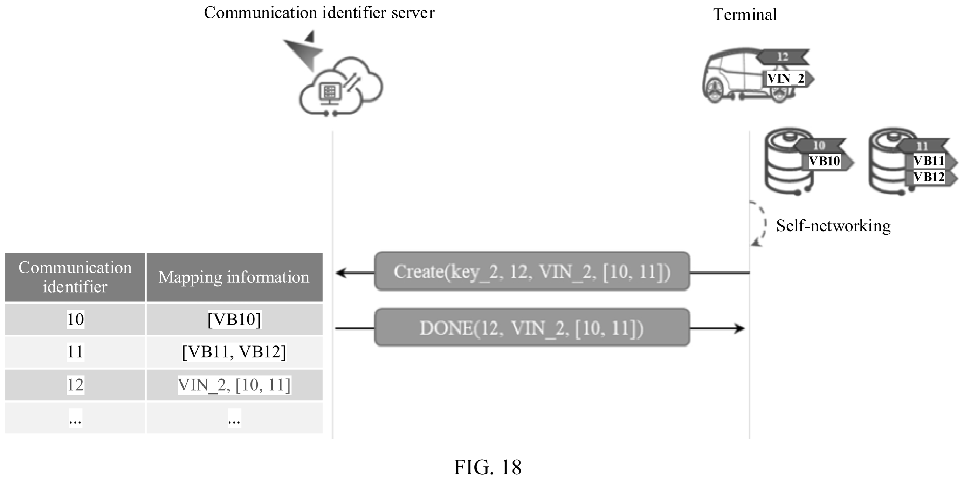

FIG. 18 is a diagram of an interaction scenario of a communication system according to an embodiment of this application. The communication system includes the terminal and a communication identifier server. The terminal includes two battery systems whose communication identifiers are respectively 10 and 11. The terminal may obtain the communication identifier of the battery system. For example, the battery system is mounted in the vehicle, and the battery system may be connected to and networked with another device in the vehicle, so that the vehicle obtains the communication identifier of the mounted battery system. As shown in FIG. 18, the terminal sends the first message to the server, where the first message is in a form of "create(key_2, 12, VIN_2, [10, 11])". Herein, create() or create indicates to establish a mapping, 12 is the communication identifier of the terminal, key2 is a key (optional), VIN2 is the device identifier of the terminal, and 10 and 11 are communication identifiers of two battery systems.

Certainly, "create(key_2, 12, VIN_2, [10, 11])" is an example message shown to describe information that may be used in a process of generating the first message. In a specific implementation process, the first message may alternatively be a message in another format.

Step S1703: The server establishes the mapping between the second communication identifier and the first communication identifier.

Optionally, the mapping between the second communication identifier and the first communication identifier may be represented by a correspondence (which is referred to as a correspondence C3 for ease of differentiation). For example, the correspondence C3 includes the second communication identifier (or a ciphertext of the second communication identifier) and mapping information of the second communication identifier. The mapping information of the second communication identifier includes the first communication identifier or a ciphertext of the first communication identifier.

For example, the correspondence C3 is shown on the left side of FIG. 18, where the communication identifier 12 corresponds to 10 and 11. In other words, information mapped to the communication identifier 12 includes the communication identifiers 10 and 11.

Further, the correspondence C3 may further represent a correspondence between the second communication identifier and the terminal device, that is, the mapping information of the communication identifier 12 further includes VIN_2.

In a possible implementation, data in the correspondence may be ciphertext, for example, a hash value. For example, the correspondence C3 may include the communication identifier 12, and the mapping information of the communication identifier 12 includes a ciphertext of VIN_2.

Optionally, the method shown in FIG. 17 further includes step S1704.

Step S1704: The server sends a first response to the terminal.

Specifically, for example, the first response may indicate whether the server successfully receives the first message.

For another example, the first response indicates whether an operation requested by the terminal is legal and/or successful. As shown in FIG. 16, the first response may be "DONE(11-VB12)", to notify the battery configuration device that the operation requested by the battery configuration device is legal and successful. For explanation of the legality, refer to step S1005.

In this embodiment of this application, the communication identifier can implement convenient identification of the device. As an identifier in an electronic form, the communication identifier is unlikely to wear and has high flexibility and scalability. For example, the first communication identifier may be used to uniquely identify the first battery system, and the second communication identifier may be used to uniquely identify a terminal (or separately identify several terminals).

Further, a relationship between the battery system and the terminal may be conveniently recorded by using the communication identifier. The server may maintain the mapping of the communication identifier. When the first battery system belongs to the terminal, the server establishes a correspondence between the communication identifier of the terminal and the communication identifier of the first battery system based on the received information. The correspondence may reflect a relationship between the first battery system and the terminal, and records an ownership of the first battery system. This implements supervision of a use process of the battery system, and facilitates life cycle tracing of the battery system.

In some possible scenarios, the communication identifier of the terminal may be further mapped to an identity identifier of a user of the terminal. The identity identifier indicates an identity of the user, and the identity identifier includes but is not limited to one or more of a mobile phone number, an email address, an identity card number, a user ID, or the like.

In a possible implementation, the terminal may send a third message to the server, where the third message includes a first identity identifier of a first user of the terminal. Correspondingly, the server receives the third message from the terminal, and establishes a mapping between the communication identifier of the terminal and the first identity identifier.

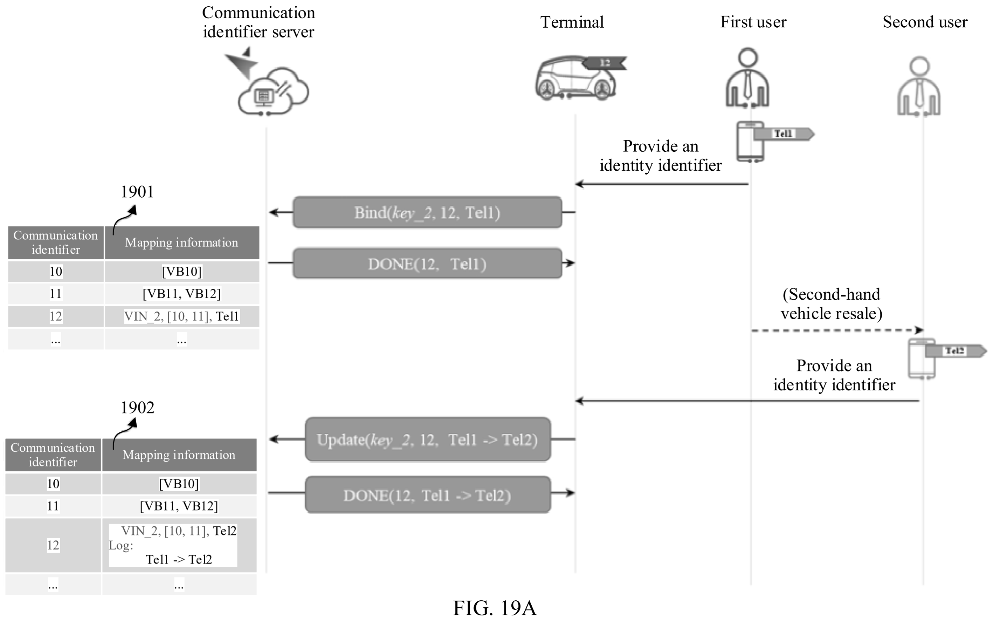

FIG. 19A is a diagram of an interaction scenario of a communication system according to an embodiment of this application. The communication system includes the terminal and the communication identifier server, and the user of the terminal may be the first user. The terminal may send the third message to the server, where the third message is in a form of "Bind(key_2, 12, Tel1)". Herein, Bind() or Bind indicates to establish a mapping, key_2 is a key (optional), 12 is the communication identifier of the terminal, and Tel1 is the identity identifier of the first user. Correspondingly, the server may receive the third message, and establish a correspondence (which is referred to as a correspondence C9 for ease of differentiation). The correspondence C9 indicates the mapping between the communication identifier of the terminal and the identity identifier of the first user. For example, the correspondence C9 is shown in an area 1901, and the mapping information of the communication identifier 12 includes Tel1.

Optionally, the server may return a response message (referred to as a third response for ease of differentiation) to the terminal, to indicate whether the request message is successfully received and/or whether the operation is legal and/or whether the operation is successful. As shown in FIG. 19A, the third response is in a form of "DONE(12, Tel1)", to notify the terminal that the operation is legal and successful.

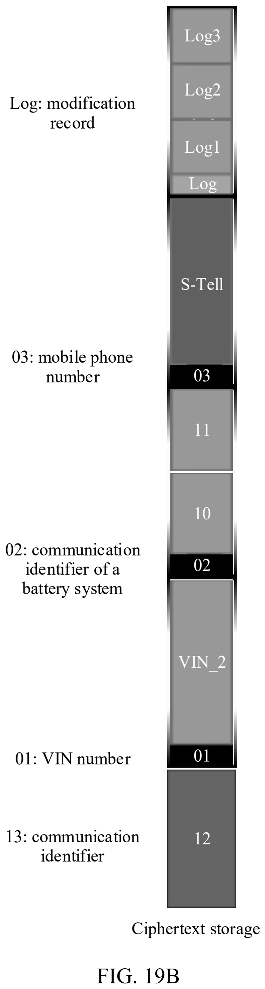

Optionally, information in the correspondence may be stored in a form of a ciphertext. FIG. 19B is a diagram of a data structure of another correspondence according to an embodiment of this application. In the correspondence shown in FIG. 19B, the mobile phone number Tel1 may be stored by using a ciphertext, that is, the device of the communication identifier 12 corresponds to "S-Tel1", and S-Tel1 is the ciphertext of Tel1.

In addition, the mapping information of the communication identifier 12 includes a plurality of data items, and each data item includes a content indicator and data. For example, a content indicator 01 indicates that the data item is a VIN number. In other words, a VIN number corresponding to the device of the communication identifier 12 is "VIN_2" (merely an example). For another example, a content indicator 02 indicates that the data item is a communication identifier of a battery system. In other words, communication identifiers of battery systems corresponding to the device of the communication identifier 12 are "10, 11" (merely an example). Other data items are deduced by analogy. For details, refer to FIG. 19B.

In some possible scenarios, the user of the terminal may be changed, or the identity identifier of the user of the terminal may be updated. The terminal may request the server to update the mapping between the communication identifier of the terminal and the identity identifier of the user. As shown in FIG. 19A, after a second-hand vehicle resale process, the user of the terminal changes from the first user to a second user, and a mapping between the communication identifier of the terminal and identity information of the user also needs to be correspondingly updated, to ensure mapping accuracy.

In a possible implementation, the terminal may send a fourth message to the server, where the fourth message includes the second communication identifier and a second identity identifier, and optionally includes the first identity identifier. Further, the second identity identifier may be an identity identifier of the second user, and the second identity identifier is different from the first identity identifier.

As shown in FIG. 19A, the fourth message is in a form of "Update(key_2, 12, Tel1 -> Tel2)". Herein, Update() or Update indicates to establish a mapping, key_2 is a key (optional), 12 is the communication identifier of the terminal, Tel1 is the first identity identifier, and Tel2 is the second identity identifier. Correspondingly, the server may receive the fourth message, and establish a correspondence (which is referred to as a correspondence C10 for ease of differentiation). For example, the correspondence C10 is shown in an area 1902, and the mapping information of the communication identifier 12 includes Tel2.

Optionally, the server may return a response message (referred to as a fourth response for ease of differentiation) to the terminal, to indicate whether the request message is successfully received and/or whether the operation is legal and/or whether the operation is successful. As shown in FIG. 19A, the fourth response is in a form of "DONE(12, Tel2)", to notify the terminal that the operation is legal and successful.

In another possible implementation, the server may generate a log, where the log corresponds to the communication identifier, to indicate historical information mapped to the communication identifier. As shown in the area 1902 in FIG. 19A, after the mapping information of the communication identifier 12 changes, the log generated by the server may include content (namely, historical information) previously mapped to the communication identifier 12. Specifically, because the content previously mapped to the communication identifier 12 includes Tell, the log includes Tell.

Optionally, the log further includes information indicating a content change process. For example, in the area 1902, the log may be "Tel1 -> Tel2", indicating that the information mapped to the communication identifier 12 is updated from Tel1 to Tel2.

In some possible scenarios, the communication apparatus may check accuracy of information about the battery system included in the communication apparatus. The following uses the terminal as an example for description.

In a possible solution, the terminal may send a query message to the server, where the query message includes information about the first battery system. Correspondingly, the server receives the query message from the terminal, determines whether the information about the first battery system is correct, and feeds back a query result to the terminal. Optionally, the query message may further include the communication identifier of the terminal.

The query result may indicate correctness of the information about the first battery system. For example, the query result may be a field. When a value of the field is a second value, it indicates that the information about the first battery system is correct. When a value of the field is a third value, it indicates that the information about the first battery system is incorrect. For another example, the query result may include correct information about the first battery system. If the correct information about the first battery system is consistent with the information about the first battery system obtained by the terminal, the information about the first battery system is correct. Otherwise, the information about the first battery system is incorrect. For another example, the information about the first battery system may include incorrect information. For example, the query result may include a battery code in the information about the first battery system, to indicate that the battery code is incorrect.

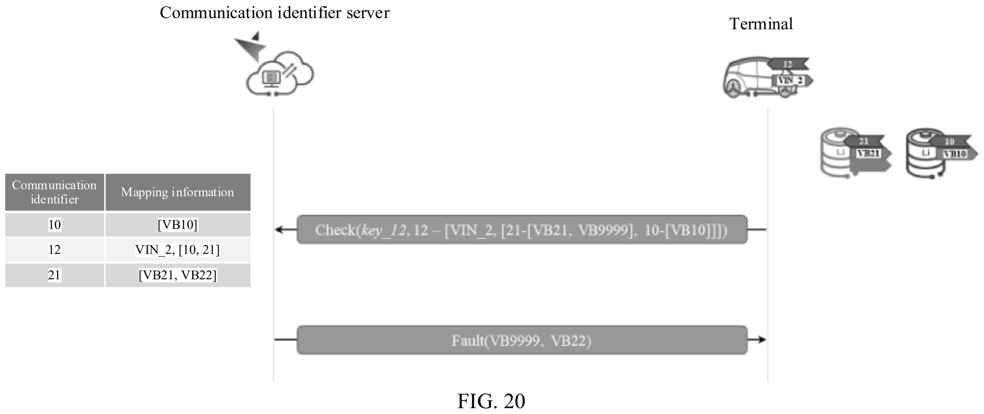

FIG. 20 is a diagram of an interaction scenario of a communication system according to an embodiment of this application. The communication system includes the terminal and the communication identifier server. The terminal includes two battery systems whose communication identifiers are respectively 21 and 10.

The terminal may obtain information about a battery system, for example, a communication identifier (namely, 21 or 10) of the battery system, or a battery code (for example, VB21, VB9999, or VB10) of a battery module of the battery system. The terminal may send a query message to the server, where the query message includes the information about the battery system. For example, a query message is in a form of "Check(key_12, 12-[VIN_2, [21-[VB21, VB9999], 10-[VB10]]])".

Correspondingly, the server may receive the query message, and feed back a query result to the terminal. As shown in FIG. 20, in the correspondence, battery codes to which the communication identifier 12 is mapped are VB21 and VB22, which are inconsistent with a code of a battery module included in the battery system 21 in the vehicle. Therefore, the query result indicates that the information about the first battery system is incorrect.

As shown in FIG. 20, a query result is in a form of "Fault(VB9999, VB22)", where Fault() or Fault indicates that the information about the first battery system is incorrect, and VB9999 and VB22 are incorrect information.

It should be noted that the foregoing describes an information query process by using an example in which the terminal is a vehicle. In a specific implementation process, the vehicle may be replaced with another device, for example, a battery replacement station, a battery configuration device, a cascade configuration device, or a cascade device.

In some possible scenarios, in a use process of the battery system, a device to which the battery system belongs may change. In other words, the battery device may be transferred between a plurality of devices. For example, the first terminal may remove the battery system, and transfer the battery system to the second terminal for further use. For another example, after the battery system is out of power, the first terminal may replace the battery system, and connect the battery system to a battery replacement station for charging.

The following uses the first terminal and the second terminal as an example to describe an establishment and update process of a mapping when an ownership of a battery system changes.

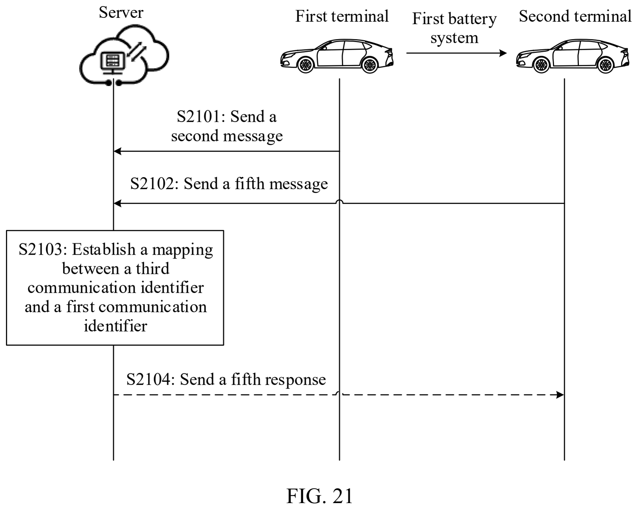

FIG. 21 is a schematic method flowchart of another battery management method according to an embodiment of this application. Optionally, the battery management method shown in FIG. 21 may be implemented based on the system shown in FIG. 5 or the system shown in FIG. 6. The battery management method shown in FIG. 21 may include one or more steps in step S2101 to step S2104, which are specifically as follows.

Step S2101: The first terminal sends a second message to a server.

Correspondingly, the server receives the second message from the first terminal. Optionally, secure communication between the first terminal and the server is implemented by using a key. For example, the second message is encrypted, integrity-protected, and/or signed by using the key.

The second message includes a first communication identifier and a third communication identifier. The first communication identifier is used to uniquely identify a first battery system, and the third communication identifier is used to uniquely identify a second terminal. The second terminal may be a terminal to which the first battery system currently belongs. In other words, the first battery system currently belongs to the second terminal.

Further, the second message further includes a second communication identifier, and the second communication identifier is used to uniquely identify a first terminal. The first terminal may be a terminal to which the first battery system originally belongs. In other words, an ownership of the first battery system is updated from the first terminal to the second terminal.

The second message indicates to establish a mapping between the third communication identifier and the first communication identifier. Further, the second message indicates to update a mapping between the second communication identifier and the first communication identifier to the mapping between the third communication identifier and the first communication identifier.

In a possible implementation, the second message includes operation indication information, and the operation indication information indicates a mapping update operation or a mapping establishment operation. In another possible implementation, the second message is a message that meets a preset format, and the message format indicates a mapping update operation or a mapping establishment operation.

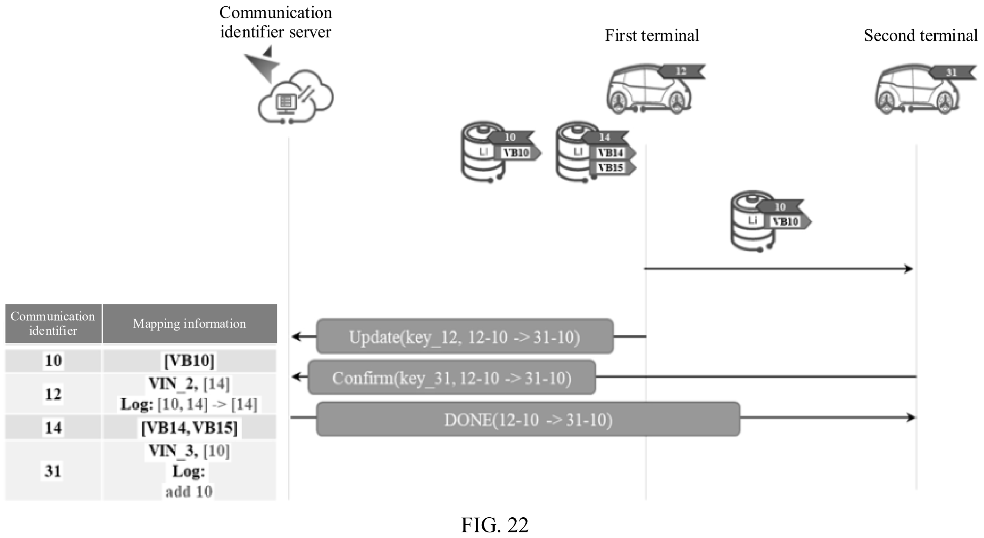

FIG. 22 is a diagram of an interaction scenario of another battery management method according to an embodiment of this application. The first terminal (a vehicle 12) outputs the first battery system of the first terminal to the second terminal (a vehicle 31). In this case, a mapping related to the first battery system also needs to be updated, to ensure mapping accuracy. This scenario is usually a road rescue scenario, a temporary power supply scenario, or the like.

As shown in FIG. 22, the second message is in a form of "Update(key_12, 12-10 -> 31-10)". Herein, Update() or Update indicates mapping establishment and/or mapping update, key_12 is a key (or password) for communication between the first terminal and the server, 12 is the communication identifier of the first terminal, 10 is the communication identifier of the transferred battery system, and 31 is the communication identifier of the second terminal.

Step S2102: The second terminal sends a fifth message.

Correspondingly, the server receives the fifth message from the second terminal. Optionally, secure communication between the first terminal and the server is implemented by using a key. For example, the fifth message is encrypted, integrity-protected, and/or signed by using the key.

Specifically, the fifth message includes the third communication identifier and the first communication identifier, and optionally includes the second communication identifier.

The fifth message indicates to confirm establishment of the mapping between the third communication identifier and the first communication identifier. Further, the fifth message is used to confirm that the mapping between the second communication identifier and the first communication identifier is updated to the mapping between the third communication identifier and the first communication identifier. Optionally, an indication is performed by carrying operation indication information or by using a message format.

As shown in FIG. 22, the fifth message is in a form of "Confirm(key_31, 12-10 -> 31-10)". Herein, Confirm() or Confirm indicates to confirm an operation, key_31 is a key (or password) for communication between the second terminal and the server, 12 is the communication identifier of the first terminal, 10 is the communication identifier of the transferred battery system, and 31 is the communication identifier of the second terminal.

Step S2103: The server establishes the mapping between the third communication identifier and the first communication identifier.

Optionally, the mapping between the third communication identifier and the first communication identifier may be represented by a correspondence (referred to as a correspondence C4 for ease of description). For example, the correspondence C4 includes the third communication identifier and mapping information of the third communication identifier. Further, the mapping information of the third communication identifier includes the first communication identifier or a ciphertext of the first communication identifier.

In a possible implementation, as shown in FIG. 22, when the first communication identifier is 10 and the third communication identifier is 31, the correspondence C4 includes the communication identifier 31 and mapping information of the communication identifier 31, and the information about the communication 31 includes the communication identifier 10. The correspondence C4 represents a mapping between the communication identifier 31 and the communication identifier 10.

Optionally, when the mapping between the third communication identifier and the first communication identifier is established, if the first communication identifier previously corresponds to another communication identifier (for example, the second communication identifier), the server may delete the mapping between the second communication identifier and the first communication identifier.

Alternatively, optionally, the server updates the mapping between the second communication identifier and the first communication identifier to the mapping between the third communication identifier and the first communication identifier. As shown in FIG. 22, when the first communication identifier is 10 and the second communication identifier is 12, the information mapped to the communication identifier 12 includes the communication identifier 10 (namely, the mapping between the second communication identifier and the first communication identifier), and the server may update [10, 14] to [14].

Optionally, an update operation and/or historical information of the correspondence may be recorded in a log. As shown in FIG. 22, a log corresponding to the communication identifier 12 includes "[10, 14] -> [10]". For another example, a log corresponding to the communication identifier 31 includes "add 10", indicating that mapping information is added.

Optionally, the method shown in FIG. 21 further includes step S2104.

Step S2104: The server sends a fifth response to the second terminal.

Specifically, the fifth response indicates whether the server receives a request message (for example, the fifth message), or whether an operation is legal and/or successful. As shown in FIG. 22, the fifth response may be "DONE(12-10 -> 31-10)", to notify the second terminal that the operation requested by the second terminal is legal and successful. For explanation of the legality, refer to step S1005.

In a possible implementation, the server may further send a second response to the first terminal. The second response indicates whether the server receives a request message (for example, the second message), or whether an operation is legal and/or successful. For example, the second response may be "DONE(12-10 -> 31-10)", to notify the first terminal that the operation requested by the first terminal is legal and successful.

In the embodiment shown in FIG. 21, a relationship between the battery system and the terminal can be conveniently recorded by using the communication identifier of the battery system and the communication identifier of the terminal. When an ownership of the battery system changes, a relationship between the first battery system, the first terminal, and the second terminal may be reflected by using a change of the correspondence related to the communication identifier of the battery system, and a management operation procedure like manually recording a code of the first battery system or manual archiving is not required. This improves efficiency of managing the battery system, facilitates supervision of a use process of the battery system, and facilitates life cycle tracing of the battery system.

In some possible scenarios, when the terminal is faulty, a battery may be replaced to a new terminal. Optionally, when the battery system is changed from the faulty original terminal to the new terminal, a user identifier corresponding to the new terminal, the communication identifier of the battery system, and the like may be consistent with those of the original terminal. Therefore, content mapped to the communication identifier of the original terminal may be transferred to the communication identifier of the new terminal, to facilitate recording of a use process of the battery system.

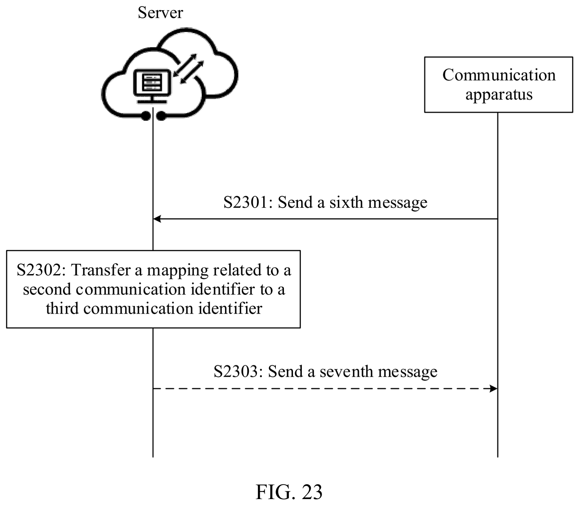

FIG. 23 is a schematic method flowchart of another battery management method according to an embodiment of this application. Optionally, the battery management method shown in FIG. 23 may be implemented based on the system shown in FIG. 5 or the system shown in FIG. 6. The battery management method shown in FIG. 23 may include one or more steps in step S2301 to step S2303, which are specifically as follows.

Step S2301: A communication apparatus sends a sixth message to a server.

Correspondingly, the server receives the sixth message. Optionally, secure communication between the communication apparatus and the server is implemented by using a key. For example, the sixth message is encrypted, integrity-protected, and/or signed by using the key.

Specifically, the communication apparatus is an apparatus having a communication capability, and is configured to update a mapping related to a first terminal, a second terminal, and a first battery system. The first terminal includes the first battery system, and the first battery system of the first terminal may be provided for the second terminal. The communication apparatus may be an upper computer, for example, a device like a battery configuration device, a terminal (for example, the first terminal or the second terminal), or a battery replacement station, or a module in the foregoing device.

The sixth message includes a second communication identifier and a third communication identifier, and the third communication identifier is used to uniquely identify the second terminal. The sixth message indicates to transfer a mapping related to the second communication identifier to the third communication identifier. Optionally, an indication is performed by carrying operation indication information or by using a message format.

In a possible implementation, the sixth message further includes a device identifier of the second terminal, and optionally, further includes a device identifier of the first terminal. The sixth message indicates to update a device identifier in information mapped to the third communication identifier to the device identifier of the second terminal.

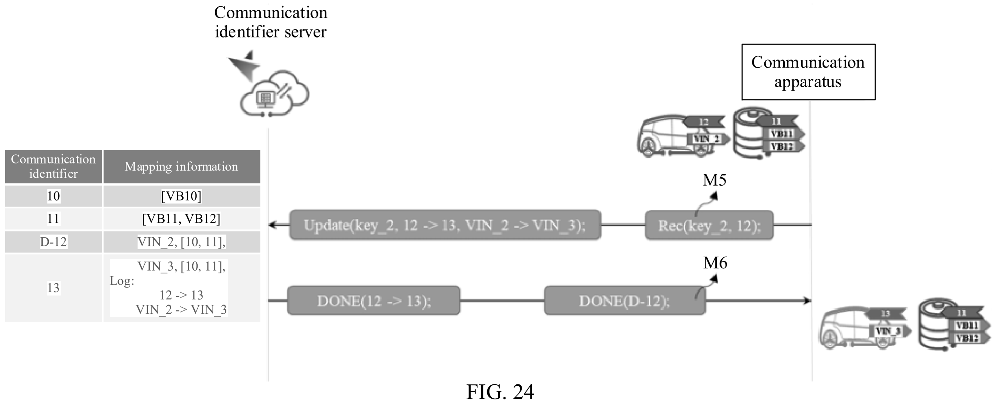

FIG. 24 is a diagram of an interaction scenario of a communication system according to an embodiment of this application. The communication system includes the communication apparatus and a communication identifier server. As shown in FIG. 24, the sixth message is in a form of "Update(key_2, 12 -> 13, VIN_2 -> VIN_3)". Herein, Update() indicates mapping update, 12 is the second communication identifier, 13 is the third communication identifier, VIN_2 is the device identifier of the first terminal, VIN_3 is the device identifier of the second terminal, and 12 -> 13 indicates to transfer the mapping related to the second communication identifier to the third communication identifier, and VIN_2 -> VIN_3 indicates to update VIN_2 to VIN_3.

Step S2302: The server transfers the mapping related to the second communication identifier to the third communication identifier.

In a possible implementation, mapping information of the second communication identifier is second information. The server may determine the information mapped to the third communication identifier, and the information mapped to the third communication identifier is the same as the second information.

For example, the server may establish a mapping between the third communication identifier and first information, where the first information is the mapping information of the second communication identifier. Optionally, the mapping between the third communication identifier and the first information may be represented by a correspondence (which is referred to as a correspondence C5 for ease of differentiation). The correspondence C5 includes the third communication identifier and the mapping information of the third communication identifier, and the mapping information of the third communication identifier includes the first information.

As shown in FIG. 24, information mapped to the communication identifier 12 includes a device identifier VIN_2, and communication identifiers 10 and 11. The server establishes the correspondence C5, where the correspondence C5 includes the communication identifier 12 and the information mapped to the communication identifier 12. As shown in FIG. 24, information mapped to the communication identifier 13 is also the device identifier VIN_2 and the communication identifiers 10 and 11.

Optionally, the server may further update a device identifier mapped to the communication identifier, for example, replace VIN_2 with VIN_3.

Optionally, an update operation on the correspondence may be recorded in a log. For example, a log corresponding to the communication identifier 12 includes "12 -> 13" and "VIN_2 -> VIN_3".

In another possible implementation, the server may update the correspondence related to the second communication identifier, and update the second communication identifier to the third communication identifier. For example, the second communication identifier in the correspondence C3 is replaced with the third communication identifier. Alternatively, the correspondence in the area 1902 shown in FIG. 19B is used as an example. The transferring the information mapped to the communication identifier 12 to the communication identifier 13 may include: replacing the communication identifier 12 with the communication identifier 13.

Certainly, in a specific implementation process, mapping transfer may alternatively be implemented in another manner. Examples are not described herein one by one.

Optionally, the method shown in FIG. 23 further includes step S2303.

Step S2303: The server sends a seventh message to the communication apparatus.

Specifically, the seventh message may be a response message.

The seventh message indicates whether the server receives a request message (for example, the sixth message), or whether an operation is legal and/or successful. As shown in FIG. 24, the seventh message may be "DONE(12 -> 13)", to notify the communication apparatus that the operation requested by the communication apparatus is legal and successful. For explanation of the legality, refer to step S1005.

In a possible implementation, the server may further recycle or scrap the communication identifier, or indicate to scrap the mapping corresponding to the communication identifier. For example, the server may receive a message M5 from the communication device, where the message M5 is in a form of "Rec(key_2, 12)", Rec indicates identifier recycling, key_2 is a key between the communication identifier and the server, and 12 is a to-be-recycled communication identifier. Further, the server marks the communication identifier 12 as a recycled state. As shown in FIG. 24, the communication identifier 12 is updated to D-12.

Optionally, the server may return a response message M6 to the communication apparatus, where the response message M6 indicates whether the message M5 is successfully received, or whether the operation is legal and/or successful. As shown in FIG. 24, the response message M6 may include "DONE(D-12)", to notify the communication apparatus that the operation requested by the communication apparatus is legal and successful.

In the embodiment shown in FIG. 23, in the foregoing implementation, when an ownership of the first battery system changes from the first terminal to the second terminal, the mapping relationship is correspondingly updated, to record a change of the ownership of the battery system, so as to ensure that the mapping indicated by the correspondence is the same as an actual ownership of the battery. This facilitates supervision of a use process of the battery system, and facilitates life cycle tracing of the battery system.

In addition, the electronic communication identifier is used, so that when the battery system is transferred, a management operation procedure like manually recording the code of the first battery system or manual archiving is not required. This improves efficiency of managing the battery system. In conclusion, according to this solution, the battery system can be conveniently and efficiently managed.

In another possible design, when the battery system of the terminal is out of power, the terminal may transfer the battery system to a battery management station for charging.

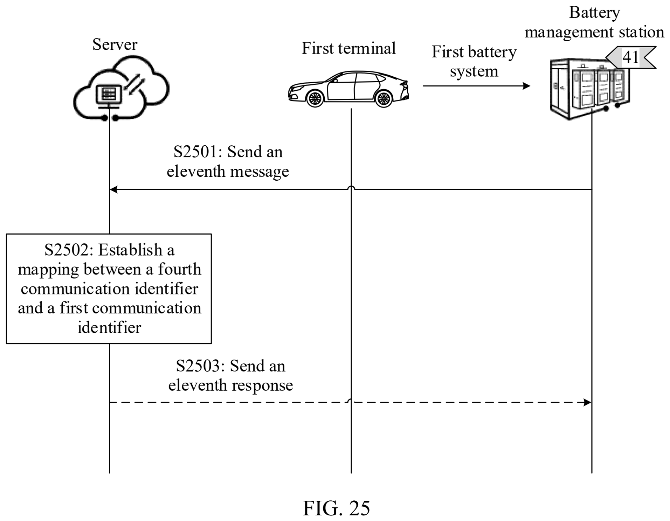

FIG. 25 is a schematic flowchart of another battery management method according to an embodiment of this application. Optionally, the battery management method shown in FIG. 25 may be implemented based on the system shown in FIG. 6. The battery management method shown in FIG. 25 may include one or more steps in step S2501 to step S2503, which are specifically as follows.

Step S2501: A battery management station sends an eleventh message to a server.

Correspondingly, the server receives the eleventh message from the battery management station. Optionally, secure communication between the first terminal and the server is implemented by using a key. For example, the second message is encrypted, integrity-protected, and/or signed by using the key.

The battery management station is a terminal that can provide a service for a battery system, for example, may store the battery system, charge the battery system, and repair the battery system. For example, the battery management station includes but is not limited to a battery replacement station.

The eleventh message includes a first communication identifier and a fourth communication identifier, the first communication identifier is used to uniquely identify a first battery system, and the fourth communication identifier is used to uniquely identify the battery management station. The battery management station may be a device to which the first battery system currently belongs.

The eleventh message indicates to establish a mapping between the fourth communication identifier and the first communication identifier. Optionally, an indication is performed by carrying operation indication information or by using a message format.

In a possible implementation, the eleventh message further includes a second communication identifier. The second communication identifier is used to uniquely identify a first terminal. The first terminal may be a terminal to which the first battery system previously belongs. In other words, an ownership of the first battery system changes from the first terminal to the battery management station.

Further, the eleventh message indicates to update a mapping between the second communication identifier and the first communication identifier to the mapping between the fourth communication identifier and the first communication identifier. Optionally, an indication is performed by carrying operation indication information or by using a message format.

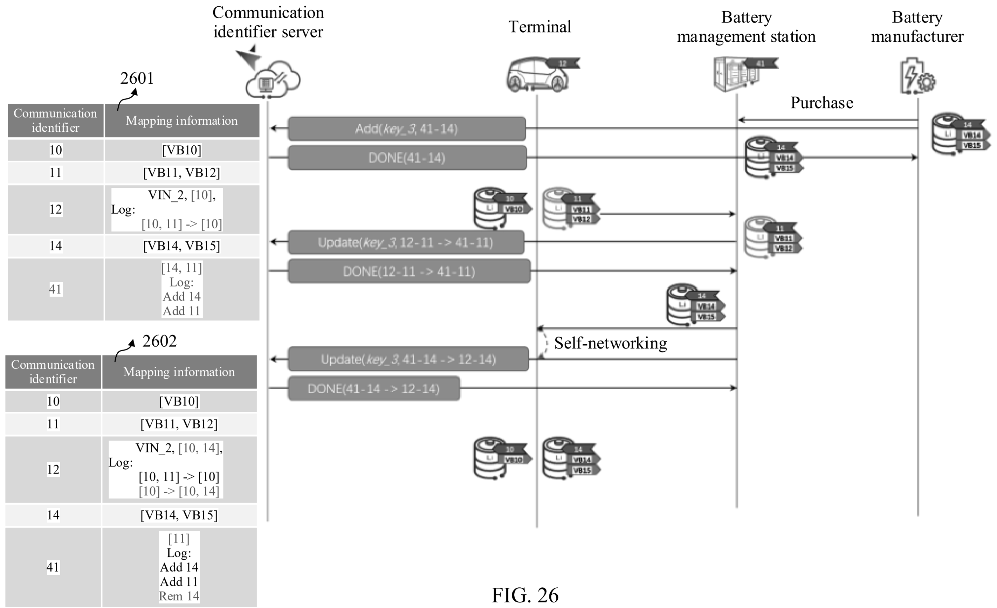

FIG. 26 is a diagram of an interaction scenario of the another battery management method according to an embodiment of this application. The first terminal (a vehicle 12) transfers the first battery system (for example, a battery system 11) of the first terminal to the battery management station (a battery replacement station 41). In this case, a mapping related to the first battery system also needs to be updated, to ensure mapping accuracy.

As shown in FIG. 26, the battery management station 41 may send the eleventh message to the communication identifier server, where the eleventh message is in a form of "Update(key_3, 12-11 -> 41-11)". Herein, Update() indicates mapping update, key_3 is a key (or password) for communication between the battery management station and the server, 12 is the communication identifier of the first terminal, 11 is the communication identifier of the transferred battery system, and 41 is the communication identifier of the battery management station.

Step S2502: The server establishes the mapping between the fourth communication identifier and the first communication identifier.

The mapping between the fourth communication identifier and the first communication identifier is represented by a correspondence (which is referred to as a correspondence C6 for ease of differentiation). For example, the correspondence C6 includes the fourth communication identifier and mapping information of the fourth communication identifier, and the mapping information of the fourth communication identifier includes the first communication identifier.

In a possible implementation, refer to a correspondence shown in an area 2601 in FIG. 26. When the first communication identifier is 11 and the fourth communication identifier is 41, information mapped to the communication identifier 41 includes the communication identifier 11 (namely, the correspondence C6).

Further, the server may update the mapping between the second communication identifier and the first communication identifier to the mapping between the fourth communication identifier and the first communication identifier. As shown in the area 2601, when the first communication identifier is 11, the second communication identifier is 12, and the fourth communication identifier is 41, the information (namely, [10, 11]) mapped to the communication identifier 12 includes the communication identifier 11 (namely, the mapping between the second communication identifier and the first communication identifier), and the server may update [10, 11] to [10].

Optionally, an update operation on the correspondence may be recorded in a log. As shown in FIG. 26, a log corresponding to the communication identifier 12 includes "[10, 11] -> [10]". For another example, a log corresponding to the communication identifier 41 includes "add 11".

Optionally, the method shown in FIG. 25 further includes step S2503.

Step S2503: The server sends an eleventh response to the battery management station.

Specifically, the eleventh response indicates whether the server receives a request message (for example, the eleventh message), or whether an operation is legal and/or successful. As shown in FIG. 26, the eleventh response may be "DONE(12-11 -> 41-11)", to notify the battery management station that the operation requested by the battery management station is legal and successful. For explanation of the legality, refer to step S1005.

In the embodiment shown in FIG. 25, the first communication identifier can implement convenient identification of the first battery system. As an identifier in an electronic form, the first communication identifier is unlikely to wear and has high flexibility and scalability.

Further, when an ownership of the battery system changes between the terminal and the battery management station, a use process of the battery system can be conveniently recorded by using the communication identifier. A relationship between the first battery system, the first terminal, and the battery management station can be reflected by updating the mapping, and a management operation procedure like manually recording a code of the first battery system or manual archiving is not required. This improves efficiency of managing the battery system, facilitates supervision of the use process of the battery system, and facilitates life cycle tracing of the battery system. In conclusion, according to this solution, the battery system can be conveniently and efficiently managed.

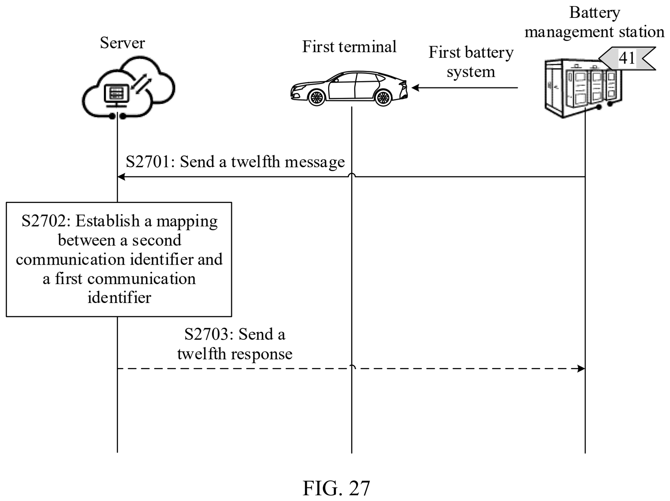

FIG. 27 is a schematic method flowchart of another battery management method according to an embodiment of this application. Optionally, the battery management method shown in FIG. 27 may be implemented based on the system shown in FIG. 6. The battery management method shown in FIG. 27 may include one or more steps in step S2701 to step S2703, which are specifically as follows.

Step S2701: A battery management station sends a twelfth message to a server.

Correspondingly, the server receives the eleventh message from the battery management station. Optionally, secure communication between the battery management station and the server is implemented by using a key. For example, the second message is encrypted, integrity-protected, and/or signed by using the key.

The twelfth message includes a first communication identifier and a second communication identifier, and optionally further includes a fourth communication identifier.

The twelfth message indicates to establish the mapping between the second communication identifier and the first communication identifier. Further, the twelfth message indicates to update a mapping between the fourth communication identifier and the first communication identifier to the mapping between the second communication identifier and the first communication identifier. Optionally, an indication is performed by carrying operation indication information or by using a message format.

FIG. 26 is a diagram of an interaction scenario of the another battery management method according to an embodiment of this application. The battery management station (a battery replacement station 41) transfers the first battery system (for example, a battery system 14) of the battery management station to the first terminal (a vehicle 12). In this case, a mapping related to the first battery system also needs to be updated, to ensure mapping accuracy.

As shown in FIG. 26, the battery management station 41 may send the twelfth message to the communication identifier server, where the twelfth message is in a form of "Update(key_3, 41-14 -> 12-14)". Herein, Update() indicates mapping update, key_3 is a key (or password) for communication between the battery management station and the server, 12 is the communication identifier of the first terminal, 14 is the communication identifier of the transferred battery system, and 41 is the communication identifier of the battery management station.

Step S2702: The server establishes the mapping between the second communication identifier and the first communication identifier.

The mapping between the second communication identifier and the first communication identifier is represented by a correspondence (which is referred to as a correspondence C7 for ease of description). For example, the correspondence C7 includes the second communication identifier and mapping information of the second communication identifier. Further, the mapping information of the second communication identifier includes the first communication identifier or a ciphertext of the first communication identifier.

In a possible implementation, as shown in FIG. 26, when the first communication identifier is 14 and the second communication identifier is 12, information mapped to the communication identifier 12 includes the communication identifier 14 (namely, the correspondence C7).

Further, the server may update the mapping between the fourth communication identifier and the first communication identifier to the mapping between the second communication identifier and the first communication identifier. Refer to the correspondence shown in the area 2602 in FIG. 26. When the first communication identifier is 11, the second communication identifier is 12, and the fourth communication identifier is 41, the information (namely, [14, 11]) mapped to the communication identifier 41 includes the communication identifier 14 (namely, the mapping between the second communication identifier and the first communication identifier), and the server may update [14, 11] to [11].

Optionally, an update operation on the correspondence may be recorded in a log. As shown in the area 2602, a log corresponding to the communication identifier 12 includes "[10] -> [10, 14]". For another example, a log corresponding to the communication identifier 41 includes "rem 11", indicating that the communication identifier 11 is removed from the mapping information of the communication identifier 14.

Optionally, the method shown in FIG. 27 further includes step S2703.

Step S2703: The server sends a twelfth response to the battery management station.

Specifically, the twelfth response indicates whether the server receives a request message (for example, the twelfth message), or whether an operation is legal and/or successful. As shown in FIG. 26, the twelfth response may be "DONE(41-14 -> 12-14)", to notify the battery management station that the operation requested by the battery management station is legal and successful. For explanation of the legality, refer to step S1005.

In the embodiment shown in FIG. 27, when the battery system is transferred between the terminal and the battery management station, a correspondence related to the communication identifier of the battery system changes, to record a change of an ownership of the battery system, so as to ensure that a mapping indicated by the correspondence is the same as an actual ownership of the battery. This facilitates supervision of a use process of the battery system, and facilitates life cycle tracing of the battery system.

In addition, the electronic communication identifier is used, so that when the battery system is transferred, a management operation procedure like manually recording the code of the first battery system or manual archiving is not required. This improves efficiency of managing the battery system.

In some other possible scenarios, the battery management station may request to establish or request to update a mapping between the battery management station and a battery system included in the battery management station. When a battery system 14 is newly added to the battery management station (for example, the new battery system is purchased from a battery manufacturer), the battery management station may send a message to the communication identifier server, where the message indicates to establish a mapping between the battery management station and the battery system. As shown in FIG. 26, the message is in a form of "Add(key_3, 41-14)" to indicate to establish a mapping between the communication identifier 41 and the communication identifier 14. Correspondingly, the service receives the message, updates the correspondence, and adds the communication identifier 14 to the information mapped to the communication identifier 14.

In another possible design, the battery management station may recycle the battery system.

In a possible implementation, the battery management station sends a thirteenth message to the server, where the thirteenth message includes the first communication identifier, and the first communication identifier is used to uniquely identify the first communication system. The thirteenth message indicates to recycle the first battery system. Optionally, the thirteenth message further includes the fourth communication identifier, and the fourth communication identifier is used to uniquely identify the battery management station. Further, the thirteenth message indicates to recycle the second battery system in the battery management station.

Correspondingly, the server receives the thirteenth message, and marks the first battery system as a recycled state.

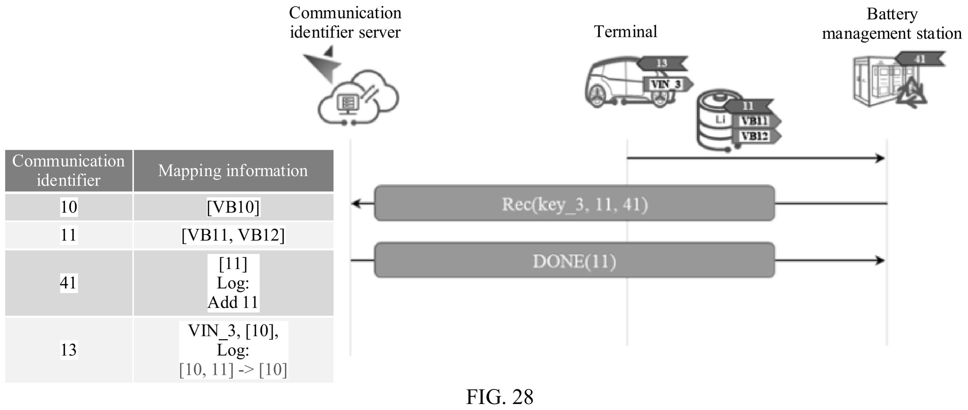

FIG. 28 is a diagram of an interaction scenario of a communication system according to an embodiment of this application. The battery management station may request to update the mapping related to the first battery system. For example, the battery management station sends the thirteenth message to the server. As shown in FIG. 28, the thirteenth message is in a form of "Rec(key_3, 11, 41)". Herein, Rec() or Rec indicates a to-be-recycled identifier, 11 is the first communication identifier, and 41 is the fourth communication identifier.

The server receives the thirteenth message, and marks the first battery system as the recycled state. For example, the communication identifier of the first battery system is marked as R-11. For another example, the communication identifier of the first battery system is removed from related mapping information. For example, mapping information of a communication identifier 13 includes the communication identifier 11, and the server removes the communication identifier 11 from the mapping information of the communication identifier 13. As shown in FIG. 28, the mapping information of the communication identifier 13 does not include the communication identifier 11.

In a possible scenario, the battery system may be cascaded. In some scenarios, when the battery system is cascaded, a cascade manufacturer needs to remove a battery code of an original manufacturer, and reprint or paste a cascade code. This consumes a large amount of manpower and time and increases cascade costs. In addition, because the cascade relates to different power consumption terminals, and even power consumption terminals of different industries may be related, data sharing is difficult. Tracing related information such as quality, usage, and history of a battery is always a difficulty of the entire industry chain. However, in this solution, the battery system is uniquely identified by using the communication identifier, so that the use process of the battery system can be traced.

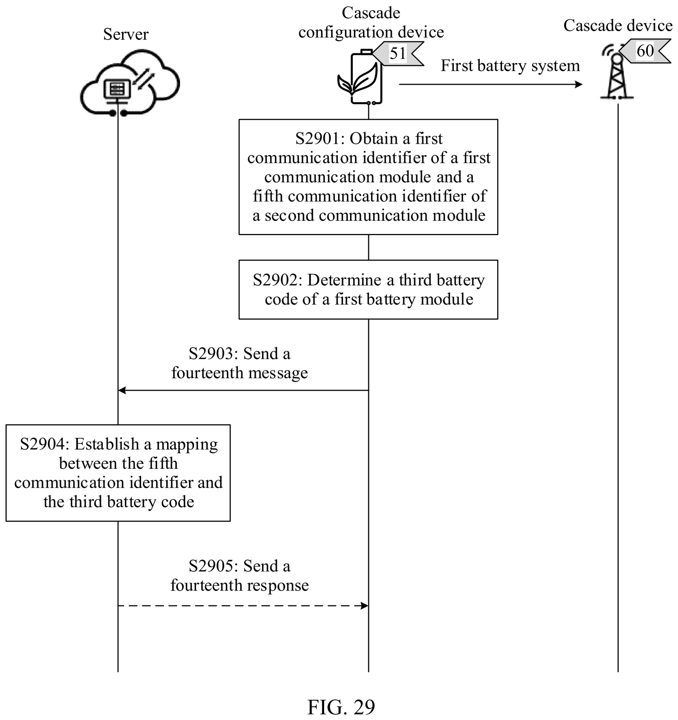

FIG. 29 is a schematic flowchart of another battery management method according to an embodiment of this application. Optionally, the battery management method shown in FIG. 29 may be implemented based on the system shown in FIG. 5 or the system shown in FIG. 6. The battery management method shown in FIG. 29 may include one or more steps in step S2901 to step S2905, which are specifically as follows.

Step S2901: A cascade configuration device obtains a first communication identifier of a first communication module and a fifth communication identifier of a second communication module.

The first communication identifier is used to uniquely identify a first battery system to which the first communication module belongs, the fifth communication identifier is used to uniquely identify a first battery module to which the second communication module belongs, and the first battery module is included in the first battery system.

Step S2902: The cascade configuration device determines a third battery code of the first battery module.

The third battery code indicates cascade information of the first battery module. For example, in a scenario, a battery code of a cascaded battery module is a 19-digit battery code, where the 1^{st} to 3^{rd} bits are a manufacturer code, the 4^{th} and 5^{th} bits are respectively a product type code and a battery type code, the 6^{th} and 7^{th} bits are a specification code, the 8^{th} to 10^{th} bits are a production date code, the 11^{th} to 17^{th} bits are a serial number, and the 18^{th} and 19^{th} bits are a cascade code. Optionally, a part of the 1^{st} to 17^{th} bits of code is the same as a part of the 24-bit code.

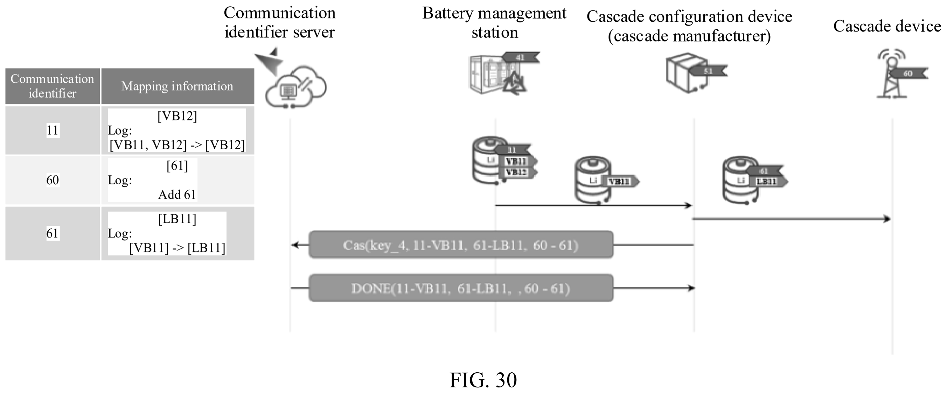

FIG. 30 is a diagram of an interaction scenario of a communication system according to an embodiment of this application. The communication system includes the cascade configuration device and a communication identifier server. The cascade configuration device may number the battery module in the battery system and update a related mapping of the battery system or the battery module. As shown in FIG. 30, a battery system whose communication identifier is 11 is recycled by a battery management station, and the battery system includes two battery modules whose original numbers are respectively VB11 and VB12. VB 11 may be provided to a cascade manufacturer for cascading. VB11 is renumbered as LB11 by the cascade configuration device, and is combined with a communication module whose communication identifier is 11.

Step S2903: The cascade configuration device sends a fourteenth message to the server.

Correspondingly, the server receives the fourteenth message. Optionally, secure communication between the cascade configuration device and the server is implemented by using a key. For example, the fourteenth message is encrypted, integrity-protected, and/or signed by using the key.

The fourteenth message includes the first communication identifier, the first battery code, the third battery code, and the fifth communication identifier. The first battery code indicates production information of the first battery module.

The fourteenth message indicates to establish a mapping between the fifth communication identifier and the third battery code. Further, the fourteenth message indicates to update a mapping between the first communication identifier and the first battery code to the mapping between the fifth communication identifier and the third battery code. Optionally, an indication is performed by carrying operation indication information or by using a message format.

The cascade configuration device sends the fourteenth message to the server, where the fourteenth message includes the first communication identifier, the first battery code, the third battery code, and the fifth communication identifier, and optionally includes a sixth communication identifier. As shown in FIG. 30, the fourteenth message is in a form of "Cas(key_4, 11-VB11, 61-LB11, 60-61)". Herein, Cas() indicates cascading, 11 is the first communication identifier, VB11 is the first battery code, 61 is the fifth communication identifier, LB11 is the third battery code, and 60 is the sixth communication identifier (optional).

Step S2904: The server establishes the mapping between the fifth communication identifier and the third battery code.

Optionally, the mapping between the fifth communication identifier and the third battery code is represented by a correspondence (which is referred to as a correspondence C8 for ease of differentiation). For example, the correspondence C8 includes the fifth communication identifier and mapping information of the fifth communication identifier. Further, the mapping information of the fifth communication identifier includes the third battery code or a ciphertext of the third battery code.

For example, the server establishes the mapping between the fifth communication identifier and the third battery code. As shown in FIG. 30, mapping information of the communication identifier 61 includes the communication identifier LB11.

Further, the fourteenth message further includes the sixth communication identifier, and the server establishes a mapping between the sixth communication identifier and the fifth communication identifier, where the mapping may also be represented by a correspondence C11. The correspondence may include the sixth communication identifier and mapping information of the sixth communication identifier. As shown in FIG. 30, mapping information of a communication identifier 60 (namely, the sixth communication identifier) includes the communication identifier 61.

In a possible implementation, the server may delete the mapping between the first communication identifier and the first battery code. As shown in FIG. 20, information originally mapped to the communication identifier 12 includes VB11 and VB12, and is now updated to VB12.

Optionally, the method shown in FIG. 29 further includes step S2905.

Step S2905: The server sends a fourteenth response to the cascade configuration device.

Specifically, the fourteenth response indicates whether the server receives a request message (for example, the fourteenth message), or whether an operation is legal and/or successful. As shown in FIG. 30, security assurance is performed on the fourteenth message by using key_4, and the fourteenth response may be "DONE(11-VB11, 61-LB11, , 60-61)", to notify the cascade configuration device that the operation requested by the cascade configuration device is legal and successful. For explanation of the legality, refer to step S1005.

In the embodiment shown in FIG. 29, when the battery system is cascaded, a code change and a cascade process of the battery system can be conveniently recorded by using the communication identifier, and a relationship between the first battery system, the cascade configuration device, and a cascade device may be reflected by updating the mapping. This improves efficiency of managing the battery system, facilitates supervision of the use process of the battery system, and facilitates life cycle tracing of the battery system. In conclusion, according to this solution, the battery system can be conveniently and efficiently managed.

In a possible scenario, the server provided in this embodiment of this application, for example, a server 502 or the communication identifier server, may support distributed deployment. This reduces data pressure on a single-point server and ensures system stability.

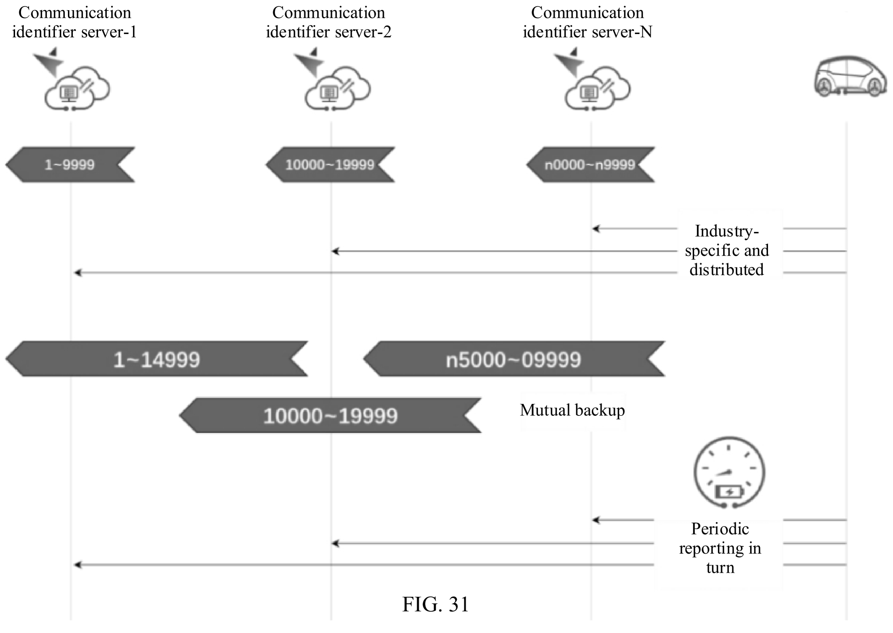

FIG. 31 is an architectural diagram of a server according to an embodiment of this application. A quantity of servers may be N (N is an integer and N>1), to improve a processing capability of the server and reduce data pressure of a single-point server.

In a possible implementation, the N servers separately store data with different primary key values (values of communication identifiers). Certainly, primary key values corresponding to any two servers may be different. For example, a server 1 stores content identified by identifiers 1 to 9999, and a server 2 stores content identified by identifiers 10000 to 19999.

In another possible implementation, data stored in any two servers may be partially the same. For example, the servers may also partially overlap for mutual backup. For example, the server 1 stores content of identifiers 1 to 14999, and the server 2 stores content of identifiers 10000 to 19999. The rest may be deduced by analogy.

In another possible implementation, the servers may be configured to process data of different industries and/or different regions. For example, N is 4. Servers 1 to 3 are used for processing in the automobile industry, and a server 4 is used for processing in the cascade industry.

In another possible implementation, in a scenario in which a communication apparatus (for example, an upper computer or a terminal) sends a message to a server, the communication apparatus may temporarily cache some data locally, and periodically send the data to the communication identifier server based on a configuration, to avoid frequent interaction.

The following describes some apparatuses for implementing the foregoing methods. It should be understood that, in the apparatuses provided in embodiments of this application, unit division is merely logical function division. During actual implementation, all or some of the units may be integrated into one physical entity, or may be physically separated.

In a possible implementation, the units in the apparatus may be implemented in a form of software invoked by a processor. For example, the apparatus includes a processor. The processor is connected to a memory. The memory stores instructions. The processor invokes the instructions stored in the memory, to implement any one of the foregoing methods or implement functions of each unit of the apparatus. The processor is, for example, a general-purpose processor, for example, a central processing unit (Central Processing Unit, CPU) or a microprocessor. The memory is a memory inside the apparatus or a memory outside the apparatus.

In another possible implementation, a unit in the apparatus may be implemented in a form of a hardware circuit, and the hardware circuit may be designed to implement functions of some or all of the units. The hardware circuit may be understood as one or more processors. For example, in an implementation, the hardware circuit is an application-specific integrated circuit (application-specific integrated circuit, ASIC), and functions of some or all of the foregoing units are implemented by designing a logical relationship between elements in the circuit. For another example, in another implementation, the hardware circuit may be implemented by using a programmable logic device (programmable logic device, PLD). For example, a field programmable gate array (Field Programmable Gate Array, FPGA) may include a large quantity of logic gate circuits, and a connection relationship between the logic gate circuits is configured by using a configuration file, to implement functions of some or all of the foregoing units. All the units of the foregoing apparatus may be implemented in a form of software invoked by the processor, or all the units may be implemented in a form of a hardware circuit, or some units may be implemented in a form of software invoked by the processor, and a remaining part may be implemented in a form of the hardware circuit.

Optionally, all or some of the units in the apparatus provided in this embodiment of this application may be integrated, or may be implemented independently. In an implementation, these units are integrated together and implemented in a form of a system-on-a-chip (system-on-a-chip, SoC). The SoC may include at least one processor, configured to implement any one of the methods or implement functions of the units of the apparatus. Types of the at least one processor may be different. For example, the at least one processor includes a CPU and an FPGA, a CPU and an artificial intelligence processor, or a CPU and a GPU.

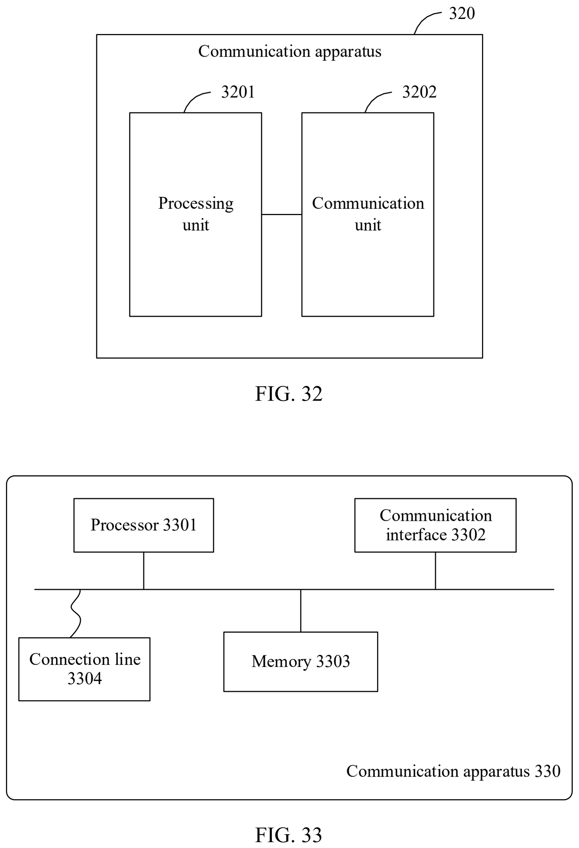

The following describes apparatuses provided in embodiments of this application, FIG. 32 is a diagram of a structure of a communication apparatus according to an embodiment of this application. A communication apparatus 320 includes a processing unit 3201 and a communication unit 3202. The processing unit 3201 may be configured to implement the foregoing functions such as obtaining, processing, determining, establishment, update, and deletion, and/or configured to support other functions in the foregoing embodiments. The communication unit 3202 may be configured to perform operations such as sending, receiving, and reading, and/or configured to support other functions in the foregoing embodiments. In some possible implementation scenarios, the communication unit 3202 may be alternatively replaced with a communication interface module and/or a transceiver module.

For example, the communication apparatus 320 is configured to implement the foregoing battery management method, for example, the battery management method described in any one of the embodiments shown in FIG. 10 to FIG. 18, FIG. 19A, and FIG. 20 to FIG. 30. Optionally, the communication apparatus 320 may be the communication apparatus, the server, the terminal, the battery management station, the battery configuration device, the cascade configuration device, the cascade device, or the like in the foregoing embodiments.

In a possible design, the communication apparatus is configured to implement the battery management method shown in any one of FIG. 17, FIG. 18, FIG. 19A, FIG. 20, FIG. 21, or FIG. 22. For example, the communication apparatus is a terminal (for example, a first terminal) or a module in the terminal.

In a possible implementation, the processing unit 3201 is configured to obtain a first communication identifier of a first communication unit, where the first communication identifier is used to uniquely identify a first battery system to which the first communication unit belongs.

The communication unit 3202 is configured to send a first message to a server, where the first message includes a second communication identifier and the first communication identifier, the second communication identifier is used to uniquely identify a first terminal to which the first battery system belongs, and the first message indicates to establish a mapping between the second communication identifier and the first communication identifier.

In a possible implementation, the communication unit 3202 is further configured to receive a response message from the server, where the response message indicates an operation result, for example, indicates whether an operation is successful, whether the operation is legal, and/or the like.

In a possible implementation, the processing unit 3201 is further configured to obtain information about the first battery system, where the information about the first battery system includes the first communication identifier and a first battery code of a first battery module of the first battery system.

The communication unit 3202 is further configured to:
send a query message to the server, where the query message includes the information about the first battery system; and
receive a query result, where the query result indicates correctness of the information about the first battery system.

In a possible implementation, the communication unit 3202 is further configured to send a second message to the server, where the second message includes the second communication identifier, the first communication identifier, and a third communication identifier, and the third communication identifier is used to uniquely identify a second terminal.

The second message indicates to update the mapping between the second communication identifier and the first communication identifier to a mapping between the third communication identifier and the first communication identifier.

In a possible implementation, the first message further includes a device identifier of the first terminal, and the first message is further used to request to establish a mapping between the second communication identifier and the device identifier of the first terminal.

In a possible implementation, the processing unit 3201 is further configured to obtain a first identity identifier of a first user of the first terminal.

The communication unit 3202 is further configured to send a third message to the server, where the third message includes the second communication identifier and the first identity identifier, and the third message is used to establish a mapping between the second communication identifier and the first identity identifier.

In a possible implementation, the processing unit 3201 is further configured to obtain a second identity identifier of a second user of the first terminal.

The communication unit 3202 is further configured to send a fourth message to the server, where the fourth message includes the second communication identifier and the second identity identifier.

The fourth message indicates to update the mapping between the second communication identifier and the first identity identifier to a mapping between the second communication identifier and the second identity identifier.

In a possible implementation, secure communication between the communication apparatus 320 and the server is implemented by using a key.

In a possible design, the communication apparatus is configured to implement the method on the second terminal side in FIG. 21 or FIG. 22. For example, the communication apparatus is a second terminal or a module in the second terminal.

In a possible implementation, the processing unit 3201 is configured to obtain a first communication identifier of a first communication unit and a second communication identifier, where the first communication identifier is used to uniquely identify a first battery system to which the first communication unit belongs.

The communication unit 3202 is configured to send a fifth message to a server, where the fifth message includes a third communication identifier and the first communication identifier, the third communication identifier is used to uniquely identify a second terminal to which the first battery system currently belongs, and the fifth message indicates to establish a mapping between the third communication identifier and the first communication identifier.

In a possible implementation, the fifth message further includes a second communication identifier, and the second communication identifier is used to uniquely identify a first terminal to which the first battery system belongs.

Further, the fifth message is used to confirm that a mapping between the second communication identifier and the first communication identifier is updated to the mapping between the third communication identifier and the first communication identifier.

In a possible implementation, the communication unit 3202 is further configured to receive a response message from the server, where the response message indicates an operation result.

For example, the response message includes a fifth response, and the fifth response indicates a mapping update result.

In a possible design, the communication apparatus is configured to implement the method on the communication apparatus side in FIG. 23 or FIG. 24.

In a possible implementation, the communication unit 3202 is further configured to:
send a sixth message to a server, where the sixth message includes a second communication identifier and a third communication identifier, the second communication identifier is used to uniquely identify a first terminal, the third communication identifier is used to uniquely identify a second terminal, and the sixth message indicates to transfer a mapping related to the second communication identifier to the third communication identifier; and
receive a seventh message from the server, where the seventh message indicates a result of the mapping transfer operation.

In a possible implementation, the sixth message further includes a device identifier of a third terminal, and the sixth message is further used to update a device identifier of the second terminal mapped to the second communication identifier to the device identifier of the third communication identifier mapped to a sixth communication identifier.

In a possible design, the communication apparatus is configured to implement the battery management method shown in any one of FIG. 10 to FIG. 16. For example, the communication apparatus is a battery configuration device or a module in the battery configuration device.

In a possible implementation, the processing unit 3201 is configured to:
obtain a first communication identifier of a first communication unit, where the first communication identifier is used to uniquely identify a first battery system to which the first communication unit belongs; and
obtain a first battery code of a first battery module in the first battery system, where the first battery code indicates production information of the first battery module.

The communication unit 3202 is configured to send an eighth message to a server, where the eighth message includes the first communication identifier and the first battery code, and the eighth message indicates to establish a mapping between the first communication identifier and the first battery code.

In a possible implementation, the communication unit 3202 is further configured to receive a response message from the server, where the response message indicates an operation result.

In a possible implementation, the processing unit 3201 is further configured to obtain a second battery code of a second battery module in the first battery system. The communication unit 3202 is further configured to send a ninth message, where the ninth message includes the first communication identifier and the second battery code, and the ninth message indicates to update the mapping between the first communication identifier and the first battery code to a mapping between the first communication identifier and the second battery code.

In a possible implementation, the communication unit 3202 is further configured to send a tenth message, where the tenth message includes the first communication identifier and the first battery code, and the third message indicates to scrap the first battery module.

In a possible implementation, secure communication between the communication apparatus 320 and the server is implemented by using a first key. For example, a message between the communication apparatus 320 and the server is encrypted, integrity-protected, and/or signed by using the first key.

In a possible design, the communication apparatus is configured to implement the battery management method shown in any one of FIG. 25 to FIG. 28. For example, the communication apparatus is a battery management station or a module in the battery management station.

In a possible implementation, the processing unit 3201 is configured to obtain a first communication identifier of a first communication unit, where the first communication identifier is used to uniquely identify a first battery system to which the first communication unit belongs.

The communication unit 3202 is configured to send an eleventh message to a server, where the eleventh message includes the first communication identifier, a second communication identifier, and a fourth communication identifier, the second communication identifier is used to uniquely identify a first terminal to which the first battery system belongs, and the fourth communication identifier is used to uniquely identify a battery management station to which the first battery system belongs.

The eleventh message indicates to update a mapping between the second communication identifier and the first communication identifier to a mapping between the fourth communication identifier and the first communication identifier.

In a possible implementation, the communication unit 3202 is further configured to send a twelfth message to the server, where the twelfth message includes the first communication identifier, the second communication identifier, and the fourth communication identifier.

The twelfth message indicates to update the mapping between the fourth communication identifier and the first communication identifier to the mapping between the second communication identifier and the first communication identifier.

In a possible implementation, the communication unit 3202 is further configured to send a thirteenth message to the server, where the thirteenth message includes the first communication identifier and the fourth communication identifier.

The thirteenth message indicates to recycle the first battery system.

Optionally, the thirteenth message indicates to recycle the first battery system in the battery management station.

In a possible design, the communication apparatus is configured to implement the battery management method shown in either FIG. 29 or FIG. 30. For example, the communication apparatus is a cascade configuration device or a module in the cascade configuration device.

In a possible implementation, the processing unit 3201 is configured to: obtain a first communication identifier of a first communication unit and a fifth communication identifier of a second communication unit, where the first communication identifier is used to uniquely identify a first battery system to which the first communication unit belongs, the fifth communication identifier is used to uniquely identify a first battery module to which the second communication unit belongs, and the first battery module is included in the first battery system; and
determine a third battery code of the first battery module, where the third battery code indicates cascade information of the first battery module.

The communication unit 3202 is configured to send a fourteenth message to a server, where the fourteenth message includes the first communication identifier, a first battery code, the third battery code, and the fifth communication identifier, and the first battery code indicates production information of the first battery module.

The fourteenth message indicates to update a mapping between the first communication identifier and the first battery code to a mapping between the fifth communication identifier and the third battery code.

In a possible implementation, the fourteenth message further includes a sixth communication identifier, and the sixth communication identifier is used to uniquely identify a third terminal to which the first battery module currently belongs.

The fourteenth message indicates to establish a mapping between the sixth communication identifier and the fifth communication identifier.

In a possible design, the communication apparatus is configured to implement the battery management method shown in either FIG. 10 or FIG. 30. For example, the communication apparatus is a server or a module in the server.

In a possible implementation, the communication unit 3202 is configured to receive a first message from a first terminal, where the first message includes a second communication identifier and a first communication identifier, the second communication identifier is used to uniquely identify the first terminal, and the first communication identifier is used to uniquely identify a first battery system included in the first terminal.

The processing unit 3201 is configured to establish a mapping between the second communication identifier and the first communication identifier.

Optionally, the mapping between the second communication identifier and the first communication identifier may be represented by a correspondence. In a possible implementation, the processing unit 3201 is configured to determine a correspondence, where the correspondence includes the second communication identifier (or a ciphertext of the second communication identifier) and mapping information of the second communication identifier. The mapping information of the second communication identifier includes the first communication identifier or a ciphertext of the first communication identifier.

In a possible implementation, the communication unit 3202 is further configured to receive a query message from the first terminal, where the query message includes information about the first battery system, the information about the battery system includes the first communication identifier and a first battery code, and the first battery code indicates production information of a first battery module of the first battery system.

The communication unit 3202 is further configured to send a query result to the first terminal, where the query result indicates correctness of the information about the first battery system.

In a possible implementation, the communication unit 3202 is further configured to:
receive a second message from the first terminal, where the second message includes the first communication identifier and a third communication identifier, and the third communication identifier is used to uniquely identify a second terminal; and
receive a fifth message from the second terminal, where the fifth message includes the third communication identifier and the first communication identifier.

The processing unit 3201 is further configured to establish a mapping between the third communication identifier and the first communication identifier.

Optionally, the mapping between the third communication identifier and the first communication identifier may be represented by a correspondence C4. The processing unit 3201 is further configured to determine the correspondence C4.

In a possible implementation, the processing unit 3201 is further configured to generate a log, where the log corresponds to the second communication identifier, and the log may indicate historical information mapped to the second communication identifier.

In a possible implementation, the first message further includes a device identifier of the first terminal. The processing unit 3201 is further configured to establish a mapping between the second communication identifier and the device identifier of the first terminal.

In a possible implementation, the communication unit 3202 is further configured to receive a third message from the first terminal, where the third message includes the second communication identifier and a first identity identifier of a first user of the first terminal.

The processing unit 3201 is further configured to establish a mapping between the second communication identifier and the first identity identifier.

In a possible implementation, the processing unit 3201 is further configured to determine a correspondence (which is referred to as a correspondence C9 for ease of differentiation) based on ciphertexts of the second communication identifier and the first identity identifier. For example, the correspondence C9 includes a ciphertext of the second identity identifier.

In a possible implementation, the communication unit 3202 is further configured to receive a fourth message from the first terminal, where the fourth message includes the second communication identifier and a second identity identifier, and the second identity identifier indicates a second user of the first terminal.

The processing unit 3201 is further configured to establish a mapping between the second communication identifier and the second identity identifier.

Optionally, the mapping between the second communication identifier and the second identity identifier may be represented by a correspondence C10. Optionally, the communication unit 3201 is configured to update the correspondence C9 to obtain the correspondence C10. Alternatively, optionally, the communication unit 3201 is configured to: establish the correspondence C10, and delete the correspondence C9.

In a possible implementation, the communication unit 3202 is further configured to receive a sixth message from a communication apparatus, where the sixth message includes the second communication identifier and a third communication identifier, and the third communication identifier is used to uniquely identify the second terminal.

The processing unit 3201 is further configured to transfer a mapping related to the second communication identifier to the third communication identifier.

In a possible implementation, the processing unit 3201 is further configured to determine to establish a mapping between the third communication identifier and first information, where the first information is mapping information of the second communication identifier.

In a possible implementation, the communication unit 3202 is further configured to send a seventh message to the communication apparatus, where the seventh message indicates a result of the mapping transfer operation.

In a possible implementation, the third message further includes a device identifier of the second terminal. The processing unit 3201 is further configured to update the first information to obtain second information, where the second information includes the device identifier of the second terminal, and the second information corresponds to the third communication identifier.

In a possible implementation, the communication unit 3202 is further configured to receive an eighth message from a battery configuration device, where the eighth message includes the first communication identifier and the first battery code, and the first battery code indicates the production information of the first battery module in the first battery system.

The processing unit 3201 is further configured to establish a mapping between the first communication identifier and the first battery code. Optionally, the mapping between the third communication identifier and the first information may be represented by a correspondence C1.

In a possible implementation, the communication unit 3202 is further configured to receive a ninth message from the battery configuration device, where the ninth message includes the first communication identifier and a second battery code.

The processing unit 3201 is further configured to establish a mapping between the first communication identifier and the second battery code. Optionally, the mapping between the first communication identifier and the second battery code may be represented by a correspondence C2.

In a possible implementation, the processing unit 3201 is further configured to update the correspondence C1 to obtain the correspondence C2.

In a possible implementation, the processing unit 3201 is further configured to delete the correspondence C1.

In a possible implementation, the communication unit 3202 is further configured to receive a tenth message, where the tenth message includes the first communication identifier and the first battery code.

The processing unit 3201 is further configured to mark the first battery module corresponding to the first battery code as a scrapped state.

In a possible implementation, the communication unit 3202 is further configured to receive an eleventh message from a battery management station, where the eleventh message includes the first communication identifier, the second communication identifier, and a fourth communication identifier, and the fourth communication identifier is used to uniquely identify the battery management station to which the second battery system belongs.

The processing unit 3201 is further configured to establish a mapping between the fourth communication identifier and the first communication identifier.

In a possible implementation, the communication unit 3202 is further configured to receive a twelfth message from the battery management station, where the twelfth message includes the first communication identifier, the second communication identifier, and the fourth communication identifier.

The processing unit 3201 is further configured to establish the mapping between the second communication identifier and the first communication identifier.

In a possible implementation, the communication unit 3202 is further configured to receive a thirteenth message from the battery management station, where the thirteenth message includes the first communication identifier and the fourth communication identifier.

The processing unit 3201 is further configured to mark the first battery system as a recycled state.

In a possible implementation, the communication unit 3202 is further configured to receive a fourteenth message from a cascade configuration device, where the fourteenth message includes the first communication identifier, the first battery code, a third battery code, and a fifth communication identifier, the fifth communication identifier is used to uniquely identify the first battery module to which the second communication unit belongs, the first battery module is included in the first battery system, the third battery code indicates cascade information of the first battery module, and the first battery code indicates the production information of the first battery module.

The processing unit 3201 is further configured to establish a mapping between the fifth communication identifier and the third battery code.

In a possible implementation, the fourteenth message further includes a sixth communication identifier, and the sixth communication identifier is used to uniquely identify a third terminal to which the first battery module currently belongs.

The processing unit 3201 is further configured to establish a mapping between the sixth communication identifier and the fifth communication identifier.

For related descriptions, refer to the foregoing descriptions.

FIG. 33 is a diagram of a structure of a possible communication apparatus according to an embodiment of this application. A communication apparatus 330 may include at least one processor 3301 and a communication interface 3302. Optionally, at least one memory 3303 may be further included. Further, optionally, a connection line 3304 may be further included. The processor 3301, the communication interface 3302, and/or the memory 3303 are connected through the connection line 3304, and communicate with each other through the connection line 3304 to transfer a control signal and/or a data signal. Optionally, the communication apparatus 330 may be an independent device, for example, a terminal, a server, or a roadside apparatus, or may be a component included in the independent device, for example, a chip, a software module, or an integrated circuit.
(1) The processor 3301 is a module that performs an arithmetic operation and/or a logical operation. In an implementation, the processor may be a circuit having an instruction reading and running capability, for example, a central processing unit (Central Processing Unit, CPU), a microprocessor, a graphics processing unit, a central processing unit (Central Processing Unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit, and the logical relationship of the hardware circuit is fixed or reconfigurable. For example, the processor is an application-specific integrated circuit (application-specific integrated circuit, ASIC) or a hardware circuit like an FPGA implemented by a programmable logic device (programmable logic device, PLD). In addition, the processor may alternatively be a hardware circuit designed for artificial intelligence, and may be understood as an ASIC, for example, a neural network processing unit (Neural Network Processing Unit, NPU), a tensor processing unit (Tensor Processing Unit, TPU), or a deep learning processing unit (Deep learning Processing Unit, DPU).
(2) The communication interface 3302 may be configured to provide an information input or output for the at least one processor. In some possible scenarios, the communication interface 3302 may include an interface circuit, and/or the communication interface 3302 may be configured to receive data sent from the outside and/or send data to the outside. For example, the communication interface 3302 may be a wired link interface including an Ethernet cable and the like, or may be a wireless link (Wi-Fi, Bluetooth, universal wireless transmission, an onboard short-range communication technology, another short-range wireless communication technology, or the like) interface. Optionally, the communication interface 3302 may further include a transmitter (for example, a radio frequency transmitter or an antenna), a receiver, or the like coupled to the interface.

Optionally, if the communication apparatus 330 is an independent device, the communication interface 3302 may include a receiver and a transmitter. The receiver and the transmitter may be a same component or different components. When the receiver and the transmitter are a same component, the component may be referred to as a transceiver.

Optionally, if the communication apparatus 330 is a chip or a circuit, the communication interface 3302 may include an input interface and an output interface. The input interface and the output interface may be a same interface or different interfaces.

Optionally, a function of the communication interface 3302 may be implemented through a transceiver circuit or a dedicated transceiver chip. The processor 3301 may be implemented by a dedicated processing chip, a processing circuit, a processor, or a general-purpose chip.

(3) The memory 3303 is configured to provide storage space, and the storage space may store data such as an operating system and a computer program. The memory 3303 may be one or a combination of a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), and the like.

Functions and actions of modules or units in the communication apparatus 330 listed above are merely examples for description.

Functional units in the communication apparatus 330 may be configured to implement the foregoing battery management method, for example, the battery management method described in any one of the embodiments shown in FIG. 10 to FIG. 18, FIG. 19A, and FIG. 20 to FIG. 30. Optionally, the communication apparatus 330 may be the communication apparatus, the server, the terminal, the battery management station, the battery configuration device, the cascade configuration device, the cascade device, or the like in the foregoing embodiments. Herein, detailed descriptions are omitted to avoid repetition.

Optionally, the processor 3301 may be a processor (which is referred to as a dedicated processor for ease of differentiation) that is specially configured to perform the foregoing method, or may be a processor (which is referred to as a dedicated processor for ease of differentiation) that invokes a computer program to perform the foregoing method. Optionally, the at least one processor may alternatively include both a dedicated processor and a general-purpose processor.

Optionally, when the computing device includes the at least one memory 3303, if the processor 3301 invokes a computer program to implement the foregoing battery management method, the computer program may be stored in the memory 3303.

An embodiment of this application further provides a chip system. The chip system includes a processor and a communication interface. The communication interface is configured to receive and/or send data, and/or the communication interface is configured to provide an input and/or an output for the processor. The chip system is configured to implement the foregoing battery management method, for example, the battery management method described in any one of the embodiments shown in FIG. 10 to FIG. 18, FIG. 19A, and FIG. 20 to FIG. 30.

An embodiment of this application further provides a terminal. The terminal includes the foregoing communication apparatus, for example, includes the communication apparatus 320 or the communication apparatus 330.

In a possible implementation, the terminal may be an intelligent terminal or a transportation means like a vehicle, an uncrewed aerial vehicle, or a robot. For example, certainly, the terminal may alternatively be replaced with an industrial device, an entertainment device, or the like. The intelligent terminal is, for example, a mobile phone, a tablet computer, a notebook computer, a smart band, a smart watch, or smart glasses. The transportation means is, for example, a vehicle, a ship, an aircraft, or a logistics robot. The industrial device is, for example, an industrial robot or a robotic arm. The entertainment device is, for example, a virtual reality (virtual reality, VR) device, a mixed reality (mixed reality, MR) device, a massage chair, or a 4D cinema cockpit. A device to which an electrical connector is used is not strictly limited in this application.

An embodiment of this application further provides a server. The server includes the foregoing communication apparatus, for example, includes the communication apparatus 320 or the communication apparatus 330.

An embodiment of this application further provides a battery replacement station. The battery replacement station includes the foregoing communication apparatus, for example, includes the communication apparatus 320 or the communication apparatus 330.

An embodiment of this application further provides a cascade configuration device. The cascade configuration device includes the foregoing communication apparatus, for example, includes the communication apparatus 320 or the communication apparatus 330.

An embodiment of this application further provides a cascade device. The cascade device includes the foregoing communication apparatus, for example, includes the communication apparatus 320 or the communication apparatus 330.

An embodiment of this application further provides a computer-readable storage medium. The computer-readable storage medium stores instructions. When the instructions are run on at least one processor, the foregoing battery management method is implemented. For example, the battery management method described in any one of the embodiments shown in FIG. 10 to FIG. 18, FIG. 19A, and FIG. 20 to FIG. 30 is implemented.

An embodiment of this application further provides a computer program product. The computer program product includes computer instructions. When the computer program product is executed by a computing device, the foregoing battery management method is implemented. For example, the battery management method described in any one of the embodiments shown in FIG. 10 to FIG. 18, FIG. 19A, and FIG. 20 to FIG. 30 is implemented.

It should be noted that names of the apparatus, the parameter, and the information in this application are merely examples, and in a specific implementation process, the names may be randomly replaced. For example, a behavior detection apparatus may also be referred to as a detection apparatus or a processing apparatus.

In embodiments of this application, words such as "example" or "for example" are used to give an example, an illustration, or a description. Any embodiment or design scheme described as an "example" or "for example" in this application should not be explained as being more preferred or having more advantages than another embodiment or design scheme. To be precise, use of the words such as "example" or "for example" is intended to present a relative concept in a specific manner.

In embodiments of this application, "at least one" means one or more, and "a plurality of' means two or more. At least one of the following items (pieces) or a similar expression thereof refers to any combination of these items, including any combination of singular items (pieces) or plural items (pieces). For example, at least one item (piece) of a, b, or c may indicate: a, b, c, (a and b), (a and c), (b and c), or (a, b, and c), where a, b, and c may be singular or plural. The term "and/or" describes an association between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects.

In addition, unless otherwise stated, ordinal numbers such as "first" and "second" in embodiments of this application are for differentiation between a plurality of objects, but are not intended to limit an order, a time sequence, priorities, or importance of the plurality of objects. For example, a first user and a second user are merely for ease of describing locations, but do not indicate different occurrence sequences, importance degrees, and the like of the first user and the second user. In some scenarios, the first user and the second user may even be a same user.

Based on the context, the term "when" used in the foregoing embodiments may be interpreted as "if', "after", "in response to determining", or "in response to detecting". The foregoing descriptions are merely optional embodiments of this application, but are not intended to limit this application. Any modification, equivalent replacement, improvement, or the like made within the concept and principle of this application shall fall within the protection scope of this application.

## Claims

1. A battery management method, wherein the method comprises:
obtaining a first communication identifier of a first communication module, wherein the first communication identifier is used to uniquely identify a first battery system to which the first communication module belongs; and
sending a first message to a server, wherein the first message comprises a second communication identifier and the first communication identifier, and the second communication identifier is used to uniquely identify a first terminal to which the first battery system belongs, wherein
the first message indicates to establish a mapping between the second communication identifier and the first communication identifier.

2. The method according to claim 1, wherein the method further comprises:
obtaining information about the first battery system, wherein the information about the first battery system comprises the first communication identifier and a first battery code of a first battery module of the first battery system;
sending a query message to the server, wherein the query message comprises the information about the first battery system; and
receiving a query result, wherein the query result indicates correctness of the information about the first battery system.

3. The method according to claim 1 or 2, wherein the method further comprises:
sending a second message to the server, wherein the second message comprises the second communication identifier, the first communication identifier, and a third communication identifier, and the third communication identifier is used to uniquely identify a second terminal, wherein
the second message indicates to update the mapping between the second communication identifier and the first communication identifier to a mapping between the third communication identifier and the first communication identifier.

4. The method according to any one of claims 1 to 3, wherein the first message further comprises a device identifier of the first terminal, and the first message further indicates to establish a mapping between the second communication identifier and the device identifier of the first terminal.

5. The method according to any one of claims 1 to 4, wherein the method further comprises:
obtaining a first identity identifier of a first user of the first terminal; and
sending a third message to the server, wherein the third message comprises the second communication identifier and the first identity identifier, and the third message indicates to establish a mapping between the second communication identifier and the first identity identifier.

6. The method according to claim 5, wherein the method further comprises:
obtaining a second identity identifier of a second user of the first terminal; and
sending a fourth message to the server, wherein the fourth message comprises the second communication identifier and the second identity identifier, wherein
the fourth message indicates to update the mapping between the second communication identifier and the first identity identifier to a mapping between the second communication identifier and the second identity identifier.

7. A battery management method, wherein the method comprises:
obtaining a first communication identifier of a first communication module and a second communication identifier, wherein the first communication identifier is used to uniquely identify a first battery system to which the first communication module belongs, and the second communication identifier is used to uniquely identify a first terminal to which the first battery system originally belongs; and
sending a fifth message to a server, wherein the fifth message comprises the second communication identifier, a third communication identifier, and the first communication identifier, and the third communication identifier is used to uniquely identify a second terminal to which the first battery system currently belongs, wherein
the fifth message is used to confirm that a mapping between the second communication identifier and the first communication identifier is updated to a mapping between the third communication identifier and the first communication identifier.

8. A battery management method, wherein the method comprises:
sending a sixth message to a server, wherein the sixth message comprises a second communication identifier and a third communication identifier, the second communication identifier is used to uniquely identify a first terminal, and the third communication identifier is used to uniquely identify a second terminal, wherein
the sixth message indicates to transfer a mapping related to the second communication identifier to the third communication identifier; and
receiving a seventh message from the server, wherein the seventh message indicates a result of the mapping transfer operation.

9. A battery management method, wherein the method comprises:
obtaining a first communication identifier of a first communication module, wherein the first communication identifier is used to uniquely identify a first battery system to which the first communication module belongs;
obtaining a first battery code of a first battery module in the first battery system, wherein the first battery code indicates production information of the first battery module; and
sending an eighth message to a server, wherein the eighth message comprises the first communication identifier and the first battery code, wherein
the eighth message indicates to establish a mapping between the first communication identifier and the first battery code.

10. The method according to claim 9, wherein the method further comprises:
obtaining a second battery code of a second battery module in the first battery system; and
sending a ninth message, wherein the ninth message comprises the first communication identifier and the second battery code, and the ninth message indicates to update the mapping between the first communication identifier and the first battery code to a mapping between the first communication identifier and the second battery code.

11. The method according to claim 9 or 10, wherein the method further comprises:
sending a tenth message, wherein the tenth message comprises the first communication identifier and the first battery code, and the tenth message indicates to scrap the first battery module.

12. A battery management method, wherein the method comprises:
obtaining a first communication identifier of a first communication module, wherein the first communication identifier is used to uniquely identify a first battery system to which the first communication module belongs; and
sending an eleventh message to a server, wherein the eleventh message comprises the first communication identifier, a second communication identifier, and a fourth communication identifier, the second communication identifier is used to uniquely identify a first terminal to which the first battery system belongs, and the fourth communication identifier is used to uniquely identify a battery management station to which the first battery system belongs, wherein
the eleventh message indicates to update a mapping between the second communication identifier and the first communication identifier to a mapping between the fourth communication identifier and the first communication identifier.

13. The method according to claim 12, wherein the method further comprises:
sending a twelfth message to the server, wherein the twelfth message comprises the first communication identifier, the second communication identifier, and the fourth communication identifier, wherein
the twelfth message indicates to update the mapping between the fourth communication identifier and the first communication identifier to the mapping between the second communication identifier and the first communication identifier.

14. The method according to claim 12 or 13, wherein the method further comprises:
sending a thirteenth message to the server, wherein the thirteenth message comprises the first communication identifier and the fourth communication identifier, wherein
the thirteenth message indicates to recycle the first battery system.

15. A battery management method, wherein the method comprises:
obtaining a first communication identifier of a first communication module and a fifth communication identifier of a second communication module, wherein the first communication identifier is used to uniquely identify a first battery system to which the first communication module belongs, the fifth communication identifier is used to uniquely identify a first battery module to which the second communication module belongs, and the first battery module is comprised in the first battery system;
determining a third battery code of the first battery module, wherein the third battery code indicates cascade information of the first battery module; and
sending a fourteenth message to a server, wherein the fourteenth message comprises the first communication identifier, a first battery code, the third battery code, and the fifth communication identifier, and the first battery code indicates production information of the first battery module, wherein
the fourteenth message indicates to update a mapping between the first communication identifier and the first battery code to a mapping between the fifth communication identifier and the third battery code.

16. The method according to claim 15, wherein the fourteenth message further comprises a sixth communication identifier, and the sixth communication identifier is used to uniquely identify a third terminal to which the first battery module currently belongs; and
the fourteenth message indicates to establish a mapping between the sixth communication identifier and the fifth communication identifier.

17. A battery management method, wherein the method comprises:
receiving a first message from a first terminal, wherein the first message comprises a second communication identifier and a first communication identifier, the second communication identifier is used to uniquely identify the first terminal, and the first communication identifier is used to uniquely identify a first battery system comprised in the first terminal; and
establishing a mapping between the second communication identifier and the first communication identifier.

18. The method according to claim 17, wherein the method further comprises:
receiving a query message from the first terminal, wherein the query message comprises information about the first battery system, the information about the battery system comprises the first communication identifier and a first battery code, and the first battery code indicates production information of a first battery module of the first battery system; and
sending a query result to the first terminal, wherein the query result indicates correctness of the information about the first battery system.

19. The method according to claim 17 or 18, wherein the method further comprises:
receiving a second message from the first terminal, wherein the second message comprises the second communication identifier, the first communication identifier, and a third communication identifier, and the third communication identifier is used to uniquely identify a second terminal;
receiving a fifth message from the second terminal, wherein the fifth message comprises the second communication identifier, the third communication identifier, and the first communication identifier; and
establishing a mapping between the third communication identifier and the first communication identifier.

20. The method according to any one of claims 17 to 19, wherein the method further comprises:
generating a log, wherein the log corresponds the second communication identifier, and the log indicates historical information mapped to the second communication identifier.

21. The method according to any one of claims 17 to 20, wherein the first message further comprises a device identifier of the first terminal, and the method further comprises:
establishing a mapping between the second communication identifier and the device identifier of the first terminal.

22. The method according to any one of claims 17 to 21, wherein the method further comprises:
receiving a third message from the first terminal, wherein the third message comprises the second communication identifier and a first identity identifier of a first user of the first terminal; and
establishing a mapping between the second communication identifier and the first identity identifier.

23. The method according to claim 22, wherein the establishing the mapping between the second communication identifier and the first identity identifier comprises:
determining a correspondence, wherein the correspondence comprises ciphertexts of the second communication identifier and the first identity identifier, and the mapping between the second communication identifier and the first identity identifier is represented by the correspondence.

24. The method according to claim 23, wherein the method further comprises:
receiving a fourth message from the first terminal, wherein the fourth message comprises the second communication identifier and a second identity identifier, and the second identity identifier indicates a second user of the first terminal; and
establishing a mapping between the second communication identifier and the second identity identifier.

25. The method according to any one of claims 17 to 24, wherein the method further comprises:
receiving a sixth message from a communication apparatus, wherein the sixth message comprises the second communication identifier and the third communication identifier, and the third communication identifier is used to uniquely identify the second terminal;
transferring a mapping related to the second communication identifier to the third communication identifier; and
sending a seventh message to the communication apparatus, wherein the seventh message indicates a result of the mapping transfer operation.

26. The method according to claim 25, wherein the transferring the mapping related to the second communication identifier to the third communication identifier comprises:
establishing a mapping between the third communication identifier and first information, wherein the first information is mapping information of the second communication identifier.

27. The method according to any one of claims 17 to 26, wherein the method further comprises:
receiving an eighth message from a battery configuration device, wherein the eighth message comprises the first communication identifier and the first battery code, and the first battery code indicates the production information of the first battery module in the first battery system; and
establishing a mapping between the first communication identifier and the first battery code.

28. The method according to claim 27, wherein the method further comprises:
receiving a ninth message from the battery configuration device, wherein the ninth message comprises the first communication identifier and the second battery code; and
establishing a mapping between the first communication identifier and the second battery code.

29. The method according to claim 27, wherein the method further comprises:
receiving a tenth message, wherein the tenth message comprises the first communication identifier and the first battery code; and
marking the first battery module corresponding to the first battery code as a scrapped state.

30. The method according to any one of claims 17 to 29, wherein the method further comprises:
receiving an eleventh message from a battery management station, wherein the eleventh message comprises the first communication identifier, the second communication identifier, and a fourth communication identifier, and the fourth communication identifier is used to uniquely identify the battery management station to which the second battery system belongs; and
establishing a mapping between the fourth communication identifier and the first communication identifier.

31. The method according to any one of claims 17 to 30, wherein the method further comprises:
receiving a twelfth message from the battery management station, wherein the twelfth message comprises the first communication identifier, the second communication identifier, and the fourth communication identifier; and
establishing the mapping between the second communication identifier and the first communication identifier.

32. The method according to any one of claims 17 to 31, wherein the method further comprises:
receiving a thirteenth message from the battery management station, wherein the thirteenth message comprises the first communication identifier and the fourth communication identifier; and
marking the first battery system as a recycled state.

33. The method according to any one of claims 17 to 32, wherein the method further comprises:
receiving a fourteenth message from a cascade configuration device, wherein the fourteenth message comprises the first communication identifier, the first battery code, a third battery code, and a fifth communication identifier, the fifth communication identifier is used to uniquely identify the first battery module to which the second communication module belongs, the first battery module is comprised in the first battery system, the third battery code indicates cascade information of the first battery module, and the first battery code indicates the production information of the first battery module; and
establishing a mapping between the fifth communication identifier and the third battery code.

34. The method according to claim 33, wherein the fourteenth message further comprises a sixth communication identifier, and the sixth communication identifier is used to uniquely identify a third terminal to which the first battery module currently belongs; and
the method further comprises:
establishing a mapping between the sixth communication identifier and the fifth communication identifier.

35. A communication apparatus, wherein the communication apparatus comprises a communication unit and a processing unit; and
the communication apparatus is configured to implement the battery management method according to any one of claims 1 to 6; or
the communication apparatus is configured to implement the battery management method according to claim 7; or
the communication apparatus is configured to implement the battery management method according to claim 8; or
the communication apparatus is configured to implement the battery management method according to any one of claims 9 to 11.

36. A communication apparatus, wherein the communication apparatus comprises a communication unit and a processing unit; and
the communication apparatus is configured to implement the battery management method according to any one of claims 12 to 14.

37. A communication apparatus, wherein the communication apparatus comprises a communication unit and a processing unit; and
the communication apparatus is configured to implement the battery management method according to claim 15 or 16.

38. A communication apparatus, wherein the communication apparatus comprises a communication unit and a processing unit; and
the communication apparatus is configured to implement the battery management method according to any one of claims 17 to 34.

39. A communication apparatus, wherein the communication apparatus comprises a processor and a communication interface;
the communication interface is configured to receive and/or send data, and/or the communication interface is configured to provide an input and/or an output for the processor; and
the communication apparatus is configured to implement the battery management method according to any one of claims 1 to 6; or
the communication apparatus is configured to implement the battery management method according to claim 7; or
the communication apparatus is configured to implement the battery management method according to claim 8; or
the communication apparatus is configured to implement the battery management method according to any one of claims 9 to 11.

40. A communication apparatus, wherein the communication apparatus comprises a processor and a communication interface;
the communication interface is configured to receive and/or send data, and/or the communication interface is configured to provide an input and/or an output for the processor; and
the communication apparatus is configured to implement the battery management method according to any one of claims 12 to 14.

41. A communication apparatus, wherein the communication apparatus comprises a processor and a communication interface;
the communication interface is configured to receive and/or send data, and/or the communication interface is configured to provide an input and/or an output for the processor; and
the communication apparatus is configured to implement the battery management method according to claim 15 or 16.

42. A communication apparatus, wherein the communication apparatus comprises a processor and a communication interface;
the communication interface is configured to receive and/or send data, and/or the communication interface is configured to provide an input and/or an output for the processor; and
the communication apparatus is configured to implement the battery management method according to any one of claims 17 to 35.

43. A vehicle, wherein the vehicle comprises the communication apparatus according to claim 38 or 42.

44. A computer-readable storage medium, wherein the computer-readable storage medium stores instructions, and when the instructions are run on at least one processor, the method according to any one of claims 1 to 6 is implemented, or the method according to claim 7 is implemented, or the method according to claim 8 is implemented, or the method according to any one of claims 9 to 11 is implemented, or the method according to any one of claims 12 to 14 is implemented, or the method according to claim 15 or 16 is implemented, or the method according to any one of claims 17 to 34 is implemented.

45. A computer-readable storage medium, wherein the computer-readable storage medium stores instructions, and when the instructions are run on at least one processor, the method according to any one of claims 1 to 6 is implemented, or the method according to claim 7 is implemented, or the method according to claim 8 is implemented, or the method according to any one of claims 9 to 11 is implemented, or the method according to any one of claims 12 to 14 is implemented, or the method according to claim 15 or 16 is implemented, or the method according to any one of claims 17 to 34 is implemented.
